# EUROPEAN PATENT APPLICATION

(11) **EP 4 207 776 A1**
(43) Date of publication of application: **05.07.2023**
(21) Application number: 21861953.4
(22) Date of filing: 13.08.2021
(51) Int. Cl.: H04N 21/2381, H04N 21/2362, H04N 21/235, H04N 21/236, H04N 21/2385, H04N 21/438, H04N 21/61, H04H 20/93, H04H 60/14

(54) **MEDIA DATA PROCESSING METHOD AND MEDIA DATA PROCESSING DEVICE**

(30) Priority: 31.08.2020 KR 20200110564
(71) Applicant: LG Electronics, Inc., Yeongdeungpo-gu Seoul 07336 (KR)
(72) Inventor: PARK, Jonghwan, Seoul 06772 (KR); YOON, Joonhee, Seoul 06772 (KR)
(74) Representative: Plasseraud IP
(86) International application number: PCT/KR2021/010776
(87) International publication number: WO 2022/045656

(57) **Abstract**

A media data processing device according to embodiments may comprise: a receiving unit for receiving media data and a service list related to the media data on the basis of a network; and a processor for controlling the service list. A media data processing method according to embodiments may comprise steps of: receiving media data and a service list related to the media data on the basis of a network; and controlling the service list.

## Description

### [Technical Field]

The present disclosure relates to a media data processing method and a media data processing device.

### [Background Art]

There is no method for implementing an IP-based TV service capable of providing the same user UX as terrestrial, satellite, or cable linear channel.

There is no method for providing a channel guide integrated with the terrestrial, satellite, or cable channel through open Internet-based native code reception rather than an app-based linear channel service.

There is no integrated broadcasting system protocol based on all of terrestrial wave, satellite, cable, and the Internet.

There is no method for acquiring Internet broadcast service signaling by a receiver without a terrestrial, satellite, or cable tuner.

There is no service discovery system for acquiring a broadcast service based on Internet transmission.

There is no Internet-based broadcast service signaling mechanism.

There is no method for maintaining the updated state of a content guide corresponding to the DVB-I service.

### [Disclosure]

### [Technical Problem]

An object of the embodiments is to provide a media data processing device for implementing an IP-based TV service capable of providing the same user UX as the terrestrial, satellite, or cable linear channel.

An object of the embodiments is to provide a media data processing device for providing a channel guide integrated with the terrestrial, satellite, or cable channel through open Internet-based native code reception rather than an application-based linear channel service.

An object of the embodiments is to provide a media data processing device for seamlessly providing a real-time/non-real-time media streaming service rather than directly receiving terrestrial (fixed) waves, in consideration of a situation where broadcast services are consumed through media such as OTT, PC, IPTV, and the like of IP-based devices, as well as high traffic of unicast.

### [Technical Solution]

A media data processing device according to embodiments may include a receiver configured to receive media data and a service list related to the media data based on a network, and a processor configured to control the service list.

A media data processing method according to embodiments may include receiving media data and a service list related to the media data based on a network, and controlling the service list.

### [Advantageous Effects]

A receiver not equipped with a traditional tuner may efficiently discover and acquire an Internet-based broadcast service over a broadband network.

In receiving an aggregated service list according to embodiments, the versioning/expiration management method for each service and the selective parsing and storage of each service may eliminate the need to receive the entire service list.

Content or user experience that may provide services suitable for capability may be efficiently provided.

### [Description of Drawings]

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 shows a service scenario according to embodiments;
FIG. 2 is a flowchart of an operation according to embodiments from the perspective of a network operator/ISP according to embodiments;
FIG. 3 shows a stack of protocols for DVB channel services according to embodiments;
FIGS. 4 and 5 show an extended syntax of a service discovery list table according to embodiments;
FIG. 6 shows an example of channel management according to embodiments;
FIG. 7 shows values of hidden(visible)_presentation according to embodiments;
FIG. 8 is a flowchart of hidden channel management according to embodiments;
FIGS. 9 to 11 show an example in which a related material is included in an SDLT according to embodiments;
FIG. 12 shows an example of use of an inactive banner according to embodiments;
FIG. 13 shows a service list hierarchy according to embodiments;
FIG. 14 shows a table representation of a DVB-I service list type according to embodiments;
FIG. 15 shows a DVB-I service type according to embodiments;
FIG. 16 shows a table representation of a service instance type according to embodiments;
FIG. 17 illustrates a simulcast UI/UX according to embodiments;
FIG. 18 shows a DVB-I service list hierarchy according to embodiments;
FIG. 19 illustrates a DVB-I client overrunning issue according to embodiments;
FIG. 20 illustrates a dynamic polling algorithm according to embodiments;
FIG. 21 shows a DVB-I service hierarchy according to embodiments;
FIG. 22 shows a model of a DVB-I client according to embodiments.
FIG. 23 shows a content guide source hierarchy according to embodiments;
FIG. 24 is a flowchart illustrating DVB-I service initialization and content guide update according to embodiments;
FIG. 25 shows a DVB-I model according to embodiments;
FIG. 26 shows a DVB-I service architecture for supporting a manufacturer service list according to embodiments;
FIG. 27 illustrates a service list selection UI/UX according to embodiments;
FIGS. 28 and 29 show an expansion of an LCN table entry type according to embodiments.
FIG. 30 shows an example of resolving a service channel conflict according to embodiments;
FIGS. 31 and 32 show an example of resolving a channel redundancy issue according to embodiments;
FIG. 33 shows an MPEG-2 system STC structure according to embodiments;
FIG. 34 shows a DASH streaming structure according to embodiments;
FIG. 35 illustrates reference clock synchronization according to embodiments;
FIG. 36 illustrates a model of a DVB-I client according to embodiments;
FIG. 37 illustrates a 5G-based DVB-I system according to embodiments;
FIGS. 38 and 39 show an extension of a DVB-I service scheme according to embodiments;
FIG. 40 shows an example of service instance switching according to embodiments;
FIG. 41 illustrates a method of transmitting media data according to embodiments; and
FIG. 42 illustrates a method of receiving media data according to embodiments.

### [Best Mode]

Hereinafter, embodiments of the present disclosure will be described in detail with reference to the accompanying drawings. The same or similar components are given the same reference numbers and redundant description thereof is omitted. The suffixes "module" and "unit" of elements herein are used for convenience of description and thus are used interchangeably and do not have any distinguishable meanings or functions. Further, in describing the embodiments disclosed in this specification, if a detailed description of related known techniques would unnecessarily obscure the gist of the embodiments disclosed in this specification, detailed description thereof will be omitted. In addition, the attached drawings are provided for easy understanding of the embodiments disclosed in this specification and do not limit technical idea disclosed in this specification, and the embodiments should be construed as including all modifications, equivalents, and alternatives falling within the spirit and scope of the present disclosure.

It is apparent that the following embodiments are intended to embody the present disclosure and are not intended to limit or restrict the scope of the present disclosure. All techniques easily conceivable by those skilled in the art from the detailed description and embodiments of the present disclosure are interpreted as belonging to the scope of the present disclosure.

The following detailed description is to be construed in all aspects as illustrative and not restrictive. The scope of the present disclosure should be determined by reasonable interpretation of the appended claims and all changes which come within the equivalent scope of the present disclosure are within the scope of the present disclosure.

Reference will now be made in detail to the exemplary embodiments of the present disclosure, examples of which are illustrated in the accompanying drawings. The detailed description, which will be given below with reference to the accompanying drawings, is intended to explain exemplary embodiments of the present disclosure, rather than to show the only embodiments that can be implemented according to the present disclosure. The following detailed description includes specific details in order to provide a thorough understanding of the present disclosure. However, it will be apparent to those skilled in the art that the present disclosure may be practiced without such specific details. Although most terms used in the present disclosure have been selected from general ones widely used in the art, some terms have been arbitrarily selected by the applicant and their meanings are explained in detail in the following description as needed. Thus, the present disclosure should be understood based upon the intended meanings of the terms rather than their simple names or meanings. In addition, the accompanying drawings and the detailed description should not be construed as limiting the embodiments set forth herein and should be interpreted as covering all equivalents to the embodiments disclosed in the accompanying drawings and the detailed description or other substitutions.

A media data processing method/device according to embodiments may refer to a media data transmission/reception method/device. The media data processing method/device according to the embodiments may be simply referred to as a method/device according to the embodiments.

The method/device according to embodiments relates to a method for discovering and acquiring Internet-based broadcasting-related media data (which may be referred to as a service).

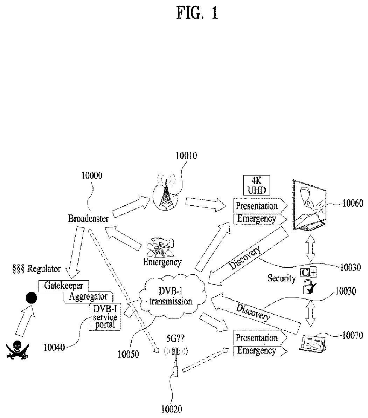

FIG. 1 shows a service scenario according to embodiments.

Embodiments provide a service discovery scheme to provide an Internet-based broadcast service.

Embodiments propose additional information that should be defined for Internet-based broadcast service identification.

Embodiments provide a system mechanism for acquiring Internet-based broadcast service signaling.

Embodiments propose a versioning/expiration management method for each service and a selective parsing and storage method for each service in receiving an aggregated service list.

Embodiments propose a channel management method carried out when an Internet linear channel is hidden/selectable/inactive.

Embodiments propose a service discovery signaling scheme to provide an Internet-based broadcast service.

Embodiments provide a service list metadata envelope structure used in transmitting a fragmented service list for each unique service in a multipart/related container.

Embodiments provide a method for indicating a current channel state to the user or providing an alternative channel when the user directly accesses the current channel in the hidden/selectable/inactive case of an Internet linear logical channel.

According to embodiments, a receiver not equipped with a traditional tuner may be allowed to perform Internet-based broadcast service discovery and acquirement over a broadband network.

According to embodiments, in receiving an aggregated service list, a versioning/expiration management method for each service and selective parsing and storage of each service may be performed, thereby eliminating the need to receive the entire aggregated service list.

According to embodiments, a better media service may be provided by blocking a logical channel service that fails to provide broadcasting and causes inconvenience to users and providing an Internet return channel alternative service when the Internet linear channel is hidden/selectable/inactive.

The traditional IP-based linear channel service is operated in a manner that authentication is granted through the subscription of a specific provider (e.g., an ISP, a network operator) and an IP linear service is received through the set-top box (STB) provided by the provider. In addition, recently, connectivity TVs have been introduced, thereby making a set-top boxless (STB-less) IP linear service available. Representative standard technologies are ATSC 3.0, IBB, and HbbTV. Clients may be provided with various linear rich-media services by operating an application on the OS platform inside the TV. Various operators provide their own developed service application to be installed on the TV platform, and the application defines a server that may receive data for the service and APIs that enable request/reception. On the basis of the life cycle, the client may access the app through the TV UI and receive various services through the app.

In North America and Europe, the popularity of OTT channels is as high as watching linear TV worldwide, and the OTT has become an essential media application for IP-based devices with the expansion of the OTT market. However, the influential form of OTT has become an exclusive service through its own platform and a service eco-system dedicated to the OTT. In other words, the OTT forms its own app-ecosystem consumption pattern in terms of codec, protocol stack, application, browser, and the like that only each OTT provides.

In this regard, embodiments propose a method and an device that may address issues such as the exclusive platform of OTTs and dependency on the operation of applications.

Embodiments propose a service that discovers a service by which a service is discovered at a receiver native level and a client accesses an accessible service server and receives a linear service, in contrast with conventional technology that requires an App to be executed to provide a channel UX similar to the terrestrial (T), satellite (S), or cable (C) linear channel service.

In addition, embodiments propose a service scenario in which the OTT's own platform is integrated into a single unified TV native platform to allow users to receive and view OTT content on a channel without executing an OTT app.

Referring to FIG. 1, a broadcaster 10000 may transmit a service on a terrestrial (T), satellite (S), or cable (C) channel 10010 and an Internet channel 10020 simultaneously. Service providers and manufacturers of devices capable of receiving a DVB-I service 10050 may obtain authentication of a service channel through regulation and provide Internet channels through existing linear services and channel aggregators.

In order to present a list of existing linear broadcasting channels (for example, terrestrial, satellite, and cable channels) and an Internet channel list in an aggregated form, bootstrap 10030 may be operated based on service discovery information provided over the existing linear network.

On the broadcaster side, the existing traditional service provision type may be extended, and additional services may be provided in the form of an on-demand/multicast service along with the existing linear channel network. In addition, a personalization service may be provided through a connection-based usage report of an Internet channel.

From the perspective of TV/STB manufacturers, by providing a channel list 10040 aggregating OTT services with traditional T/S/C channels, opportunities to provide various services and expand the functions of the terminal may be obtained.

In the case of the network/ISP, OTT contents may be aggregated through their network infrastructure to expand service provision. In addition, through dynamic allocation of unicast/multicast, delivery performance enhanced compared to that of a terminal providing a non-management network-based service may be provided.

In other words, the broadcaster 10000 may transmit broadcast data over the traditional broadcast network 10010 and the Internet network 10020. A reception device according to embodiments, for example, a TV 10060 or a second device 10070 may make a request for the service discovery 10030 of the broadcast data to the DVB-I provider or server 10050, and receive the aggregated DVB-I service list 10040. Thus, service signaling may be performed on both the traditional linear channel and the Internet channel without the process of installing and executing a separate app at the native level.

The method/device according to the embodiments may address issues disclosed below, based on the structure shown in FIG. 1.

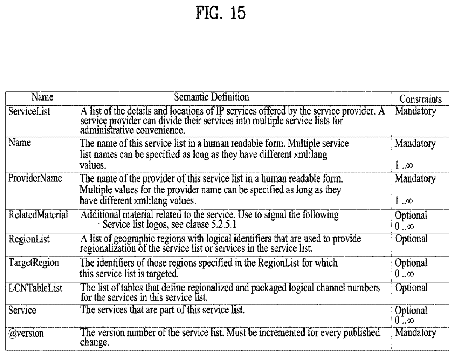

When the next/now guide information is provided through a metadata update period, the end point of the request for the entire service list or an individual service may be the same. The limitation that an individual period cannot be configured for each service and that protocol communication must be performed with the same endpoint may be resolved through @minimumMetadataUpdatePeriod in the DVB-I service hierarchy (see FIG. 15, etc.) according to embodiments.

When the manufacturer service repository is added to one of the DVB-I service discovery entities in the central service repository or the private repository, information for handling supportable device capabilities may be provided.

That is, information for determining whether the service list required by a client is supportable within the device may be provided.

In the DVB-I according to the embodiments, a service may be mainly received based on a service list. Each service list may be operated and managed by a specific repository. A repository providing the existing DVB broadcasting list may define a DVB-I service list in a manner of allocating an LCN based on the country or specific region due to the characteristics of the current European broadcasting service. On the other hand, specific DVB-I service list providers collect independent services regardless of regions and define an LCN list, and accordingly LCN allocation may be configured as desired by the service list providers. Therefore, in this background, there is a potential issue of channel collision when the DVB-I client receives and merges multiple service lists.

In DVB-I over 5G, the service should be smooth and continuous between delivery routes supported by multiple distributions, and should be provided through efficient and flexible connection according to the optimal network environment.

There is no issue in service continuity and synchronization because media data is received only through the restful API at a location specified in the service app regardless of the existing network connection type. On the other hand, in the case of DVB-I for 5G, the bootstrapping process may differ among the types of networks, and the bootstrapping method and location may depend on the infrastructure of the operators.

The propagation delay delivered varies according to the network characteristics. Thus, in the case of a linear service, each network may provide a different environment for the reference time and media characteristics.

Discovery URL and media location URL differ among operators, and it is difficult to perform complete switching in the middle of the media.

There are no clear reference for determining the need for switching within the network and the degradation of signal quality.

Embodiments may provide a method of addressing an issue of presenting the information of the existing program guide rather than the up-to-date information about the content currently being consumed when a live program of the DVB-I service is over-running.

A new element and end point extension to which an individual period is applicable for each service may be implemented.

When the DVB-I client receives and merges multiple service lists, the issue of channel collision may be addressed.

Proper alignment may be provided between service instances such that switching between service instances delivered over different networks may be recognized to be reasonably smooth.

Switching between DVB-I service instances including 5GBC, 5GMS, and OTT (non-5G networks such as LTE and Wi-Fi) may be performed.

To address issues such as over-running of a live program of the DVB-I service and provision of information of the existing program guide in place of the up-to-date information about the content currently being consumed, the following information may be used according to embodiments: (1) reference time information for applying a dynamic polling interval; (2) an offset of x sec from the reference time information (e.g., DVB-I service availability end time); (3) a polling interval to be newly applied; and (4) version information for comparison with the existing information.

The method/device according to the embodiments may perform dynamic polling based on the above information and @MinimumMetadataUpdatePeriod.

In allocating a logical channel number corresponding to a single service, an indication that the corresponding channel is a channel to which dynamic polling is applied instead of a static pull method may be provided.

When the now/next content guide source currently consumed is acquired in the DVB-I hierarchy, the information of @ScheduleEndPoint in ContentSourceType may be defined as the same end point in the service list type and the service list, and related information may be requested and received. Information about individual intervals may be acquired for each service. scheduleInfoEndPoint may be generated to request and receive event information in a specific interval.

The DVB-I client may receive service discovery entities in the bootstrapping process, and display list entries filtered according to language, country, region, and postcode. Service entities and their service entity repositories adapted to the user selection or environment may be searched. In this case, the service list repository operated by a manufacturer may be searched and device capability information for checking whether the service list is supported may be defined.

When the DVB-I client receives and merges multiple service lists, a specific condition may be assigned to the channel allocated to each service such that channel management may be performed within the DVB-I client. To this end, <LCNTableEntryType> may be extended in the current DVB-I service list scheme.

The service list scheme may be extended to support time alignment between service instances delivered over different networks. To support service instance switching, the DASH delivery parameter may be extended in the following DVB-I service list scheme.

When tune-in or channel change is performed, the device according to the embodiments may display up-to-date information about a corresponding channel rather than showing the guide of an over-running program.

A client-side algorithm for DVB-I dynamic polling may be defined in the entire attributes of the content guide at the service list level to control the polling operation of the entire content guide, or may be defined at the service level to apply the dynamic polling algorithm to individual services.

A separate caching module configured to manage a logical channel database corresponding to the service in the DVB-I client may dynamically process the attribute of the channel to pre-indicate that the dynamic polling algorithm is applied to the channel in updating services at once or individually.

In updating the DVB-I service event or content guide information, the up-to-date information in the client may be updated by adding an end point for updating individual intervals for each service.

Depending on the device, service entities and service entity repositories thereof adapted to the user selection or environment may be searched, and a service list supported by a specific manufacturer may be retrieved to provide an opportunity to consume the services.

When the DVB-I client receives and merges multiple service lists or receives an additional service list on the default legacy channel, a channel ordering method that may reflect the intention of the service provider and be handled by the DVB-I client without any issue may be provided.

A service should be smooth and continuous between delivery routes supported by multiple distributions including 5GBC, 5GMS, and OTT in DVB-I, and may be provided to users through efficient and flexible connection according to the optimal network environment.

For the method/device according to the embodiments, reference may be made to document DVB-I A177.

In the DVB-I phase 1 scheme, data is received according to the pull-only method, and accordingly it may not be checked whether the up-to-date information of the code level is acquired. In this technical background, in order to update the up-to-date information, the DVB-I client of the device according to the embodiments may address the issue through a specific polling interval.

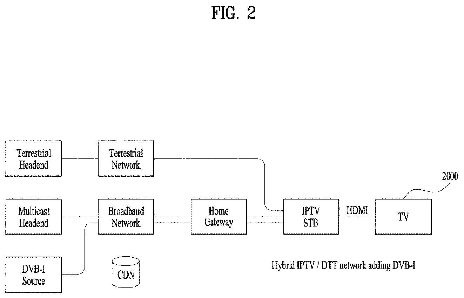

FIG. 2 is a flowchart of an operation according to embodiments from the perspective of a network operator/ISP according to embodiments.

The device 20000 according to the embodiments may be a TV receiver. That is, it may be a device according to a hybrid IPTV/DTT network that supports DVB-I service. The reception device 20000 may be connected to an STB. The connection may be established by, for example, HDMI. The IPTV STB may receive a terrestrial broadcast signal from a terrestrial headend over a terrestrial network, and may receive various services and/or data from a multicast headend, which provides multicast services, a DVB-I source, which provides DVB-I services, and/or a content delivery network (CDN), which provides Internet content or the like, through a home gateway and a broadband network.

In particular, in the case of OTT, an OTT application suitable for a different OS environment is separately provided for each existing terminal. However, the method/device according to the embodiments may use a service through an industry standard based ecosystem without such a separate application. This provides a common service interface, thereby providing a convenient and efficient service access.

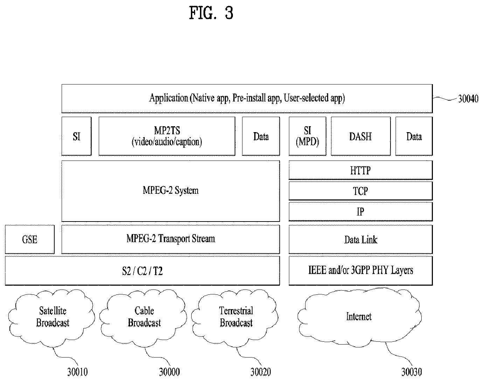

FIG. 3 shows a stack of protocols for DVB channel services according to embodiments.

The TV device 20000 of FIG. 2 may perform the scenario of FIG. 1 based on the protocol structure of FIG. 3.

Services according to embodiments include DVB C/S/T/I services. Based on the protocol stack structure constituting the DVB-C (30000)/S (30010)/T (30020)/I (30030) service of FIG. 3, the embodiments propose a mechanism for discovering a DVB-I service transmitted through the Internet and a signaling scheme therefor. The method/device according to the embodiments may drive an application through service discovery, and an application 30040 according to the embodiments may include a native application, a preinstalled application, and a user-selected application.

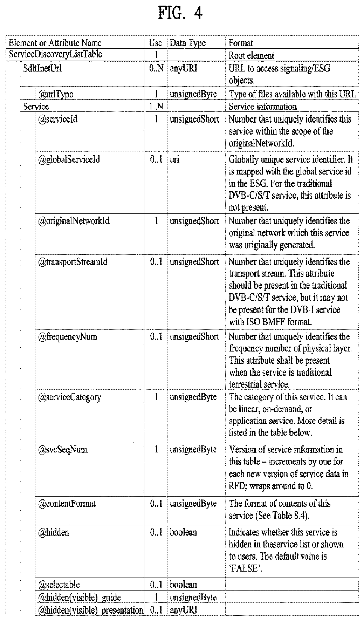

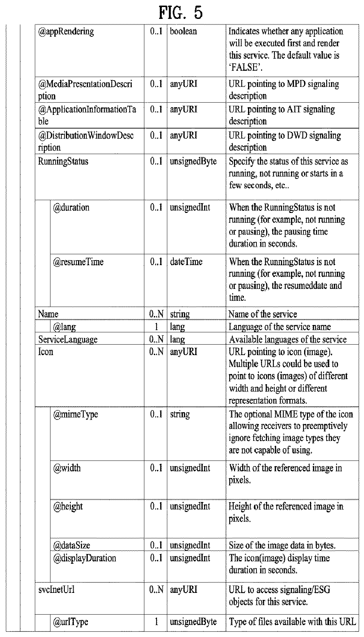

FIGS. 4-5 show extended syntax of a service discovery list table according to embodiments.

The method/device according to the embodiments may configure an SDLT for faster service discovery and service acquisition of the DVB-I service.

The embodiments propose a service discovery list table (SDLT) and USBD configuration scheme as shown in FIGS. 4-5 in order to more quickly provide a service selected by the user from among the services that may be provided to the user through the service discovery process.

The SDLT may be essential information that the receiver must have first for service discovery. Through this signaling data, the receiver may provide service list information allowing the user to select a service. In this case, the SDLT may be configured to include more information. This configuration information has may enable a rich amount of service to be provided and enable a service to be played more quickly when a user selects the service.

When the SDLT is configured in this way, USBD in the signaling metadata of an Internet-based service may include a DeliveryMethod element value that provides information mapped to the MPD, and @serviceId and @globalServiceId information may be used as information for mapping to the SDLT and information for mapping to the ESG.

Each element of the SDLT will be described with reference to the figure.

ServiceDiscoveryListTable represents a root element.

SdltInetUrl indicates a URL for accessing signaling/ESG objects.
@urlType indicates the type of files available with this URL.

Service represents service information.
@serviceId indicates a number that uniquely identifies this service within the scope of originalNetworkId.
@globalServiceId indicates a globally unique service identifier. It is mapped to the global service ID in the ESG. For the traditional DVB/T/S/C services, this attribute may not be present.
@originalNetworkId indicates a number that uniquely identifies the original network from which this service was originally generated.
@transportStreamId indicates a number that uniquely identifies the transport stream. This attribute is present in the traditional DVB-T/S/C services. However, this attribute may not be present for the DVB-T service in ISO BMFF format.
@frequencyNum indicates a number that uniquely identifies the frequency number of the physical layer. This attribute may be present when the service is the traditional terrestrial service.
@serviceCategory indicates the category of this service. The category may be linear, on-demand, or application service.
@svcSeqNum indicates the version of service information. It may be incremented by 1 for each new version of service data in RFG.
@contentFormat indicates the format of contents of this service.
@hidden indicates whether this service is hidden in the service list or shown to users. The default value of @hidden is FALSE.
@appRendering indicates whether any application will be executed first or render this service. The default value is FALSE.
@MediaPresentationDescription is a URL pointing to MPD signaling description.
@ApplicationInformationTable is a URL pointing to AIT signaling description.
@DistributionWindowDescription is a URL pointing to DWD signaling description.

RunningStatus indicates the status of this service.

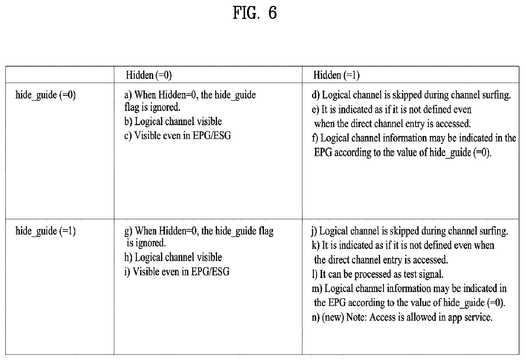

FIG. 6 shows an example of channel management according to embodiments.

FIG. 6 shows the hidden element of FIGS. 4-5;

For example, the broadcast network ATSC 1.0 may define channel management as follows.
@hidden: A boolean value indicating whether a logical channel is visible or hidden. It indicates the visible or hidden attribute when a user searches for the logical channel or directly selects a channel entry.
@hide_guide: A boolean value indicating whether a logical channel is visible or hidden in the EPG. It indicates the visible or hidden attribute of a channel guide for the user.

This method is an RF broadcasting environment-based channel management method, and channel management should be manually performed based on only the information in the service list. However, in the DVB-I environment, a return channel exists, and thus there may be various channel management methods.

In embodiments, when a channel is hidden/inactive in a DVB-I environment, a user may determine the existence/status of the corresponding channel using the return channel, and the hidden/inactive channel of an existing broadcast may be easily managed through an alternative service.

In the case of hide_guide (=1) and Hidden (=1), an indication that that the app service is accessible may be additionally signaled.

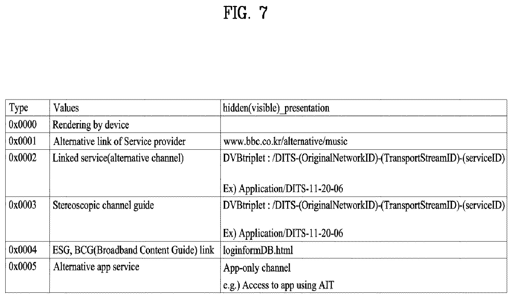

FIG. 7 shows values of hidden (visible)_presentation according to embodiments.

Regarding the technical issue described in FIG. 6, the following added elements may be used.
@Hidden(visible): A boolean value indicating whether a logical channel is visible or hidden. It indicates the visible or hidden attribute when a user searches for the logical channel or directly selects a channel entry.
@selectable: When this is set, a hidden service may be selected by direct input to the logical channel number. When the value is false, the hidden service cannot be selected even when the user directly inputs the hidden service.
@hidden_guide: When a channel is directly accessed in a hidden channel state, @hidden_guid may guide the state in the channel or display an alternative screen through a link. There may be type values indicating various types of channel guide methods.
@hidden(visible)_presentation: defines corresponding anyURI information according to a type value defined through hidden_guide.

FIG. 6 shows types of hidden guides related to hidden presentation.

When the type is 0x0001, it indicates an alternative link of a service provider, and the hidden presentation may provide a connection address, for example, www.bbc.co.kr/alternative/music.

When the type is 0x0002, it indicates a linked service of an alternative channel, and the hidden presentation may signal a DVB triplet, for example, DITS-(OriginalNetworkID)-(TransportStreamID)-(serviceID).

When the type is 0x0003, it indicates a stereoscopic channel guide, and the hidden presentation may signal a DVB triplet, for example, DITS-(OriginalNetworkID)-(TransportStreamID)-(serviceID).

When the type is 0x0004, it indicates an ESG or broadband content guide (BCG) link, and a hidden presentation may signal loginformDB.html.

When the type is 0x0005, it indicates an alternative app service, and the hidden presentation may signal an app dedicated channel. Thus, the reception device may access the app using the AIT.

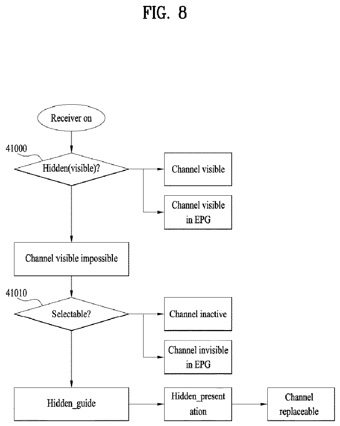

FIG. 8 is a flowchart of hidden channel management according to embodiments.

FIG. 8 is a flowchart illustrating processing of a channel based on the hidden channel related to FIGS. 6-7.

The operation of the above-described embodiments will be described with reference to the flowchart as follows.

In operation 41000, when the power of the reception device is turned on, the reception device checks whether the channel/service is hidden. When the channel/service is not hidden, the reception device indicates a visible channel and a visible channel guide on the display.

In operation 41010, when there is a hidden channel/service and channel surfing is impossible, the reception device checks whether the channel is selectable. When the channel is not selectable, the reception device notifies the user that the channel is inactive and the channel guide is not visible. In the case of YES for selection possibility, the reception device may generally process/display the hidden channel based on the hidden guide and the hidden presentation.

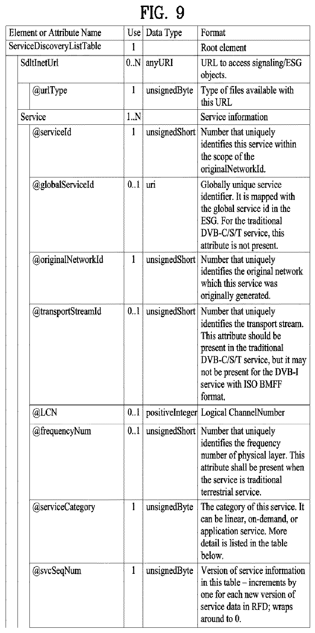

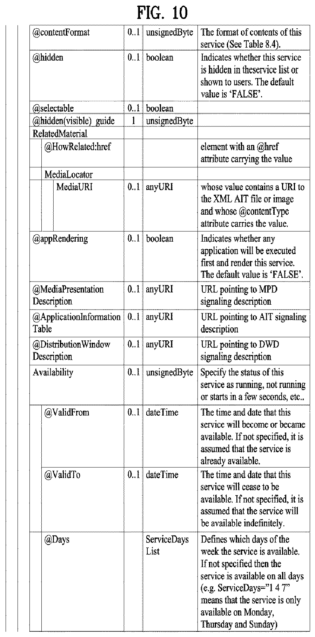

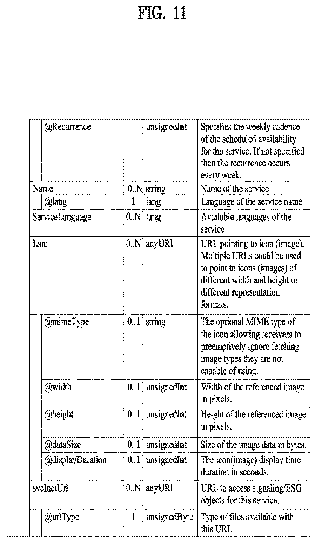

FIGS. 9 to 11 show an example of an SDLT including RelatedMaterial according to embodiments.

FIGS. 9-11 shows the syntax of an SDLT related to FISG. 4-5 and the like.

A method of providing a service related material when a DVB-I part-time service is provided and the service is inactive will be described with reference to FIGS. 9-11.

As described above, the DVB-I service may provide an Internet linear channel, and in a service discovery process, a service may be provided in a part-time form in a specific LCN. In order not to cause confusion when the user selects directly a service through a channel number in the outside of service state, channel change API may be executed through an inactive service banner image or an additional application, or additional VoD service may be provided. In this regard, a hierarchy that fits the real practice is proposed by applying a datatype value that is actually used in the industry.

The SDLT of FIGS. 9-11 may correspond to the SDLT according to the above-described embodiments, and added elements/fields will be described as follows.
@LCN indicates a logical channel number.

RelatedMaterial may further include the following elements.
@HowRelated:href may be delivered together with an @href element carrying a value.

MediaLocator may carry information about the location of the media. Specifically, MediaURI may be a value containing a URI for an XML AIT file or image, and @contentType may carry the value.

Availability indicates the status of this service (running, not running or starts in a few seconds, etc.).
@ValidFrom indicates the time/date when this service becomes valid. When this value is not specified, it may be assumed that the service is already available.
@ValidTo indicates the time/date when this service will expire. When this value is not described, it may be assumed that this service is available indefinitely.
@Days indicates days of the week on which the service is available. When not specified, the service is available on all days. For example, ServiceDays="1 4 7" indicates that the service is only available on Monday, Thursday and Saturday.
@Recurrence indicates the weekly cadence of the scheduled availability for the service. When not specified, the recurrence occurs every week.

The DVB-I service may provide an Internet linear channel and provide a service in a part-time form in a specific LCN during a service discovery. In order not to cause confusion when the user directly selects a channel number outside of the service state, channel change API may be executed through an inactive service banner image or an additional application, or an additional VoD service may be provided. In this regard, a hierarchy suitable for real practice is proposed using the values of datatype actually used in industry.

A receiver according to embodiments signals an actually valid time of a part-time service through attributes in an element <Availability>, and checks an inactive period. The screen shown in the LCN in the period may display the inactive state with an attribute defined in the element <RelatedMaterial>. @MediaURI is the same attribute as the above-mentioned hidden(visible)_presentation URI, and conforms to the HbbTV(AIT) app signaling and app life-cycle. When this value is omitted, an inactive alternative service may be provided through the URI defined in @ApplicationInformationTable. content_type of @MediaURI set to "image/png" may indicate an inactive service banner. In the attribute @MediaURI, an inactive service may be provided through an image and app signaling according to content_type.

For example, according to @MediaURI, the reception device may provide an inactive state based on the image (image/png) (banner) of http://img-ctv.digitaluk.co.uk/channel7/service_a_linear.png.

According to @MediaURI, the reception device may provide an inactive state based on application/vnd.dvb.ait+xml(application) of http://www.channel9.co.uk/player/ait.aitx?channel=channela.

### <RelatedMaterial xsi:type="tva2:ExtendedRelatedMaterialType">

<!-- 19: Promotional still image -->
<HowRelated href="urn:tva:metadata:cs:HowRelatedCS:2012:19"/>
<MediaLocator>
<MediaUri contentType="image/png">
http://img-ctv.digitaluk.co.uk/channel7/service_a_linear.png
</MediaUri>
</MediaLocator>
<!-- Alt text -->
<PromotionalText>Service A</PromotionalText>
</RelatedMaterial>
<RelatedMaterial>
<HowRelated href="urn:tva:metadata:cs:HowRelatedCS:2012:10.5"/>
<MediaLocator>
<MediaUri contentType="application/vnd.dvb.ait+xml">
http://www.channel9.co.uk/player/ait.aitx?channel=channela
</MediaUri>
</MediaLocator>
</RelatedMaterial>

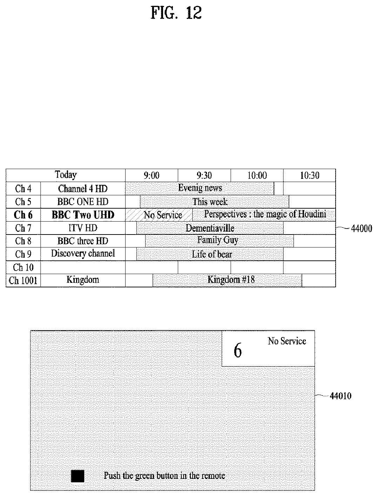

FIG. 12 shows an example of use of an inactive banner according to embodiments.

FIG. 12 may be included in the example of channel management in FIG. 8 and the like.

FIG. 12 shows a UI/UX that may be applied on a specific logical channel number (LCN) in an inactive service. The reception device may display an ESG 44000 on the display. In the case of LCN 6 on the UI/UX of the ESG 44000, the reception device may provide an alternative application such as a "No service" banner indicating "No service" as a current state (44010). The alternative application may be executed on the blank screen, or the reception device may receive a signal for selecting an alternative application by a user through a remote controller, and execute an operation related thereto.

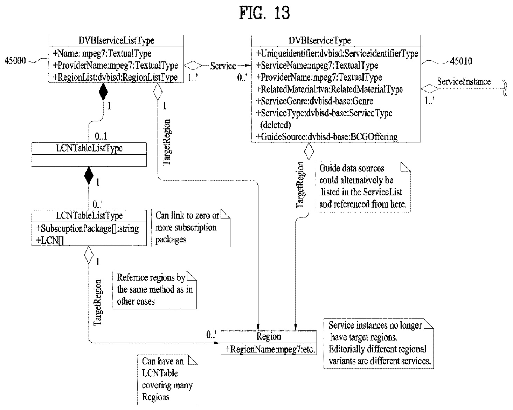

FIG. 13 shows a hierarchical structure of a service list according to embodiments.

The service list hierarchical structure of FIG. 13 is for the service scenario of FIG. 1.

The DVB-I service list may contain respective services, and each service may contain service instances. Multiple service instances may be defined according to each delivery network, and uniqueness may be distinguished according to the URN of source_type.

The DVB service list type 45000 may reference the DVB-I service type 45010 for each service. The DVB-I service type 45010 signals a related material and a guide source. The DVB-I service type 45010 may reference the service instance type 45020 for each service instance. The service instance type 45020 signals a subscription package for the related material and a source type for URN. The service instance type may reference at least one of a delivery parameter type for DVB T/S/C, an RTSP delivery parameter type, a multicast delivery parameter type, or a DASH delivery parameter type.

The proposed source type URNs 45030 provide URNs for DVB T/S/C/IPTV/DASH, etc..

The DVB service list type 45000 references the LCN table list type, and the LCN table list type references the LCN table type. The LCN table type, the DVB service list type 46000, and the DVB-I service type 45010 may reference REGION. Related region information may vary among services.

Details of the elements of FIG. 13 will be described with reference to each of the subsequent drawings.

The DVB-I service list type 45010 hierarchically presented in FIG. 13 will be described in detail.

The DVB-I service list has a type of "dvbisd:DVBiServiceListType", and has attributes for each sequence.

TextualType, RelatedMaterialType, which is additionally signaled, RegionListType for region information, LCNTableListType for a logical channel number, and the like may be signaled for each sequence.

### [DVBiServiceListType]

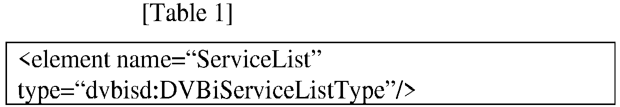

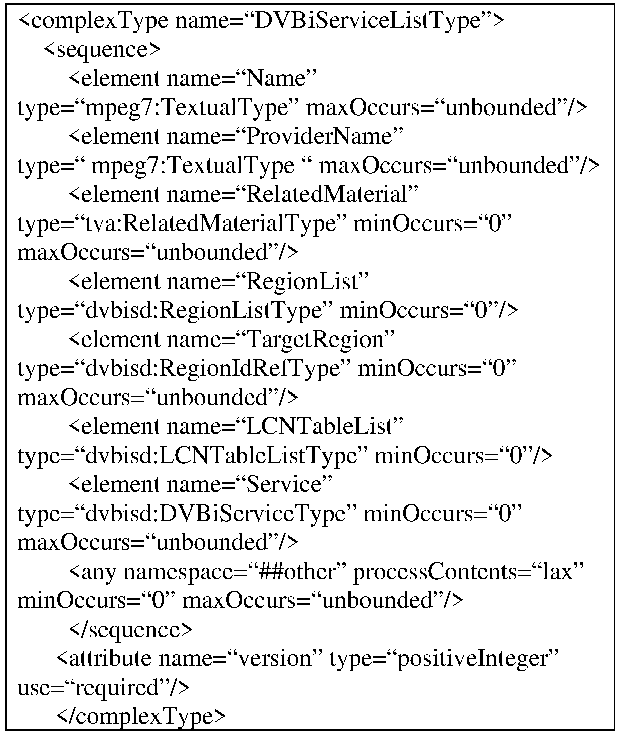

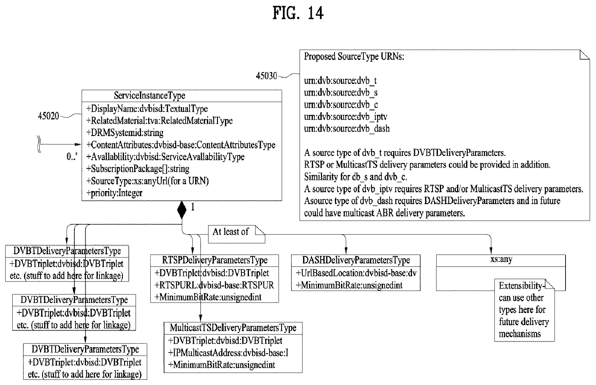

FIG. 14 is a table representation of the DVBIserviceListType according to the embodiments.

In FIG. 14, ServiceList, which corresponds to the ServiceList shown in FIGS 13, is a list of details and locations of IP services offered by the service provider. The service provider may divide their services into multiple service lists. This attribute is mandatory.

Name is the name of a service list in a readable form. Multiple service list names may be expressed in different languages. This attribute is mandatory.

ProviderName is the name of the provider of the readable service list. Multiple values for the provider name may be described in different languages. This attribute is mandatory.

RelatedMaterial indicates an additional material related to the service. This attribute is optional.

RegionList is a list of geographic regions with logical identifiers that are used to provide regional information of services in the service list or the service list. This attribute is optional.

TargetRegion represent the identifiers of the regions specified in the RegionList for which this service list is targeted. This attribute is optional.

LCNTableList is a list of tables that define regionalized and packaged logical channel numbers for the respective services. This attribute is optional.

Service represent services that are part of the service list. This attribute is optional.
@version is the version number of the service list. The value is incremented for every published change. This attribute is mandatory.

### [DVBiServiceType]

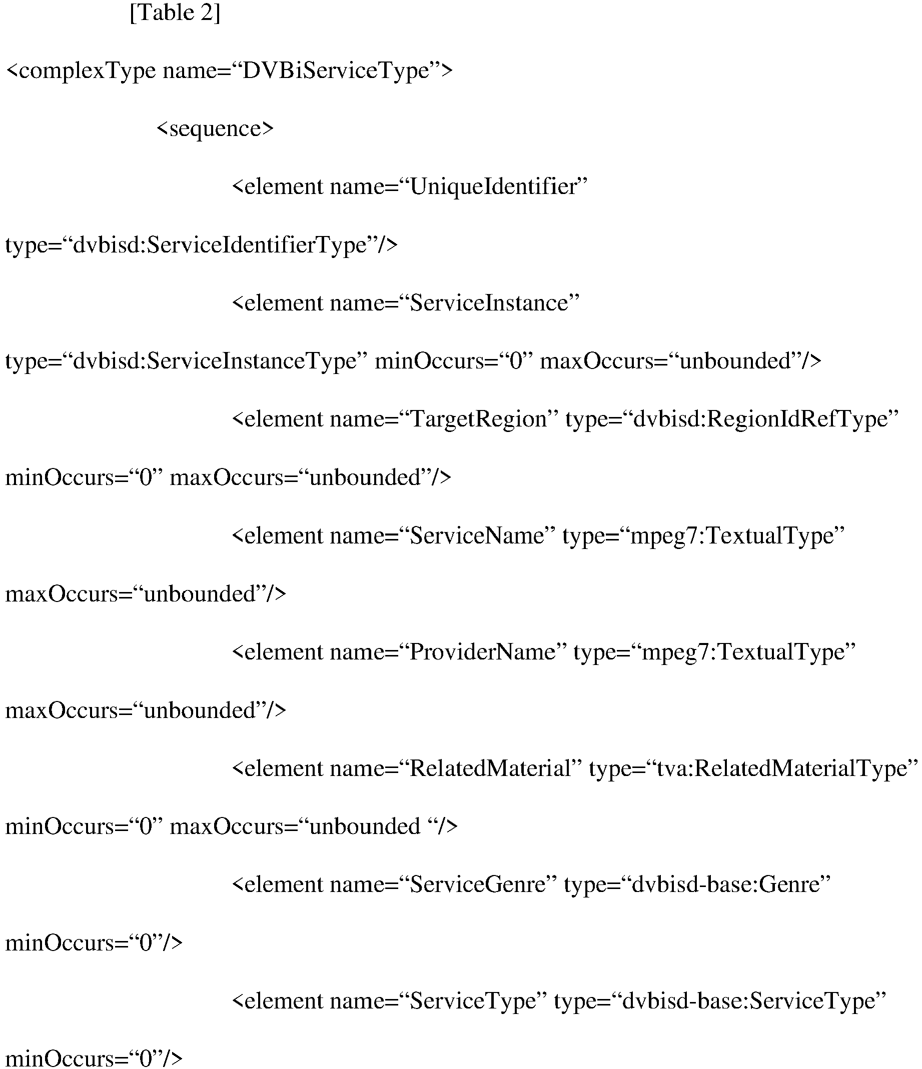

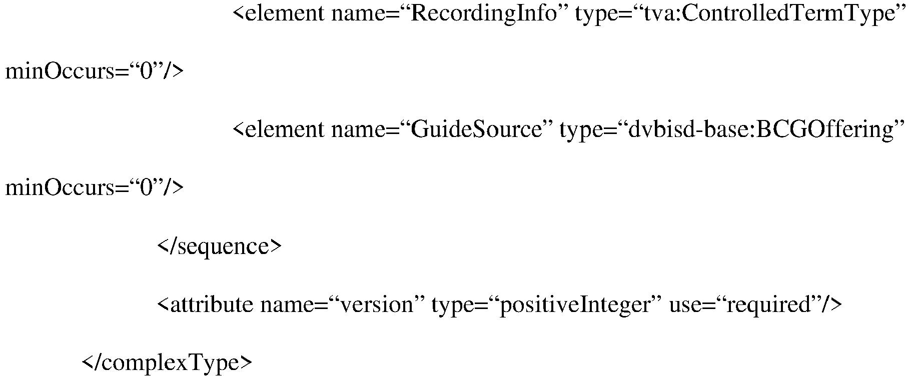

This shows a DVB-I service type according to embodiments.

The DVB-I service type described above may be expressed.

For each sequence, The DVB-I service type may have UniqueIdentifier and ServiceInstance, and proivde TargetRegion, a name for a signaled service (ServiceName), a service provider (ServiceName), RelatedMaterial, which is additional information, genre about this service (ServiceGenre), a specific type of this service (ServiceType), recording related information about this service (RecordingInfo), and a guide source of this service (GuideSource).

FIG. 15 shows a DVB-I service type according to embodiments.

The DVB-I service type of FIG. 15 describes the service type in the form of a table.

UniqueIdentifier is the unique ID of the service. This ID may never be changed for a service. Other parameters of this service may be changed. This attribute is mandatory.

Service Instance is an instance having A/V content for this service. When multiple elements of the type of this attribute are present and available, the one with a lower value of the @priority attribute may have a higher priority (or vice versa). All service instances for a given service may have the same content. This attribute is optional.

TargetRegion is the regions where the service is received. When not specified, no region constraints exist. This attribute is optional.

ServiceName is the name of the service. Service names may be specified in various languages. This attribute is mandatory.

ProviderName is the readable provider name of this service. This element may be specified in various languages and is mandatory.

RelatedMaterial is an additional material related to the service. The material may include, for example, out of service banners, service related applications, and service logos. This attribute is optional.

ServiceGenre is the genre of the service. ServiceGenre is optional.

ServiceType is the type of service (refer to the description in ETSI EN 300 468). ServiceType is optional.

RecordingInfo is information allow a DVB-I client to determine whether or not the content from this service is recorded, time-shifted, or redistributed. RecordingInfo is optional.

GuideSource is the details of a broadband content guide carrying metadata for this service. GuideSource is optional.
@version is the version number of this service. It is incremented for every published change. @version is mandatory.

### [ServiceInstanceType]

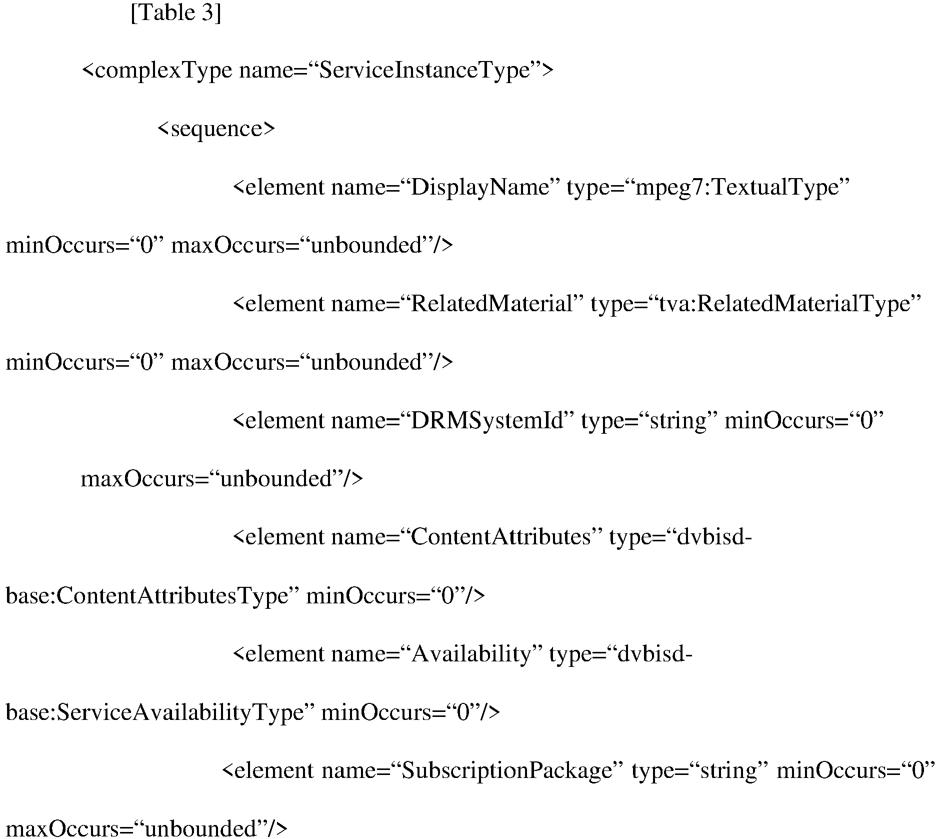

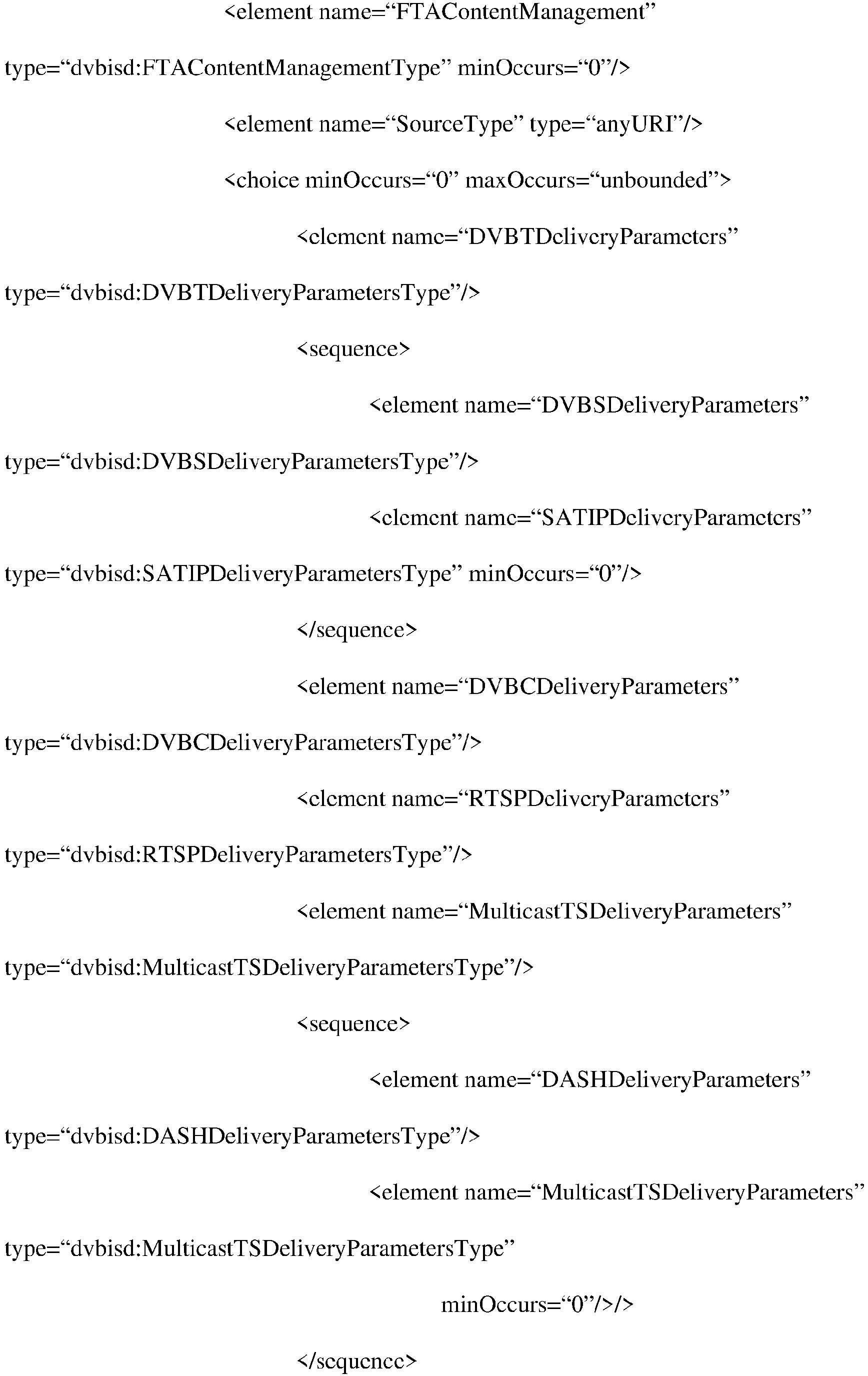

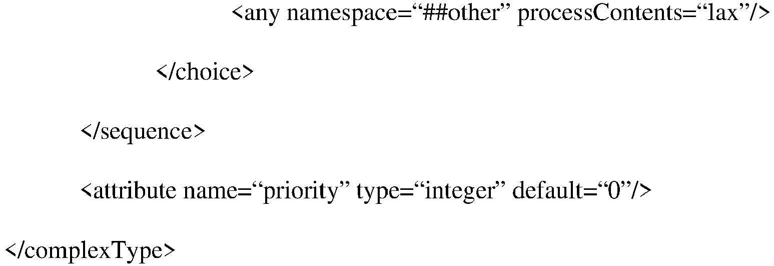

This table shows a DVB-I service type according to embodiments. It shows a specific form of the ServiceInstanceType 45020 of FIG. 13.

For example, for each service instance type, DisplayName, RelatedMaterial, DRMSystemId, ContentAttribute, Availability, SubscriptionPackage, FTAContentManagement, and various parameters as shown in FIG. 13 may be carried.

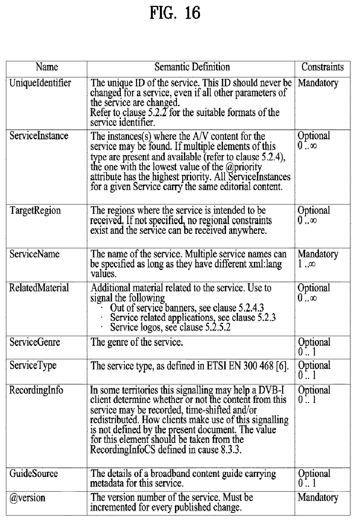

FIG. 16 shows a table representation of a service instance type according to embodiments.

Elements of the service instance type will be described with reference to FIG. 16.

DisplayName is a readable name of the service associated with a specific service location. Multiple service names may be specified in various languages. When not present, the ServiceName field may be used. This attribute is optional. In the present disclosure, an attribute may correspond to an element, a field, information, or a value according to a level, and may be referred to by various terms.

RelatedMaterial is an additional material related to the service. Specifically, it may include a no-service banner, service related applications, service logos, and the like. A related material with a specific value of the attribute HowRelated, which is provided within a ServiceInstance element, supercedes any corresponding related material with the value of HowRelated provided within a Service element. This element is optional.

DRMSystemId indicates any content projection schemes used for the service. The value may be the same as the @schemeIdURI defined in document DVB A168. This value is optional.

ContentAttributes may refer to Annex D.1.3.2 of ETSI TS 103 205. This value is optional.

Availability indicates the period in time when this service location is expected to be active. This value is optional.

SubscriptionPackage specifies a subscription package in which this service is included. This value is optional.

FTAContentManagement: DVB-I service instances that do not use DRM may carry an FTAContentManagement element to define the content management policy for the ServiceInstance. The semantics of each attribute may be specified in the corresponding fields of FTA_content_management_descriptor, which is a descriptor in document ETSI EN 300 468. This value is optional.

SourceType identifies the primary delivery source for this service instance. SourceType determines the required delivery parameters. This value is optional.

DVBTDeliveryParameters provides delivery parameters for DVB-T services.

DVBSDeliveryParameters provides delivery parameters for DVB-S services.

DVBCDeliveryParameters provides delivery parameters for DVB-C services.

RTSPDeliveryParameters provides delivery parameters for RTSP-based services.

MulticastTSDeliveryParameters provides delivery parameters for services delivered using multicast UDP.

DASHDeliveryParameters() provides delivery parameters for services using DVB DASH delivery.

SATIPDeliveryParameters provides parameters that a DVB-I client supporting SATIP may use to receive a service instance from an SATIP server.

The above-mentioned parameters may be described according to the SourceType.
@priority indicates the priority of this service instance relative to the other service instances of the service. This value is optional.

This table shows a DVB-I service type according to embodiments.

It shows a specific form of the ServiceInstanceType 45020 of FIG. 13.

For example, for each service instance type, DisplayName, RelatedMaterial, DRMSystemId, ContentAttribute, Availability, SubscriptionPackage, FTAContentManagement, and various parameters as shown in FIG. 13 may be carried.

FIG. 16 shows a table representation of a service instance type according to embodiments.

Elements of the service instance type will be described with reference to FIG. 16.

DisplayName is a readable name of the service associated with a specific service location. Multiple service names may be specified in various languages. When not present, the ServiceName field may be used. This attribute is optional. In the present disclosure, an attribute may correspond to an element, a field, information, or a value according to a level, and may be referred to by various terms.

RelatedMaterial is an additional material related to the service. Specifically, it may include a no-service banner, service related applications, service logos, and the like. A related material with a specific value of the attribute HowRelated, which is provided within a ServiceInstance element, supercedes any corresponding related material with the value of HowRelated provided within a Service element. This element is optional.

DRMSystemId indicates any content projection schemes used for the service. The value may be the same as the @schemeIdURI defined in document DVB A168. This value is optional.

ContentAttributes may refer to Annex D.1.3.2 of ETSI TS 103 205. This value is optional.

Availability indicates the period in time when this service location is expected to be active. This value is optional.

SubscriptionPackage specifies a subscription package in which this service is included. This value is optional.

FTAContentManagement: DVB-I service instances that do not use DRM may carry an FTAContentManagement element to define the content management policy for the ServiceInstance. The semantics of each attribute may be specified in the corresponding fields of FTA_content_management_descriptor, which is a descriptor in document ETSI EN 300 468. This value is optional.

SourceType identifies the primary delivery source for this service instance. SourceType determines the required delivery parameters. This value is optional.

DVBTDeliveryParameters provides delivery parameters for DVB-T services.

DVBSDeliveryParameters provides delivery parameters for DVB-S services.

DVBCDeliveryParameters provides delivery parameters for DVB-C services.

RTSPDeliveryParameters provides delivery parameters for RTSP-based services.

MulticastTSDeliveryParameters provides delivery parameters for services delivered using multicast UDP.

DASHDeliveryParameters() provides delivery parameters for services using DVB DASH delivery.

SATIPDeliveryParameters provides parameters that a DVB-I client supporting SATIP may use to receive a service instance from an SATIP server.

The above-mentioned parameters may be described according to the SourceType.
@priority indicates the priority of this service instance relative to the other service instances of the service. This value is optional.

### [DASHDeliveryParameters]

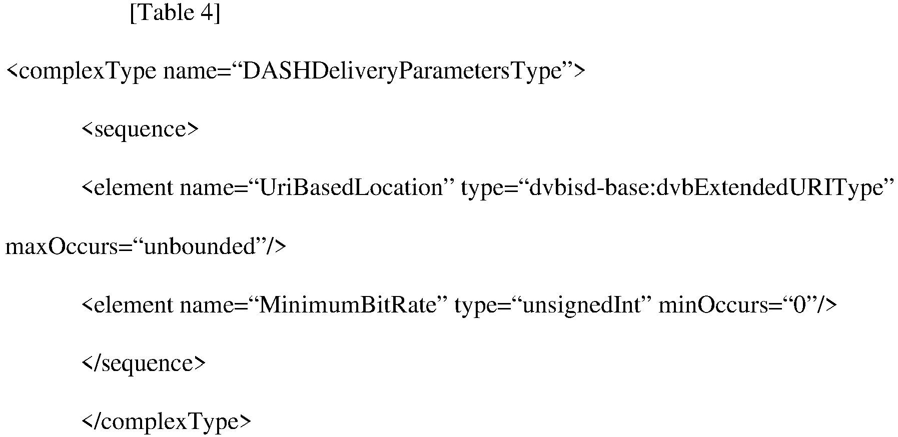

This table shows an extension of DASHDeliveryParameters for simulcast according to embodiments. UriBasedLocation: Refer to Annex D.1.3.2 of ETSI TS 103 205 [2] for semantic definition.

MinimumBitRate: Threshold bit-rate under which an alternative source for the same service should be preferred, if available.

This shows DASHDeliveryParameters for simulcast in a table form according to embodiments.

This is the detailed syntax of the above-described DASHDeliveryParameters.

The DASHDeliveryParameters according to the embodiments may be additionally extended for simulcast.

UriBasedLocation may refer to Annex D.1.3.2 of document ETSI TS 103 205. It is mandatory. When the DASH service is simulcast, this value may provide location information based on the URI.

MinimumBitRate indicates a threshold bit-rate at which an alternative service for the same service should be preferred. This value is optional.

As a child element of the DVB-I service type, a service interface may be provided according to the delivery network. The reception device may determine a service instance as a client in consideration of each @priority and device capability.

Here, @minimumBitrate indicates throughput in terms of a network stack for receiving a stream within a service instance.

For example, @minimumBitrate according to the embodiments may indicate throughput in terms of a network stack for receiving a stream within a service instance. That is, the device according to the embodiments may identify, through the minimum bitrate information, the minimum bitrate at which the network may currently receive the DASH service.

Based on the information, it may be determined whether the service instance is playable. However, in the case of the currently defined information, when multiple service instances are contained in DVBiservicetype, it is difficult for the client to select a service instance based only on the information of @minimumBitrate.

For example, since the minimumbitrate for determining playability is a minimum condition, the fallback condition between bitstreams may not be satisfied by satisfying the minimum condition alone.

For example, it is assumed that there are two service instances as follows.

(Service instance 1) DVB-T delivery method, HD, H.264/AVC

(Service instance 2) DVB-I DASH delivery method, MinimumBitRate 1.5Mbps

For example, when there are two service instances (e.g., service instance 1 and service instance 2), a client related to the transmission/reception device according to the embodiments is an HEVC UHD capable terminal, and the network situation above the bitrate of the other comparison target can be ensured, the receiver (terminal) should request service instance 2 (e.g., HEVC UHD). However, unless the MPD is received through a request, the receiver may not know, from the current information, an attribute indicating that a stream of better quality than instance 1 is included. Receiving and comparing all MPDs of all service instances may be not only a burden from the perspective of the receiver, but also an issue in reasonable network selection. A scheme for providing a better service between instances within DVB service scheme information is proposed below. That is, embodiments may be implemented in which the burden of the receiver parsing/analyzing all MPDs or similar signaling information is eliminated and the receiver is allowed to quickly identify and request a better service instance in response to the network situation of a specific bitrate or higher.

Therefore, service instances may be distinguished through the extension of information as described below.

### <Option 1>

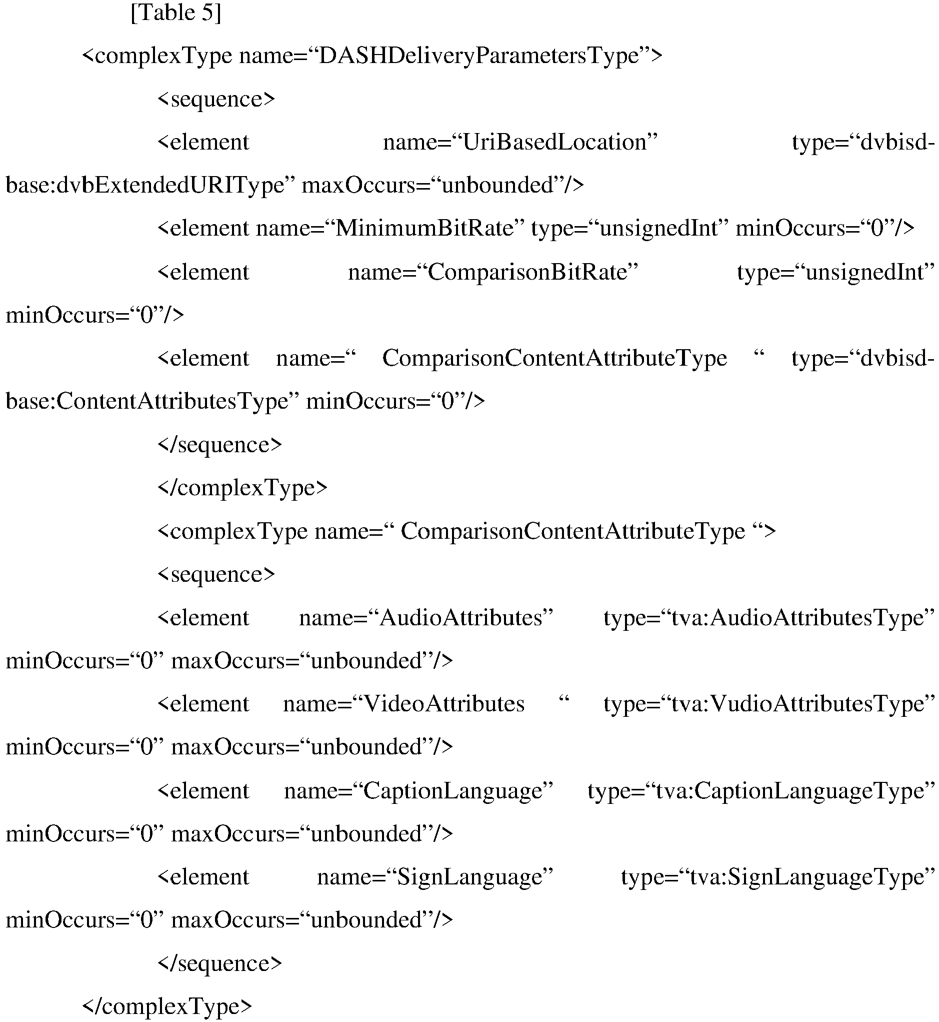

This is the specific syntax of the DASHDeliveryParametersType. As shown above, the DASHDeliveryParametersType may include ComparisonBitRate and ComparisonContentAttributeType. The ComparisonContentAttributeType may include AudioAttributes, VideoAttributes, CaptionLanguage, and SignLanguage as elements.

The ComparisonContentAttributeType may correspond to the element ContentAttributes included in the ServiceInstanceType 45020.

### Option 2

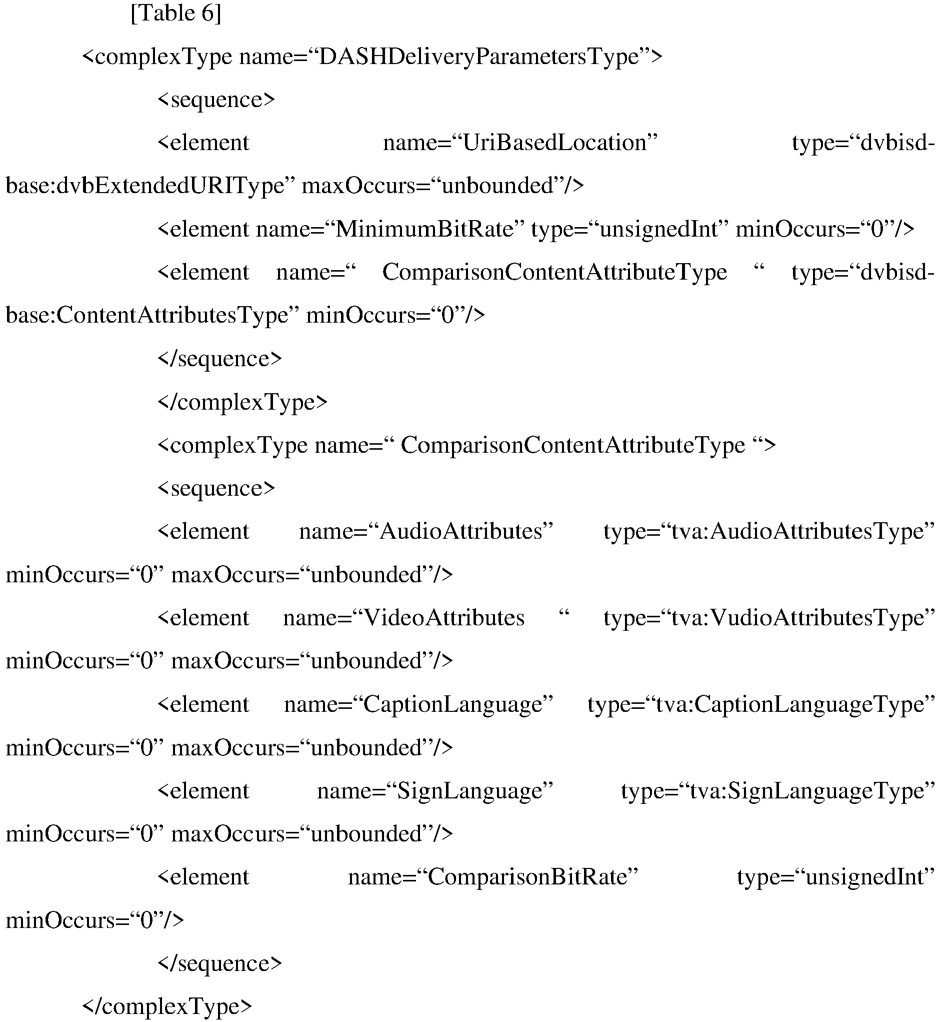

The table shows DASHDeliveryParametersType according to embodiments. The DASHDeliveryParametersType may include ComparisonContentAttributeType. Also, the ComparisonContentAttributeType may include ComparisonBitRate along with the elements AudioAttributes, VideoAttributes, CaptionLanguage, and SignLanguage.

ComparisonBitRate and ComparisonContentAttributeType, which are common elements in Options 1 and 1, may be defined as follows.
@ComparisonBitrate indicates what bitrate it would be able to handle for a particular IP-delivered Service Instance to be likely to provide a better user experience than any non-IP-delivered Service Instance available for that Service.
@ComparisonContentAttributeType indicates which video characteristic is available for a DVB-I client to provide a better user experience than any non-IP-delivered Service Instance available for that Service.

Signaling DVB-I service instance according to embodiments

### 1. DVB-S ServiceInstance

**[Table 7]**

| |
|---|
| <ServiceInstance priority="0"> |
| <DisplayName> ABC drama </DisplayName> |
| <ContentAttributes> |
| <dvbisd-base:AudioAttributes> |
| <tva:Coding href="urn:mpeg:mpeg7:cs:AudioCodingFormatCS:2001:3.2"> |
| <tva:Name>MPEG-1 Audio Layer II</tva:Name> |
| </tva:Coding> |
| </dvbisd-base:AudioAttributes> |
| <dvbisd-base:AudioAttributes> |
| <tva:Coding href="urn:dvb:metadata:cs:AudioCodecCS:2007:3.1"> |
| <tva:Name>AC3</tva:Name> |
| </tva:Coding> |
| </dvbisd-base:AudioAttributes> |
| <dvbisd-base: Video Attributes> |
| <tva:Coding |
| href="urn:mpeg:mpeg7:cs:VideoCodingFormatCS:2001:2.2.2"> |
| <tva:Name>MPEG-2 Video Main Profile @ Main Level</tva:Name> |
| </tva:Coding> |
| </dvbisd-base:VideoAttributes> |
| </ContentAttributes> |
| <SourceType>urn:dvb:source:dvb-s</SourceType> |
| <DVB SDelivery Parameters> |
| <DVBTriplet origNetId="1" tsId="1101" serviceId="28106"/> |
| <OrbitalPosition>19.2</OrbitalPosition> |
| <Frequency>1183600</Frequency> |
| <Polarization horizontal</Polarization> |
| </DVBSDeliveryParameters> |
| </ServiceInstance> |
| 2. DVB-I ServiceInstance |
| <ServiceInstance priority="1"> |
| <DisplayName> ABC drama </DisplayName> |
| < SourceType >urn: dvb: source: dvb-dash </SourceType> |
| <DASHDeliveryParameters> |
| <UriBasedLocation contentType="application/dash+xml"> |
| <dvbisd-base:URI>https://live.daserste.de/0001 Das%20Erste.mpd</dvbisd-base:URI> |
| </UriBasedLocation> |
| <MinimumBitrate> 1M </MinimumBitrate> |
| <ComparisonBitRate> 7M </ComparisonBitRate> |
| <ComparisonContentAttribute> |
| <dvbisd-base: Video Attributes> |
| <tva:Coding href="urn:mpeg:mpeg7:cs: VideoCodingFormatCS:2001:2.2.2"> |
| <tva:Name>HEVC Video Main10 Profile @ Main Level</tva:Name> : UHD enable |
| </tva:Coding> |
| </dvbisd-base: VideoAttributes > |
| </ComparisonContentAttribute> |
| </DASHDeliveryParameters > |
| </ServiceInstance> |

This is an example of DVB-I service instance. It shows two service instances: 1 DVB-S ServiceInstance and 2 DVB-I ServiceInstance.

The ServiceInstance of 1 has priority 0, and the display name is ABC drama. As shown in FIG. 56, AudioAttributes, VideoAttributes, and the like are signaled as attributes, and the ServiceInstance includes DVBSDeliveryParameters. Here, the priority '0' may be an example value. In addition, the reception device according to the embodiments may check an additional service instance in addition to the service instance to provide, through signaling information according to embodiments, a service instance capable of providing a better service to the user in consideration of not only the priority value, but also the network situation or available bandwidth and the capability of the client.

The ServiceInstance of 2 has priority 1, and the display name is ABC drama. DASHDeliveryParameters may signal the address of https://live.daserste.de/0001 Das%20Erste.mpd</dvbisd-base:URI for content of the application/dash+xml type through a URI-based location. The MinimumBitRate is 1M, and the ComparisonBitRate is 7M. The ComparisonContentAttribute signals VideoAttributes through "urn:mpeg:mpeg7:cs:VideoCodingFormatCS:2001:2.2.2" and HEVC Video Main10 Profile @ Main Level</tva:Name> (UHD enable). Specifically, the value of the ComparisonBitRate may be an example value. The reception device (terminal, client, etc.) according to the embodiments checks the value of ComparisonBitRate, and recognize, from the value, that a better service is provided. For example, when a better service corresponding to the value of 7M is provided, the method/device according to the embodiments may additionally define corresponding video attribute information like the ComparisonContentAttribute. Accordingly, the reception device according to the embodiments may check the presence of the UHD stream and switch the stream to a service for the ComparisonContentAttribute according to the network situation.

When the receiver receives two instances within the same service (e.g., ABC drama) in the DVB-I service scheme, the DVB-I client should select an instance that may be provided for a better user experience. When the value of @ComparisonBitrate value is identified as 7 Mbps, the available bandwidth of the current network is exceeded compared to HD, and the attribute of @ComparisonContentAttribute is supportable by the terminal (receiver), an MPD may be requested and a better service may be received and provided to the user. The attribute indicates "beyond HD" based on @ComparisonBitrate (7Mbps - HD), and means that a service that is enriched compared to the broadcast service instance may be provided.

Here, the bitrates 1M BPS and 7M BPS may be exemplary. These values may be bitrates applied between services with different resolutions, such as UD and UHD.

According to embodiments, the use case is extended as follows.
Instance 1. HD broadcast
Instance 2. UHD DASH with representations from SD to UHD, 1.5 Mbps to 33 Mbps (with an HD Representation at 7 Mbps). MinimumBitRate 1.5 Mbps; ComparisonBitRate 7 Mbps.

That is, Instance 1 indicates HD broadcast, and Instance 2 indicates UHD DASH. Instance 2 may have representations from SD to UHD and have a bandwidth from 1.5 Mbp to 33 Mbps. In this case, the HD representation is 7 Mbps, the minimum bitrate is 1.5 Mbps, and the comparison bitrate is 7 Mbps.

A player capable of supporting UHD according to the embodiments may select Instance 2 when the bitrate is 7 Mbps.

A player capable of supporting HD without HEVC support according to embodiments selects Instance 1.

A player capable of supporting UHD and having a Wi-Fi link of 5.5 Mpbs speed according to embodiments selects Instance 1.

A player capable of supporting UHD and having a 3G mobile connection of 1 Mbps, at which a broadcast report cannot be received, according to embodiments may not have a connection fast enough to play a service, but may attempt to play the service.

According to embodiments, a player capable of supporting UHD and having a 4G mobile connection of 2 Mbps, at which broadcast cannot be received, may select Instance 2.

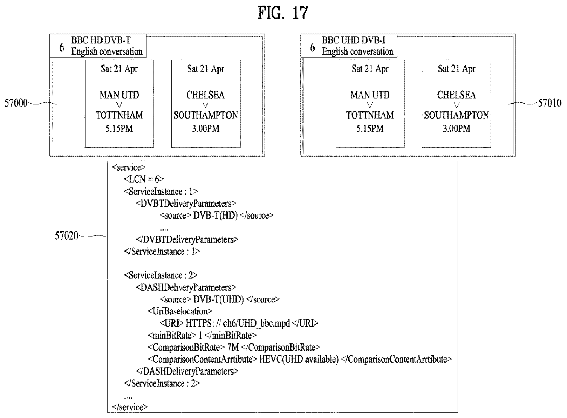

FIG. 17 shows simulcast UI/UX according to embodiments.

In the figure, part 57000 illustrates a state in which the reception device according to the embodiments displays the DVB-T broadcast service, and part 57010 illustrates a state in which the reception device according to the embodiments displays the DVB-I service. FIG. 14 illustrates that a better user experience for the same service is provided to a user according to a user's selection and/or a characteristic of the reception device, based on a signaling scheme and a UI/UX scheme according to embodiments.

Part 57020 is an example of the above-described signaling information for this purpose. It corresponds to the aforementioned service list.

The service list according to the embodiments may provide a service instance for each service. The service for parts 57000 and 57010 has logical channel number 6, and includes service instance 1 and service instance 2. Service instance 1 signals DVB-T (HD) service as shown in part 57000, and service instance 2 signals DVB-I (UHD) service as shown in part 57010.

According to embodiments, when a device capable of receiving the DVB-I service receives one or more service instances, a determination may be made such that a media service of higher quality may be provided based on the comparison bit rate value and the comparison content attribute value included. When two service instances are received as in the embodiment, a service instance that is likely to receive a better service may be quickly identified through IP/DASH. As in the embodiment, when HD and UHD are simultaneously received, a delivery type may be selected through the information.

In other words, a reception device receiving Service Instance 1 and Service Instance 2 may immediately check a better DVB-I UHD service based on the comparison bit rate value and the comparison content attribute value included in the service instance for DVB-I, without having to parse all other signaling information for all services. Based on Instance 2, the reception device may recognize through the comparison content attribute that the comparison bit rate is 7 Mbps and the resolution of the better service is UHD (HEVC). The reception device may ask the user whether to view the better service based on UI/UX. The service according to Instance 2 may be provided to the user according to the user's selection or the setting of the reception device.

The reception device according to embodiments may provide a DVB-I simulcast service UI/UX to a user. The UI/UX shown in FIG. 57 represent a UI/UX that provides a better experience to a user when a DVB-I client receives multiple service instances through the extended information according to the above-described embodiments. For a terminal capable of supporting UHD/HEVC, a DVB-I service instance capable of receiving UHD may be selected in place of the DVB-T service instance capable of receiving HD. The terminal may select a service instance of high quality only through the service list scheme without having to receive all DASH MPDs.

The signaling information according to the above-described embodiments may be referred to as various terms such as field, attribute, element, first information, second information, first value, and second value.

The above-described embodiments and the embodiments to be described below may provide the following effects.

According to embodiments, an MPEG-2 system/DVB SI-based service for Internet channel scanning for providing the same user UX as the existing linear service channel may be initialized.

According to embodiments, network/stream/service unique signaling for Internet stream identification may be performed for aggregation with an existing linear channel.

According to embodiments, a method for replacing TSID in existing system information may be extended.

According to embodiments, switching of a DVB network provided on the same dedicated channel and each bit-stream provided on a DVB-I channel may be allowed.

According to embodiments, SUHD (8k) linkage may be provided through a DVB-I channel in SD, HD, and UHD linkage services provided on an existing channel.

According to embodiments, a DVB-I service list may be acquired over the existing DVB network.

According to embodiments, in order to provide a linear IP-based TV service, a service bootstrap technology of the existing linear channel network.

According to embodiments, unique information that must be defined for Linear IP based TV service identification may be added.

According to embodiments, an IP based TV channel may be added to the existing linear channel EPG.

According to embodiments, an existing DVB stream and a DVB-I stream may be simultaneously provided on the same dedicated channel, and the streams may be dynamically changed for a predetermined period.

According to embodiments, SUHD (8k) linkage may be provided through a DVB-I channel in SD, HD, and UHD linkage services provided on an existing channel.

According to embodiments, linkage information for acquiring a DVB-I service list or a query end point over the existing DVB network may be extended.

According to embodiments, a service bootstrap scheme for an existing linear channel network may be extended to provide a linear IP based TV service.

According to embodiments, linkage between the existing DVB network and the DVB-I network may be provided at the bouquet level, service level, and event level based on DVB-SI information.

According to embodiments, content of various resolutions may be provided on the same logical channel through linkage information about the existing DVB network and the DVB-I network.

According to embodiments, a DVB-I service list location and a query may be defined through a linkage descriptor (uri_linkage_descriptor) to acquire a DVB-I service list on the existing DVB network.

According to embodiments, an open DVB-I service registry may be accessed through an end point and a service list entry list suitable for a client may be acquired.

According to embodiments, a service that is accessed by a device supporting an RF-based DVB tuner through a UI in which an existing linear service and an OTT service are aggregated may be enabled.

According to embodiments, a media service that provides the same UX as existing linear channels may be provided through the open Internet without a set-top box (STB).

According to embodiments, as the existing DVB network and the Internet channel are aggregated, a resolution that may be provided on the same channel may be extended.

According to embodiments, a DVB-I service list location may be signaled due to a linkage descriptor (uri_linkage_descriptor). The reception device according to the embodiments may efficiently acquire a DVB-I service list. In addition, due to the end point according to the embodiments, the reception device according to the embodiments may efficiently acquire a service list.

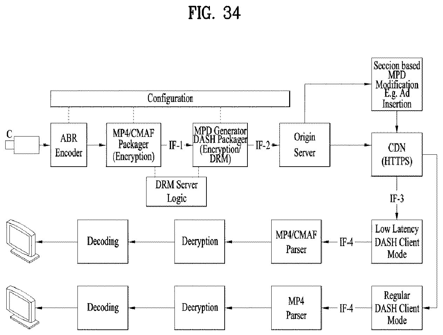

Due to the above-described embodiments, the terminal (device) according to the embodiments may acquire a service list in which all channels are aggregated, as shown in FIG. 34. The aggregated service list may include an entire list, a list desired by the reception device, and the like.

A URI by which all services may be acquired may be present. Through this URI, a URI for a list of individual services may be additionally acquired. The individual list may be a list of services for each broadcaster.

As the service platform expands, operators may provide services through more diverse environments. From the user perspective, media services received in various app environments may be offered in an aggregated reception environment called DVB-I. Accordingly, services that are more convenient and have good accessibility may be received.

With the expansion and integration of the service platform, a service may be simulcast over communication networks including terrestrial, cable, satellite, and 5G networks, and the receiver may receive a desired service according to the receiver capability.

This process may be implemented through ComparisonBitrate and/or ComparisonContentAttribute in FIGS. 54 to 57 and the like.

The MPD may contain multiple representations and also contain both UD related information and UHD related information.

The reception device has a large burden of parsing all the information of the MPD, which takes a lot of time.

On the other hand, when the DVB-I service list at the service instance level is used, the reception device may be allowed to selectively and quickly decode optimized services and rich media according to the capabilities of the reception device.

The reception device may recognize presence of services with different capabilities through ComparisonBitrate. ComparisonBitrate may be a concept of minimum throughput. Furthermore, the reception device may recognize a specific attribute of a switched service through ComparisonContentAttribute.

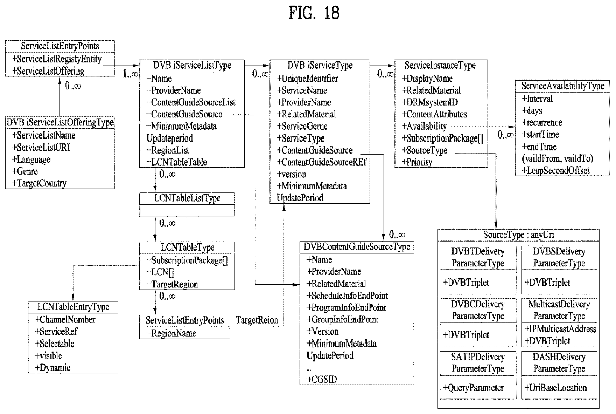

FIG. 18 shows a DVB-I service list hierarchy according to embodiments.

FIG. 18 shows a DVB-I service list.

The transmission device according to the embodiments generates a service list as shown in FIG. 64, and transmits the same to the reception device, and the reception device provides a DVB-I media service to a user based on the service list.

The transmission device generates service information as shown in FIGS. 45, 57, and 64, and the reception device acquires service related information (e.g., service list information, content guide information, etc.) based on the service information as shown in FIGS. 45, 57, and 64.

In the DVB-I service list hierarchy according to embodiments, each service may include service instances through unique information of service_ID. That is, a Parents element of one service_ID may define multiple service instances classified by the delivery network. In the case of simulcast, when the Internet and the existing DVB network are connected simultaneously, the transmission device may define and transmit instances of DVB-T and DASH. For a service including service instances, te transmission device generates a DVB-I service content guide to be provided to a user. By defining specific information about a program (or event) corresponding to a specific schedule (timeslot), the reception device may receive a currently ongoing program guide. DVB-I service reception is basically operated in a pull-only mode based on HTTP 1.1, and each client may download content guide information about content currently being consumed according to the client's own polling algorithm, and then may show the same through an appropriate UX/UI.

**[Table 8]**

| |
|---|
| <api_endpoint_URL>[?<query_params>] |
| <ContentGuideSourceList> |
| <ContentGuideSource CGSID="cgs-dvbi-01"> |
| <Name xml:lang="en">A-Z Content Guide</Name> |
| <ProviderName xml:lang="en">A-Z Metadata</ProviderName> |
| <RelatedMaterial> |
| <HowRelatedhref="urn:dvb:metadata:cs:HowRelatedCS:2019:1002.1"/> |
| <MediaLocator> |
| <MediaUri contentType="image/png"> |
| https://cgs.az.metadata/static/logo.png |
| </MediaUri> |
| </MediaLocator> |
| </RelatedMaterial> |
| <ScheduleInfoEndpoint contentType="application/xml"> |
| <URI>https:Hcgs.az.metadata/schedule</URI> |
| </ScheduleInfoEndpoint> |
| <ProgramInfoEndpoint contentType="application/xml"> |
| <URI>https://cgs.az.metadata/program</URI> |
| </ProgramInfoEndpoint> |
| <GroupInfoEndpoint contentType="application/xml"> |
| <URI>https://cgs.az.metadata/group</URI> |
| </GroupInfoEndpoint> |
| </ContentGuideSource> |
| </ContentGuideSourceList> |

The table shows the detailed syntax of an instance of the DVB ContentGuideSourceType. The reception device according to the embodiments may download the DVB-I service content guide using a method disclosed below.

When the reception device according to the embodiments makes a request for the content guide to the content guide server (transmission device), it requests and receives data with an API endpoint as shown below. "ContentGuideSource" is given API_endpoint_URL shown below and updates necessary information on the corresponding address. The basic structure is configured as follows, and the request method is divided into a timestamp filtered schedule request and a now/next filtered schedule request according to a time span.

### <api_endpoint_URL>[?<query_params>]

### [1] Timestamp filtered schedule request

By defining a specific time span of the ScheduleEndpoint, query information is defined as follows.
<ScheduleInfoEndpoint>?start=<start_unixtime>&end=<end_unixtime>
&sid=<service_id>&image_variant=<variant>

An example is given below.
<ScheduleInfoEndpoint>?start=1433246400&end=1433268000&sid=12345

Here, service_id indicates a single decimal service ID determined by the reception device (client device).

Only a single presence of the service ID parameter may be passed.

Variant may optionally specify an image variant.

### [2] Now/next filtered schedule request

The now/next filtered schedule endpoint represents query information.

An example is given below.
<ScheduleInfoEndpoint>?sid=12345&now_next=true

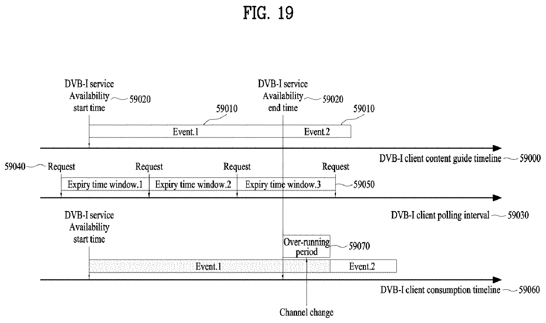

FIG. 19 illustrates a DVB-I client over-running issue according to embodiments.

FIG. 19 illustrates up-to-date state issues due to over-running that may occur while a broadcast signal reception device according to embodiments reproduces DVB-I related data.

The over-running issue may occur between the broadcast signal reception device (client) and the broadcast signal transmission device (server unit, broadcaster, etc.) according to the embodiments for the following reasons.

The broadcast signal reception device (DVB-I client) according to the embodiments updates the content guide data with the latest information by polling according to the client's own standards and shows the updated data to the user. Live broadcasting on the DVB network provides content guide data in a push form over the broadcast network. On the other hand, DVB-I updates the latest information through a fixed periodic refresh in the pull-only mode.

The broadcast signal reception device (DVB-I client) according to the embodiments may play a program (event) by DVB-I service availability according to the service discovery information according to a DVB-I client content guide timeline 59000. A program (or event) 59010 according to the embodiments has a start time 59020 and an end time 59020.

An event according to embodiments may represent aperiodic sparse media-time related auxiliary information for the client or reception device according to the DASH definition.

The broadcast signal reception device (DVB-I client) according to the embodiments may send a request 59040 for content guide data to the transmission device in every expiry time window 59050 based on a DVB-I client polling interval 59050.

An issue of the content guide based on DVB-I is that a DVB-I service that is different from the information in the guide of the existing program may be displayed due to a delay in a specific program (or event) 59010, for example, sports broadcasting or the insertion of specific live breaking news. FIG. 59 is a diagram illustrating DVB-I content guide information according to a polling interval and a progression of a live program actually being consumed.

As shown in FIG. 59, the client may be tuned in or switch channels during an over-running period 59070 of a live program. The DVB-I content guide has an issue indicating data about Event 2 according to the scheduled end time (the reception device is playing Event 1 in reality).

In other words, the client updates the content guide through the periodic request 59040. However, when over-running occurs in the end-time span, the current play-out screen may not match the UI information of the channel banner.

In addition, the expiry time related cache-control and the max-age header in predefined HTTP do not take into account a time span for over-running.

Accordingly, embodiments propose methods for updating the latest information by a DVB-I receiver based on a pull-only mode.

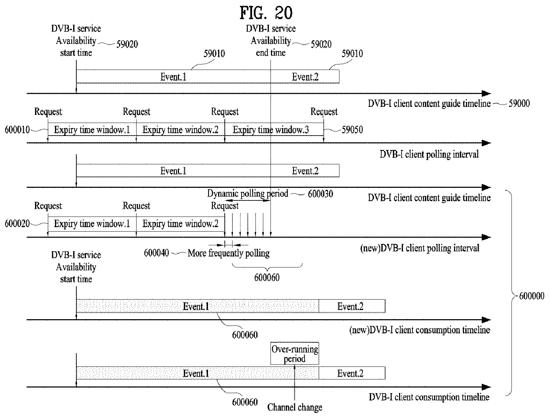

FIG. 20 illustrates a dynamic polling algorithm according to embodiments.

FIG. 20 illustrates a method of addressing the problem of FIG. 19 by a broadcast signal transmission/reception device according to embodiments.

The broadcast signal reception device (DVB-I client) according to the embodiments may maintain an up-to-date state based on an operation 600000.

As shown in FIG. 20, a method of preventing incorrect information (guide information related to an event/program, etc.) from being shown in the over-running period is proposed. The broadcast signal reception device according to the embodiments may receive a DVB-I service, and may check service availability currently in progress through <Availability> in a service instance. Accordingly, the service progress may be checked according to the service window defined in the service availability.

When a specific live service is over-run, the polling period in a specific interval may be adaptively changed through the <pollingInterval> in the existing polling method that the client is running.

Even when the reception device autonomously performs polling as shown in part 600010, it may not appropriately respond to over-running occurring at the event end time.

Accordingly, as shown in part 600020, the reception device may perform polling in a predetermined manner according to the service window, and then may dynamically perform polling from the vicinity of the end time of the event/program for a specific dynamic polling period 600030 in every polling period 600040.

In accordance with the content guide timeline according to the embodiments, when Event 1 is over-run and thus an over-running period 600060 occurs, the reception device may provide the user with a content guide for Event 1 reflecting over-running along with Event 1 based on an entire dynamic polling period 600030 and a polling period 600040.

The entire dynamic polling period 600030 and the polling period 600040 may be set for a certain period 600060 from a time before the expiry time of Event 1 to a time after the start point of Event 2.

The dynamic polling interval may prevent content guide misinformation that occur in over-running and provide up-to-date information. FIG. 60 illustrates an operation of adaptively switching a polling period of a specific interval to apply a dynamic polling interval to address the issue of over-running. The following information is required as an algorithm for addressing the over-running issue.

Reference timing information for applying dynamic polling interval: This may indicate the entire interval in which dynamic polling is applied.

For example, the reference timing information may represent a point indicated by an offset by x sec from the DVB-I service Availability end time.

Polling interval to be newly applied: This indicates an interval at which polling is to be performed for dynamic polling in the entire interval.

Version information for comparison with existing information: This may be version information indicating dynamic polling compared to a client polling interval.

Specifically, (1) the reference timing information for applying the dynamic polling interval indicates a period in which the dynamic polling is applied. (2) The offset by x sec from the reference timing information (e.g., DVB-I service Availability end time) is a value for (1) and may be an offset or a Boolean type. (3) The polling interval to be newly applied may be @minimumMetadataUpdatePeriod according to embodiments.

For example, when the total period is 10 minutes, and polling is dynamically performed every 1 minute within 10 minutes, the information of (1) is 10 minutes, and the information of (2) is the start point of 10 minutes (AST or AET + offset or @dynamic), and the interval of (3) may be 1 minute. In addition, it may be seen that this is information for dynamic polling through the version information for comparison with the existing information.

### [Solution 1]

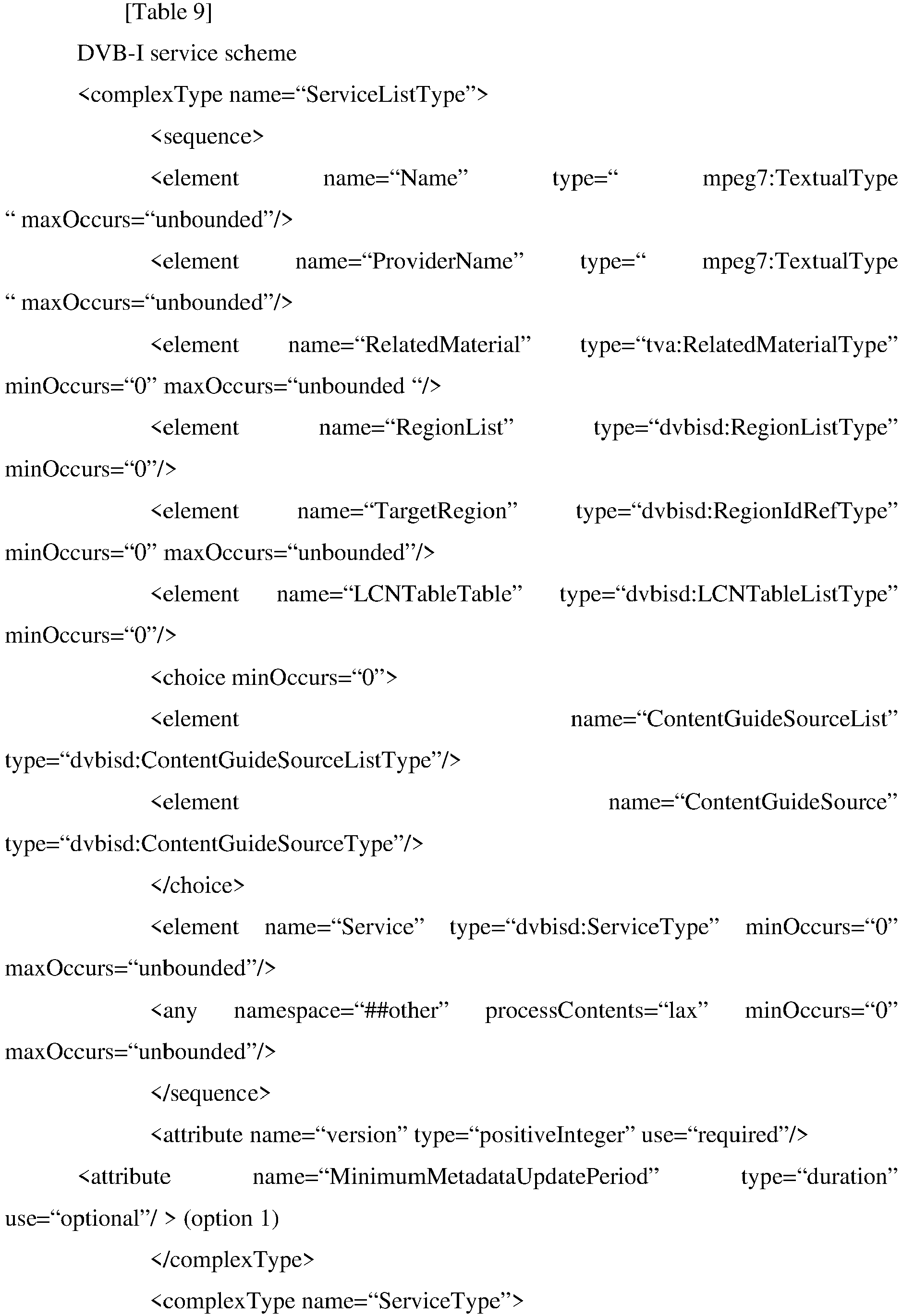

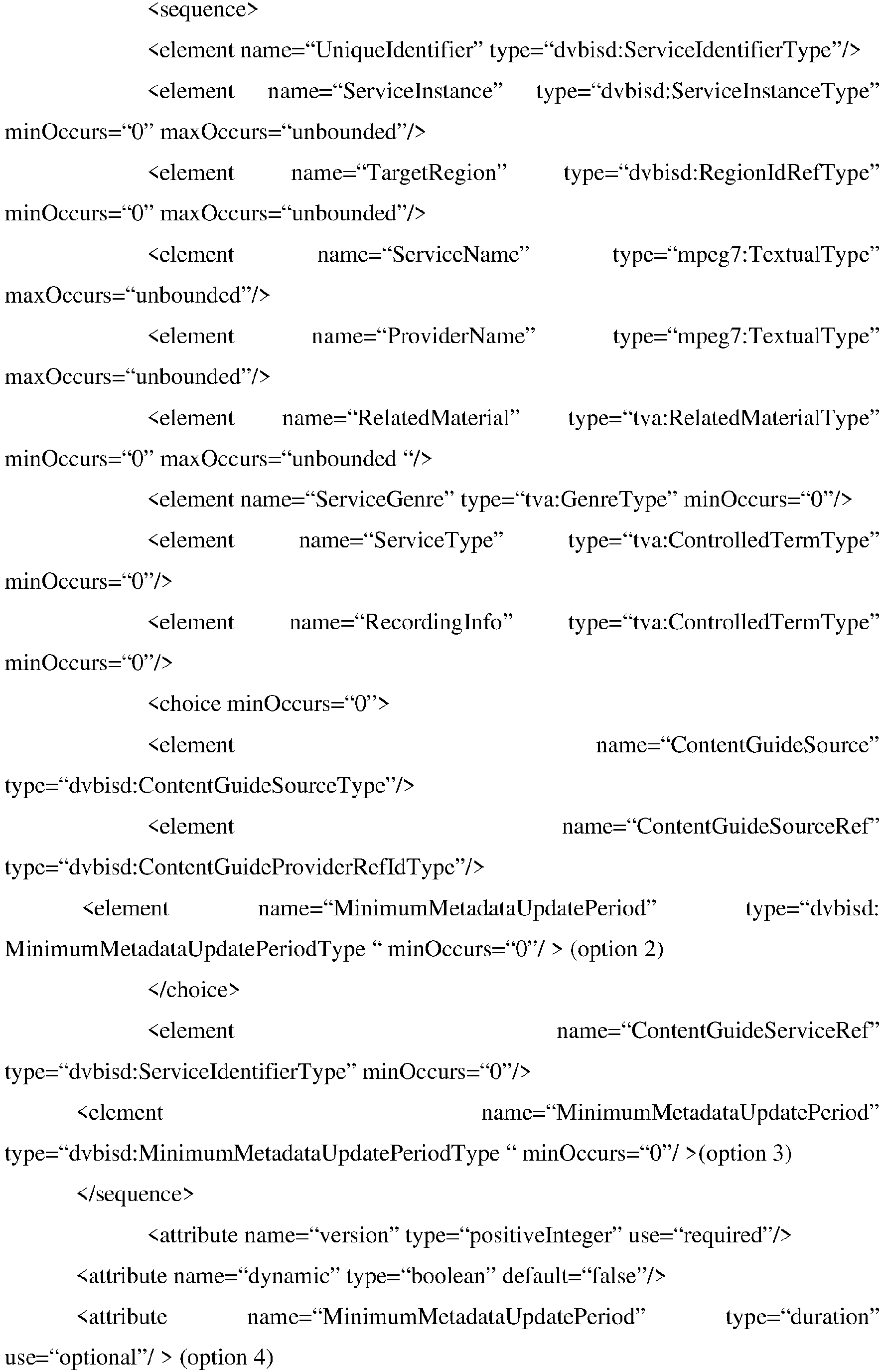

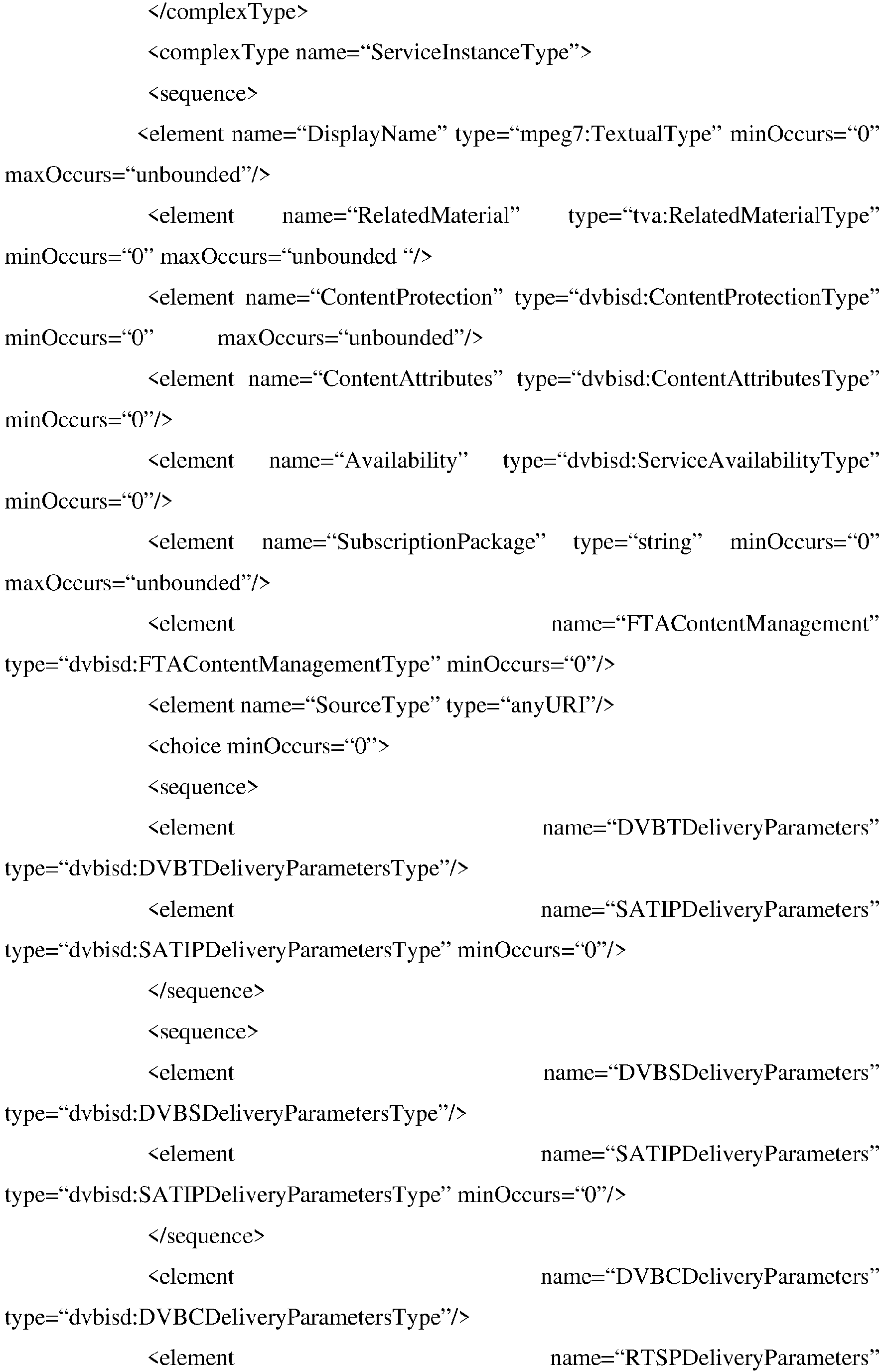

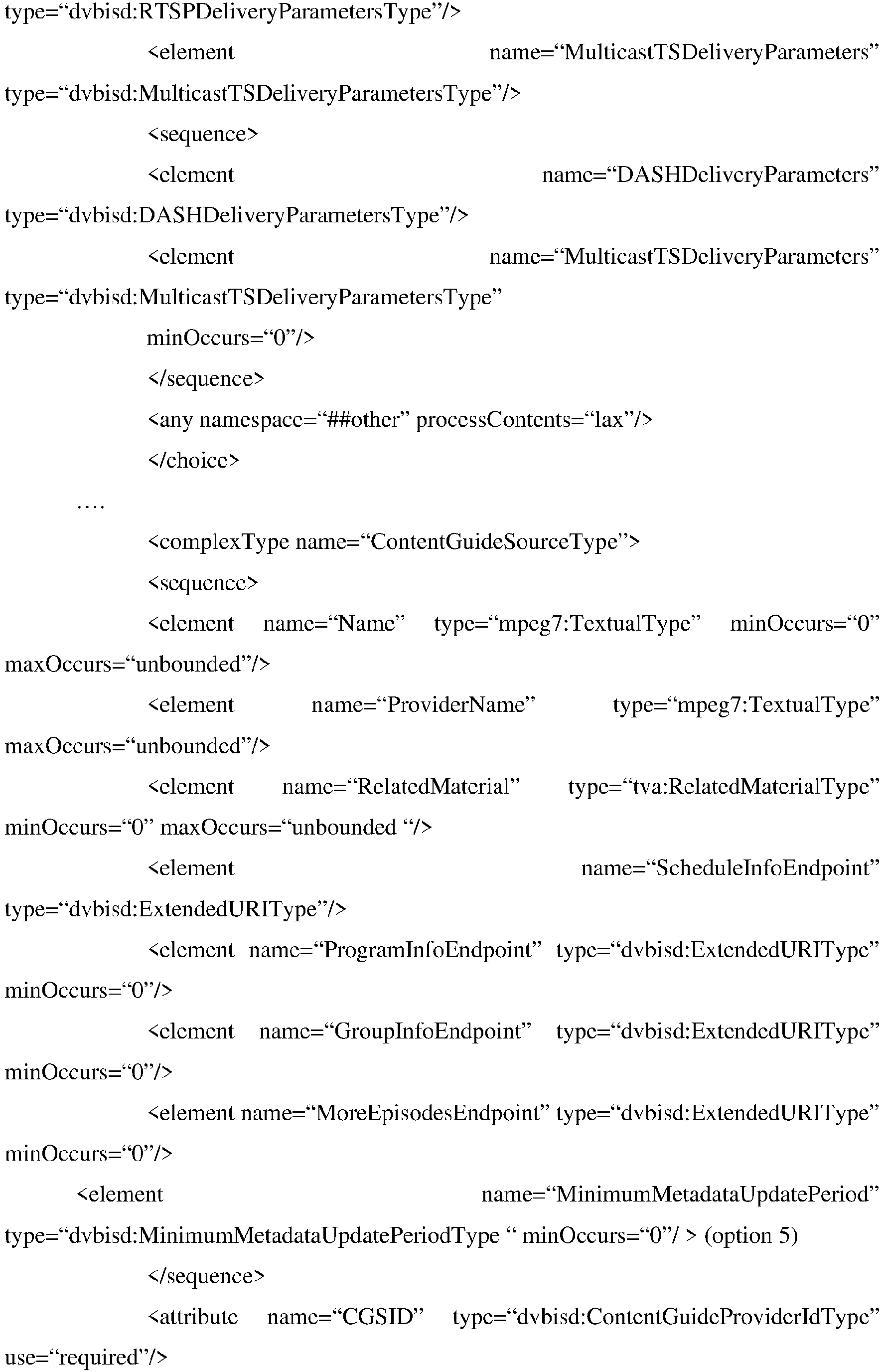

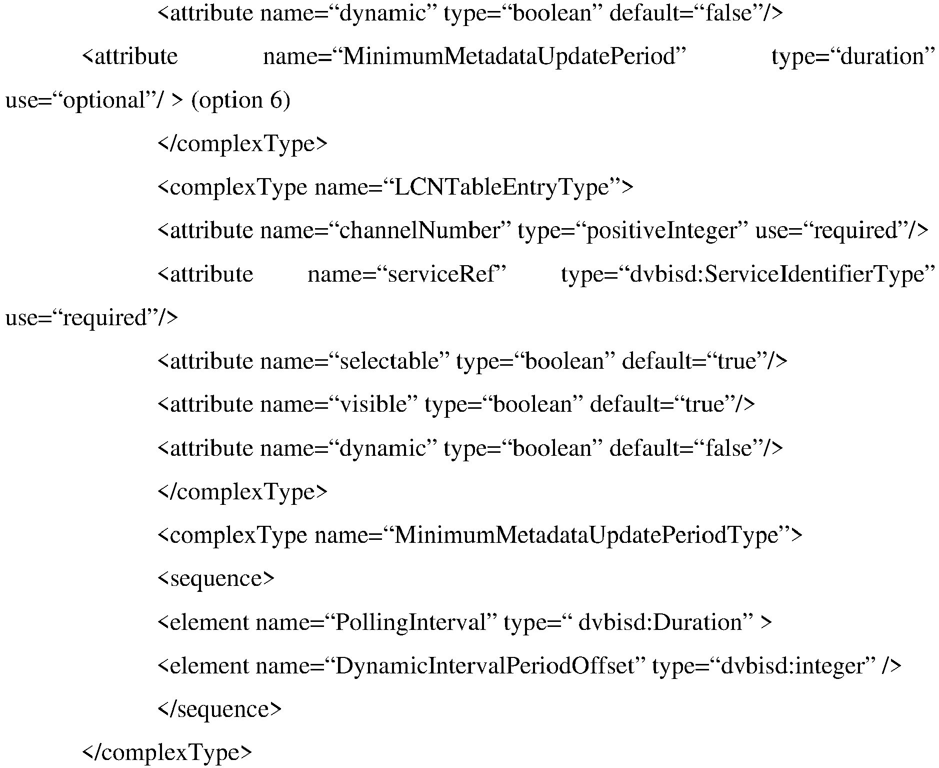

The table shows the syntax for polling according to embodiments. The table illustrates the DVB-I service scheme. The transmission device may generate service list information and transmit the same to the reception device, and the reception device may provide content to the user based on the service list information. The transmission device generates service information, and the reception device acquires service-related information (e.g., service list information, content guide information, etc.) based on the service information.

The reception device may update the metadata for the content for a specific period and duration based on the MinimumMetadataUpdatePeriod and duration.

The reception device may update the metadata for the content for a specific period based on the MinimumMetadataUpdatePeriod and the MinimumMetadataUpdatePeriodType.

The reception device may recognize, from the transmission device, that polling should be performed dynamically, based on the Boolean type, such as <attribute name="dynamic" type="boolean" default="false"/> or <attribute name="MinimumMetadataUpdatePeriod" type="duration" use="optional"/>. For example, when the Boolean is False, dynamic polling may be disabled. When the Boolean is True, dynamic polling may be enabled. The reception device may make a request for dynamic polling to the transmission device based on the MinimumMetadataUpdatePeriod and duration, and receive the queried information from the transmission device.

The reception device may update metadata based on MinimumMetadataUpdatePeriod and MinimumMetadataUpdatePeriodType according to the content guide source type.

The transmission device may independently deliver the polling related information together with the version information to the reception device, may deliver the polling related information together with the content guide source type, or may deliver the polling related information together with the LCN table entry type.

The reception device may acquire a polling interval and duration, a dynamic interval period offset, and an integer value according to MinimumMetadataUpdatePeriodType, transmit a query for dynamic polling to the transmission device, and receive response information for the query.

The transmission device may generate MinimumMetadataUpdatePeriod at various locations in the service list and deliver the same to the reception device. The service discovery operation of the reception device may vary according to the location of MinimumMetadataUpdatePeriod. For example, MinimumMetadataUpdatePeriod may be included in a service list, a service, or a content guide. As described above, various locations and hierarchies may be provided.

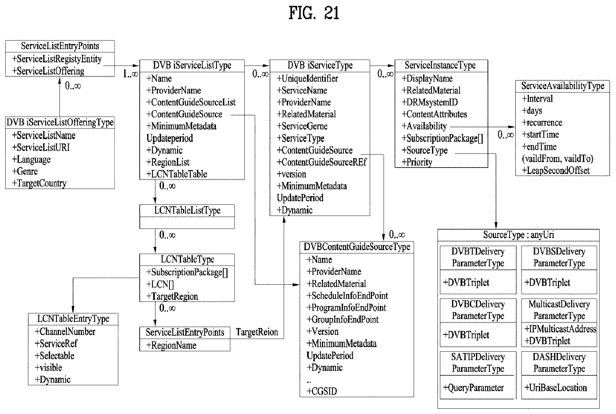

FIG. 21 shows a DVB-I service hierarchy according to embodiments.

FIG. 21 shows a DVB-I service list.

The service list according to the embodiments may have a hierarchical structure. The transmission device according to the embodiments generates a service list having the hierarchical structure according to the embodiments and transmits the same to the reception device, and the reception device provides a media service to the user based on the service list according to the embodiments.

The transmission device generates service information, and the reception device acquires service related information (e.g., service list information, content guide information, etc.) based on the service information.

### [DVB-I Service List Discovery schema]

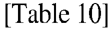

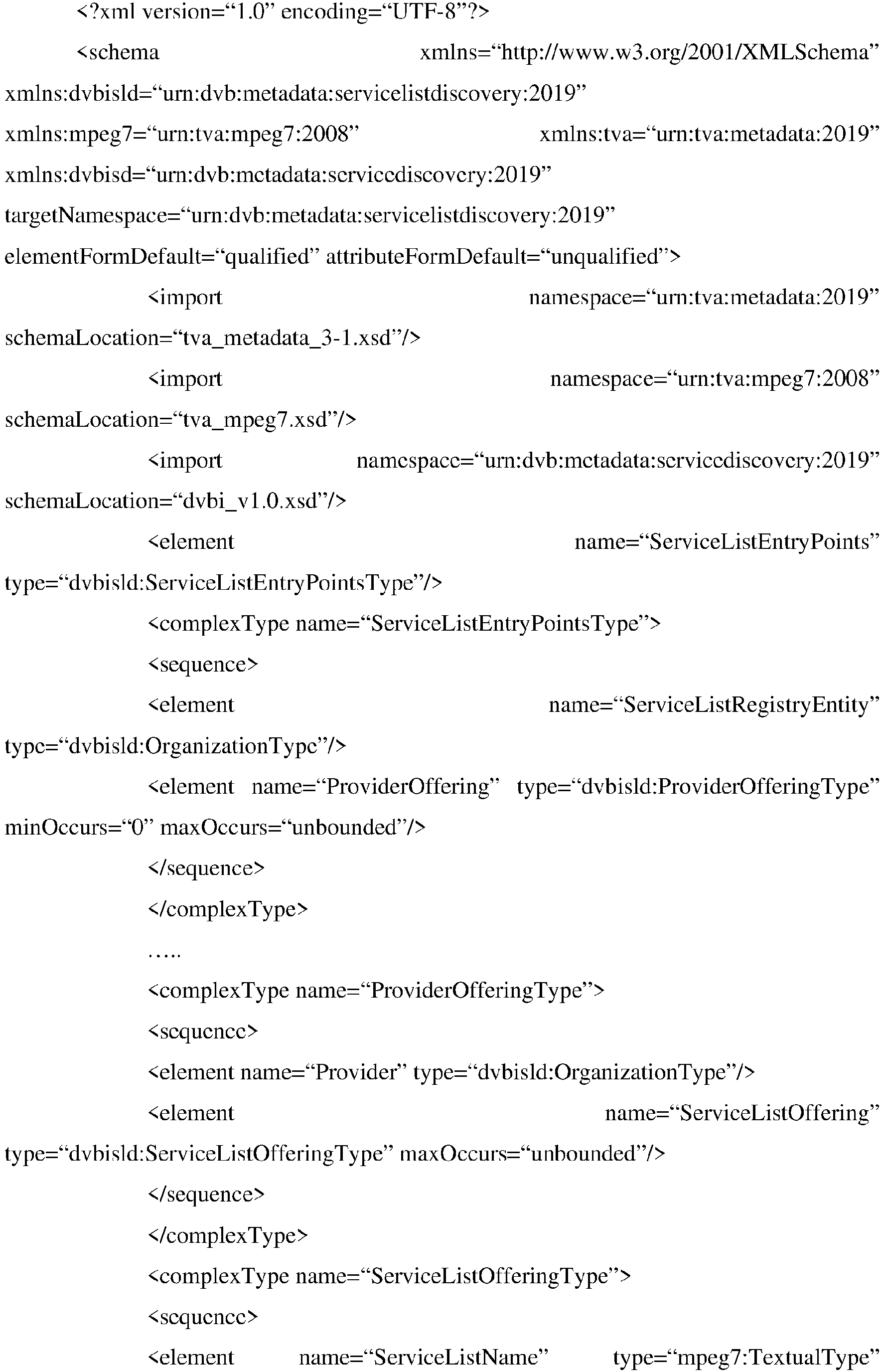

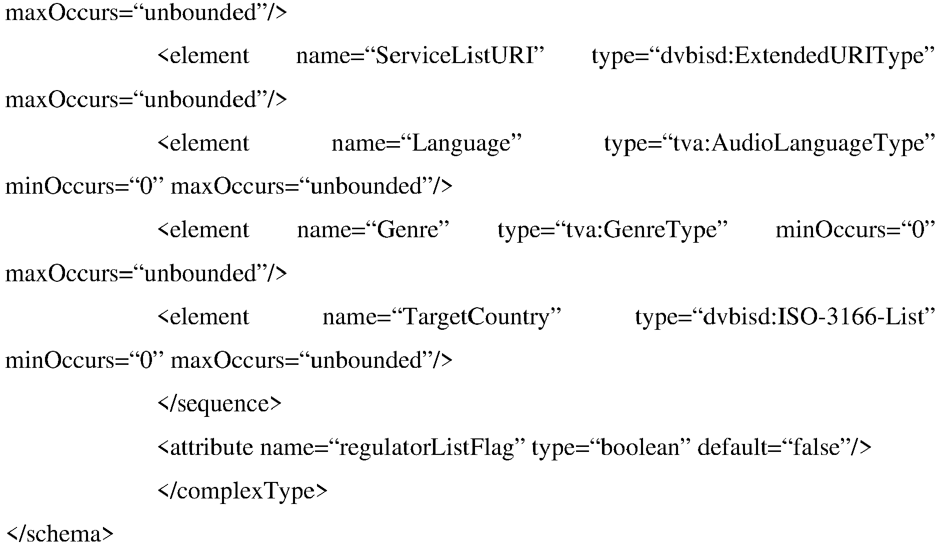

The table shows a DVB-I service list discovery schema according to embodiments. The reception device according to the embodiments may update the up-to-date information of the content guide, using the schema.

The DVB-I service list discovery schema includes @ServiceListURI for acuqring service list provider information and a service list according to ServiceListEntryPoints.

The reception device (DVB-I client) initializes the DVB-I service to acquire a service list, performs an HTTP request/response reception process through the service list address information (@ServiceListURI), and stores the received service list. Initialization of the DVB-I service and update of the service list and content guide may be performed through the corresponding execution process.

The DVB-I service list scheme hierarchy supports, through @MinimumMetadataUpdatePeriod, the operation of receiving service list metadata. Based on a DVB-I model according to embodiments, multiple DVB-I service lists and an individual service list may include multiple services or a service. Each single service may be allocated to a service instance according to the delivery source.

The content guide may be content guide information about the entire service list including the individual services, and may be defined through the ContentGuideSourceList. ContentGuideSource may be defined for each single service.

Cache-Control related to the expiration time in existing HTTP: The max-age header indicates the expiration period of the low layer of the HTTP level. It does not reflect the actual content on the DVB-I client or the update on the UI. Accordingly, @MinimumMetadataUpdatePeriod, which is an algorithm for indicating up-to-date information or issues such as over-running at the DVB-I client code level, is required for the DVB-I standard.

The operation of the content guide in the receiver corresponding to update of the service list may vary depending on the position of @MinimumMetadataUpdatePeriod in the service list scheme hierarchy.

The reception device checks the state of the service from the availability start time and end time of the currently ongoing service (or program, event) based on the availability value of the service instance level.

The reception device (client) may update new content guide data through a dynamic request and response according to the value of @PollingInterval rather than through the existing static content guide polling 59040 (see FIG. 60), starting at a point corresponding to a value obtained by subtracting @DynamicIntervalPeriodoffset (the starting point of dynamic polling) (see 600030, 600040, 600060, etc.) from the available end time.

The following is an example of dynamic polling.
@availability End Time="2020-02-19T10:42:02.684Z"
   (This indicates the end time of data that is currently played by the reception device.)
@DynamicIntervalPeriodoffset="5000"
   (This indicates that the reception device can perform dynamic polling from a time preceding the end time of the current data by 5000 time units (where the time unit may be hour, minute, second, or the like according to embodiments).)
@PollingInterval = "1000"
   (This indicates that the reception device dynamically polls the content guide information for the transmission device (server, processor, etc.) every 1000 time units.)
@version = 10 -> 11
   (When the version of static polling of the reception device is 10, the version of dynamic polling may be expressed as 11. The version may have various values according to embodiments.)

When a value of PollingIntervalType is included (that is, PollingIntervalType indicates dynamic),

At intervals of "1000" from a point corresponding to "2020-02-19T10:42:02.684Z" - "5000", the client may access through a query of @ScheduleInfoEndpoint (<ScheduleInfoEndpoint>?sid=12345&now_next=true) and update a new content guide.

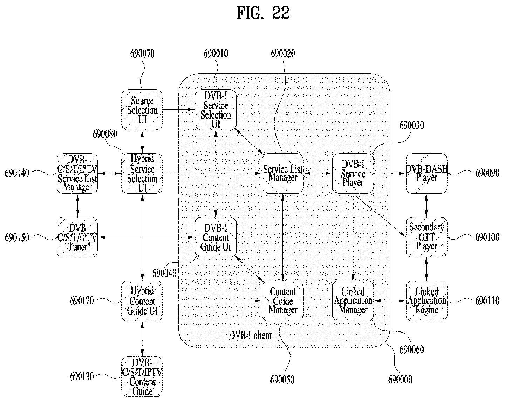

FIG. 22 shows a model of a DVB-I client according to embodiments.

FIG. 22 shows a structure of a reception device (client) and a structure between devices associated with the reception device according to embodiments.

The reception device 690000 acquires service-related information (e.g., service list information, content guide information, etc.) based on the service information as shown in FIGS. 45, 57, and 64 to 68.

The reception device 690000 is the reception device (client) according to the embodiments described herein. The reception device includes components described below. Each component corresponds to hardware, software, a processor, and/or a combination thereof.

The DVB-I service selection UI controller 690010 controls a service selection related UI of the reception device 690000. For information about the service selection related UI, the DVB-I service selection UI controller 690010 may exchange necessary data with a service list manager 690020 and a content guide UI controller 690040. The service selection UI controller 690010 may receive source data for the service selection UI from a source selection UI controller 690070.

The service list manager 690020 controls service list information (e.g., FIGS. 45, 57, 64, and 67). The service list manager 690020 may receive service selection UI information for a service list from a hybrid service selection UI controller 690080, and may exchange service list related data therewith. The service list manager 690020 may exchange service list data and/or service information with a service player 690030. The service list manager 690020 may exchange service list information and/or content guide information with a content guide manager 690050.

The DVB-I service player 690030 controls service play. The service player 690030 may provide a service to a DVB-DASH player 690090, a secondary OTT player 690100, a linked application engine 690110, and the like. The linked application engine 690110 may be an application that provides a service through control of a linked application manager 690060.

The DVB-I content guide UI controller 690040 controls a content guide related UI. The DVB-I content guide UI controller 690040 may exchange service selection UI related data, content guide UI related data, and content guide control related data with the service selection UI controller 690010 and the content guide manager 690050.

The content guide manager 690050 controls content guide processing performed by the reception device. The content guide manager 690050 may exchange service list related information, content guide control information, and hybrid content guide UI related information with the service list manager 690020 and the hybrid content guide UI controller 690120. Here, hybrid refers to a unit that supports integration between the DVB-I network and broadcast services such as existing terrestrial, satellite, cable, and IPTV. services

The linked application manager 690060 controls service play of an application of an additional device that may be linked to the reception device.

The DVB-C/S/T/IPTV content guide controller 690130 provides content guide information for the reception device for services of the DVB cable network, satellite network, terrestrial network, and IP network to the hybrid content guide UI controller 690120.

The DVB-C/S/T/IPTV service list manager 690140 controls service list information about the services of the cable network, satellite network, terrestrial network, and IP network. The DVB-C/S/T/IPTV service list manager 690140 may exchange the DVB-I service and cable network, satellite network, terrestrial network, IP network service list related information for hybrid with the hybrid service selection UI controller 690080.

A DVB-C/S/T/IPTV tuner 690150 receives broadcast services such as terrestrial, satellite, cable, and IPTV services. The tuner 690150 may exchange information for a service list with the service list manager 690140.

The reception device 690000 may provide a service list, content guide information, and the like for the DVB-I service to a user based on the model and embodiments of FIG. 67. The receiver 690000 may provide the DVB-I service and service guide information, and optionally provide the user with the cable network, satellite network, terrestrial network, and IP network services and service guide information in connection with a tuner configured to receive the cable network, satellite network, terrestrial network, and IP network services.

Embodiments of maintaining the up-to-date state of the DVB-I client 690000 will be described with reference to FIGS. 65, 66, and 69. Depending on the options according to the embodiments, the operation of the reception device may vary.

Option 1 (65000): The meaning and reception operation of signaling of the service list level are disclosed below.
@MinimumMetadataUpdatePeriod in the service list is a polling period in which information about the entire DVB-I service list including services may be updated.

The DVB-I client service list manager 690020 included in the reception device 690000 of FIG. 69 may manage the entire service list and manage the update of the service list.

Regarding the HTTP cache-control of the reception device 690000, a max-age value is static, and an expiry period is calculated.

When a value of @MinimumMetadataUpdatePeriod is defined, the service list may be updated. A query may be sent to a service list address (@ServiceListURI) defined in <DVB-I Service List discovery scheme>.

The query period of the service list may be dynamically changed through the value of @MinimumMetadataUpdatePeriod regardless of the max-age value of HTTP cache-control for @ServiceListURI.

The changed service list information may be transmitted through a content guide manager 670050, and an update period of a content guide may be dynamically set.

Options 2, 3, and 4 (65010): The meaning and reception operation of signaling of the service level are disclosed below.
@MinimumMetadataUpdatePeriod in a service is a polling period in which service information and ContentGuideSource of a DVB-I single service may be updated.

The DVB-I client service list manager 690020 of FIG. 69 included in the reception device 60000 may manage individual service information and manage updates of individual services. HTTP cache-control sets the max-age to static and calculates the expiry period. When @MinimumMetadataUpdatePeriod is defined, the service list update is performed.

HTTP cache-control for @ServiceListURI defined in <DVB-I Service List discovery scheme> may dynamically set and change the query period of the service list through @MinimumMetadataUpdatePeriod, regardless of the max-age value.

In addition, in order to acquire the latest information according to @MinimumMetadataUpdatePeriod defined, the content guide manager 690050 dynamically performs polling for a specific duration based on the @ContentGuideSource HTTP endpoint of the content guide corresponding to each service.

Options 5 and 6 (66020): The meaning and reception operation of signaling of the ContentGuideSource level are disclosed below.
@MinimumMetadataUpdatePeriod, which defines ContentGuideSource in the service, specifies a polling period in which ContentGuideSource of a DVB-I single service may be updated.

The DVB-I content guide manager 690050 dynamically performs polling in a specific duration using the HTTP endpoint in @ContentGuideSource of a content guide corresponding to each service according to the defined value of @ MinimumMetadataUpdatePeriod.

An example of the operation according to the embodiments is described below.
@availability End Time ="12345"

The end time of the currently serviced data may be 12345. When there is no over-running issue, the reception device may receive and reproduce the next service data after the reference time 12345 according to a predetermined schedule.
@ MinimumMetadataUpdatePeriod = 1000

The reception device may perform an update operation for receiving metadata including content, a list of services, and guide information every 1000, which is a set update period value.
@version = 1→2

The version may indicate an update or polling operation. When the version is changed from 1 to 2, this may indicate that the version is changed from static polling to dynamic polling.
@UniqueIdentifier = korea123

The reception device may receive a service and/or service information indicated by the unique identifier, korea123.

In this way, when the update period (@MinimumMetadataUpdatePeriod) is defined, the reception device (client) may send a query (e.g., <ScheduleInfoEndpoint>?korea123=12345&now_next=true) to the transmitting side according to the definition of a Now/Next filtered schedule request of the TV anytime of @ScheduleInfoEndpoint at intervals of "1000". Thereby, the reception device may access the server, processor, memory, etc. of the transmitting side, and update a new service and content guide required by the user at the corresponding time.
<attribute name="dynamic" type="boolean" default="false"/>

The transmission device may generate logical channels in corresponding LCNTableList and LCNTable in each service list according to the DVB-I service list hierarchy of FIGS. 45, 57, 64, and 67. The transmission device may provide an LCN channel for each service through @serviceRef, which is included in each LCNTableEntryType, in connection with @UniqueIdentifier of each service. The LCN channels connected to each service may define selectable/visible attributes according to channel attributes.

The content guide manager 690050 and the service list manager 690010 store the LCN channels of the DVB-I client in the channel database (DB) through a series of parsing and caching processes. In addition, they provide channel information to the user through a UI.

When the LCN list stored in the channel DB is not updated with the latest information, the UI aligned with the content information being played may not be displayed.

In order to present the correct information, the DVB-I content guide UI controller 670040 of FIGS. 45, 57, 64, 67, etc. indicate that dynamic polling is supported for the corresponding channel (e.g. the DVB-I channel) in the channel DB. For example, the indication may be provided based on a boolean attribute of @dynamic.

Through this information, the DVB-I LCN DB may pre-notify that a change may occur in a specific duration on a channel on which an LCN corresponding to a specific service may perform dynamic polling. Through this processing, the DVB-I client may create an interface that may update only a specific channel in the cached channel DB, and reflect the updated channel information on the UI through dynamic polling.

A channel DB, an LCN DB, etc. according to embodiments may correspond to a media processing device connected to the processor.

Method for acquiring the latest content guide information for each DVB-I service

### DVB-I service scheme

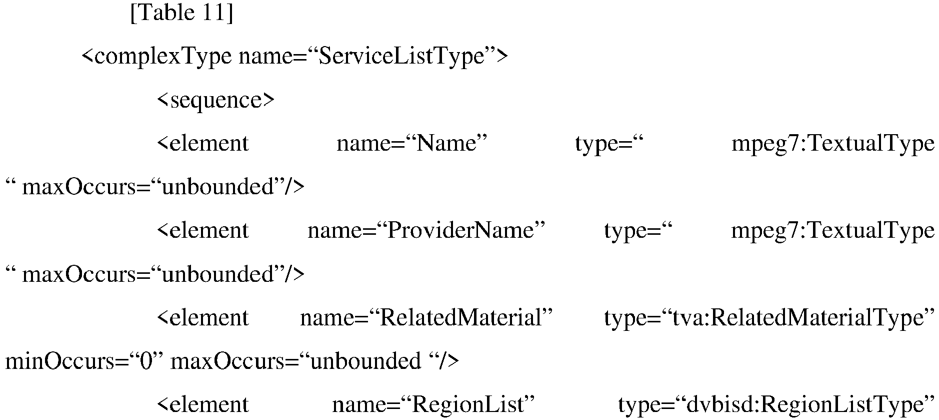

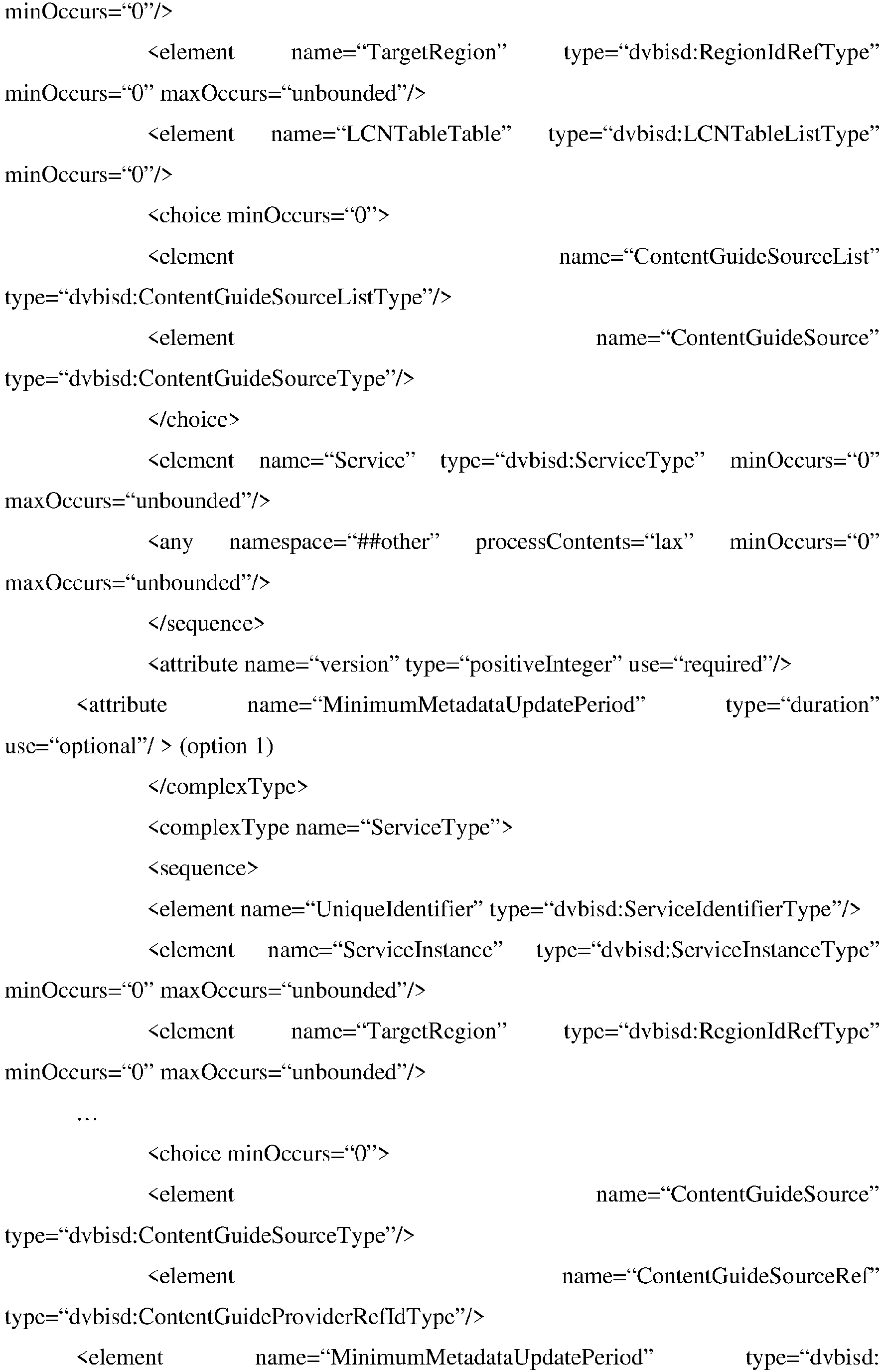

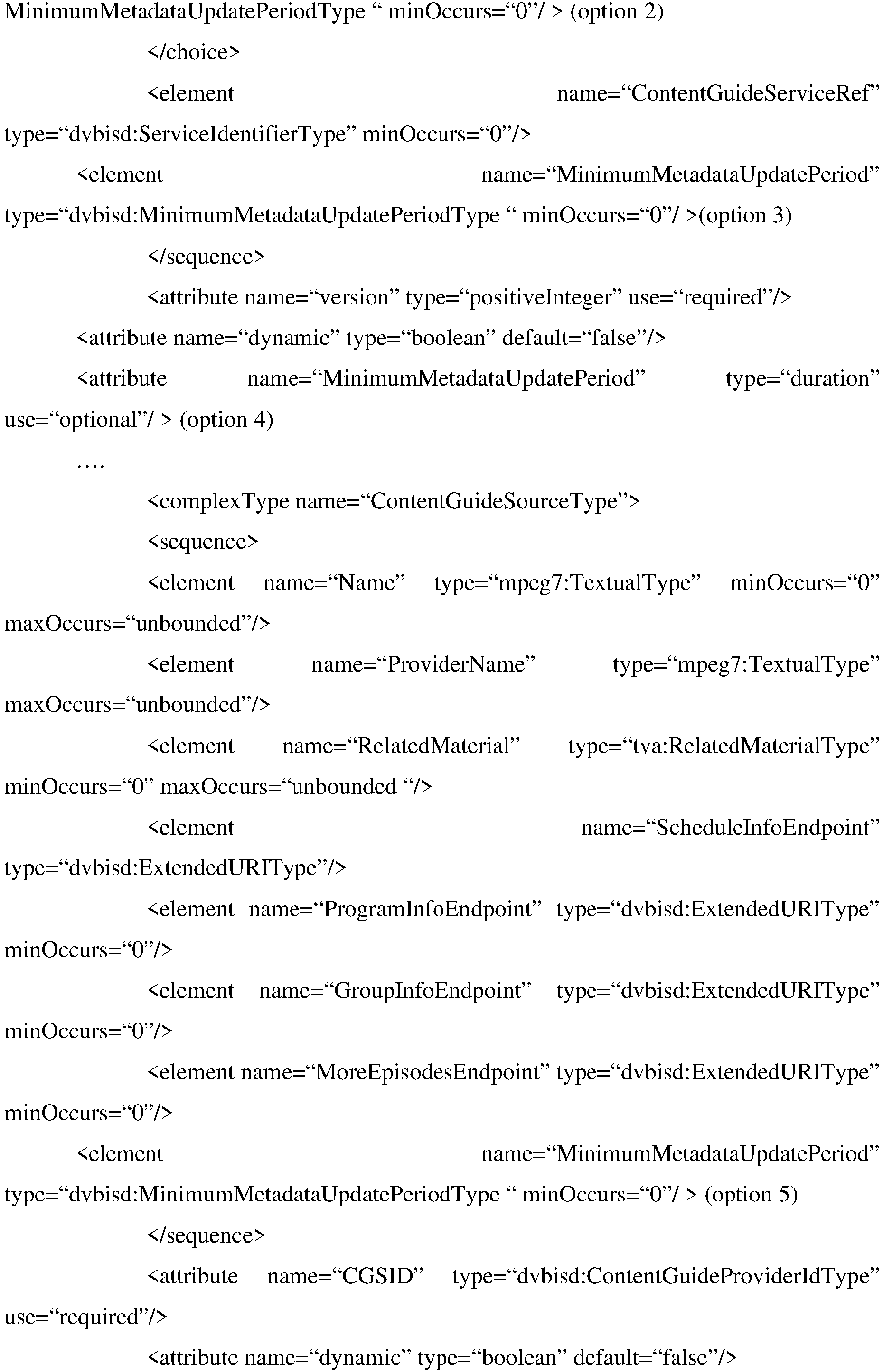

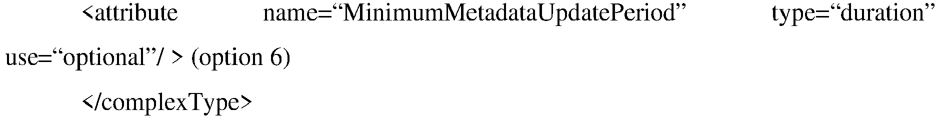

According to the DVB-I service scheme, there are two methods of receiving ContentGuideSource: (1) constantly receiving all ContentGuideSources in a defined interval of all services at the service list level, e.g., one of the following times of a day (0:00, 3:00, 6:00, 9:00, 12:00, 15:00, 18:00, 21:00); or (2) receiving ContentGuideSource information at the service level. In the two methods of requesting information, information is received according to the following method.

Example URL:
<ScheduleInfoEndpoint> ?sid=12345&now _next=true

As in the scheme above, @ScheduleInfoEndpoint may be defined in ContentGuideSourceType in the same manner. That is, the endpoint that may be received at the service list level and the endpoint that may be received at the service level should be defined equally, which is a limitation. Therefore, the reception interval should be defined identically at the service list and service levels. As described above, ContentGuideSouceList, ContentGuideSource, ContentGuideSourceType, and ScheduleInfoEndPoint are defined equally in the service list and service, and are thus limited to receive the same information.

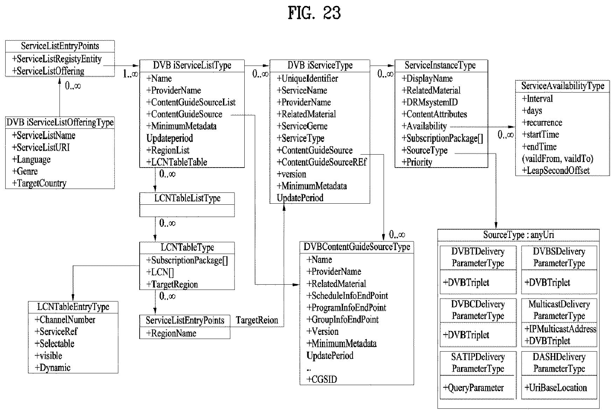

FIG. 23 shows a content guide source hierarchy according to embodiments.

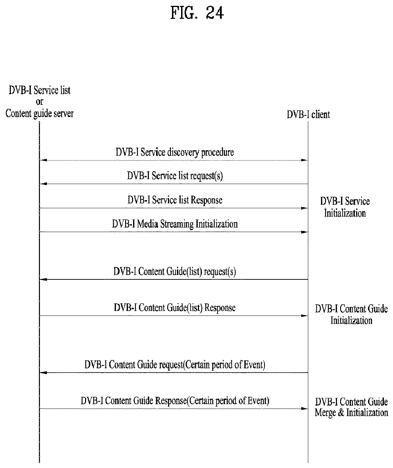

FIG. 24 is a flowchart illustrating DVB-I service initialization and content guide update according to embodiments.

Receiving now/next through ScheduleInfoEndpoint + sid of FIG. 23 is the same for all services. The limitation according to this feature is designed to make it impossible to request only update in a specific interval in updating a service. It is necessary to separate the endpoint for each service corresponding to each period, and add an endpoint for a specific individual period for each service.

FIG. 21 is a diagram illustrating the procedure of service initialization, content guide initialization and update between the DVB-I service server and the DVB-I client. As shown in the figure, the DVB-I service discovery, service list acquisition, DVB-I streaming initialization, and content guide initialization, performed in this order, may be applied through the current schema. However, at the current stage, updates of individual events and individual periods cannot be supported through the same content guide update, and therefore only the previously defined time window section should be applied equally to the service list level or service level, which is a limit. Therefore, a method for extending a DVB-I service scheme is proposed for the request and response operations.

It may be represented as a schema as follows.

### [Solution 1]

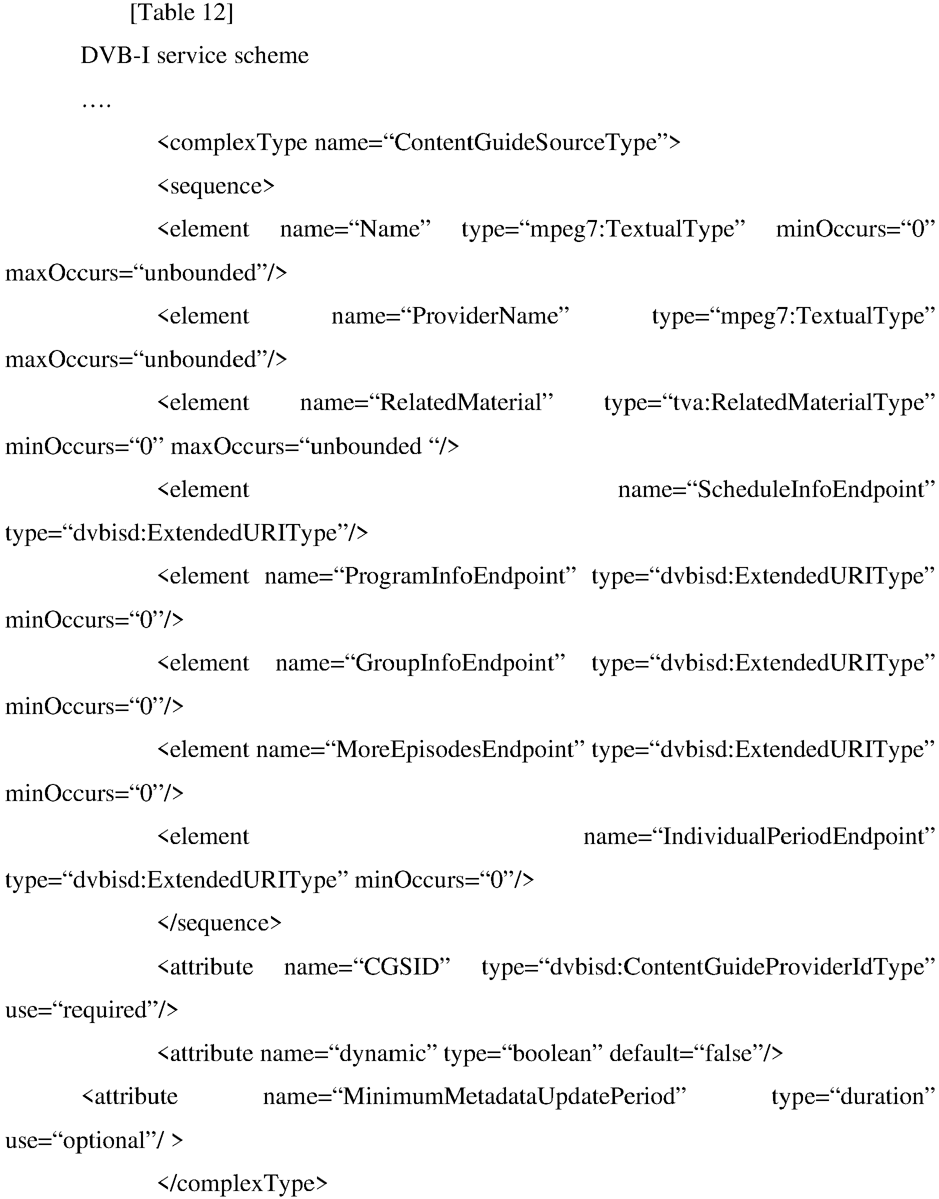

### [Solution 2]

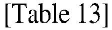

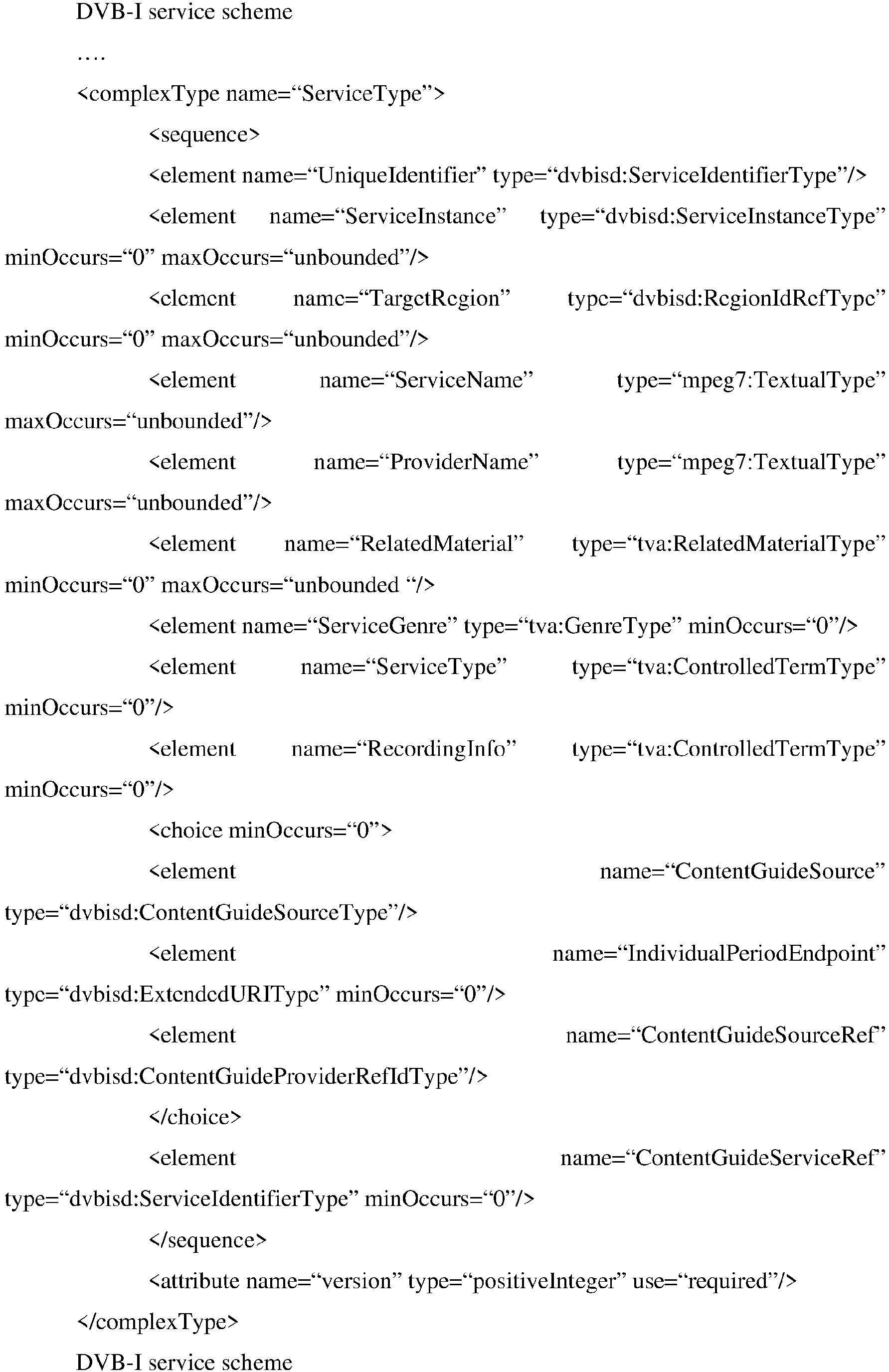

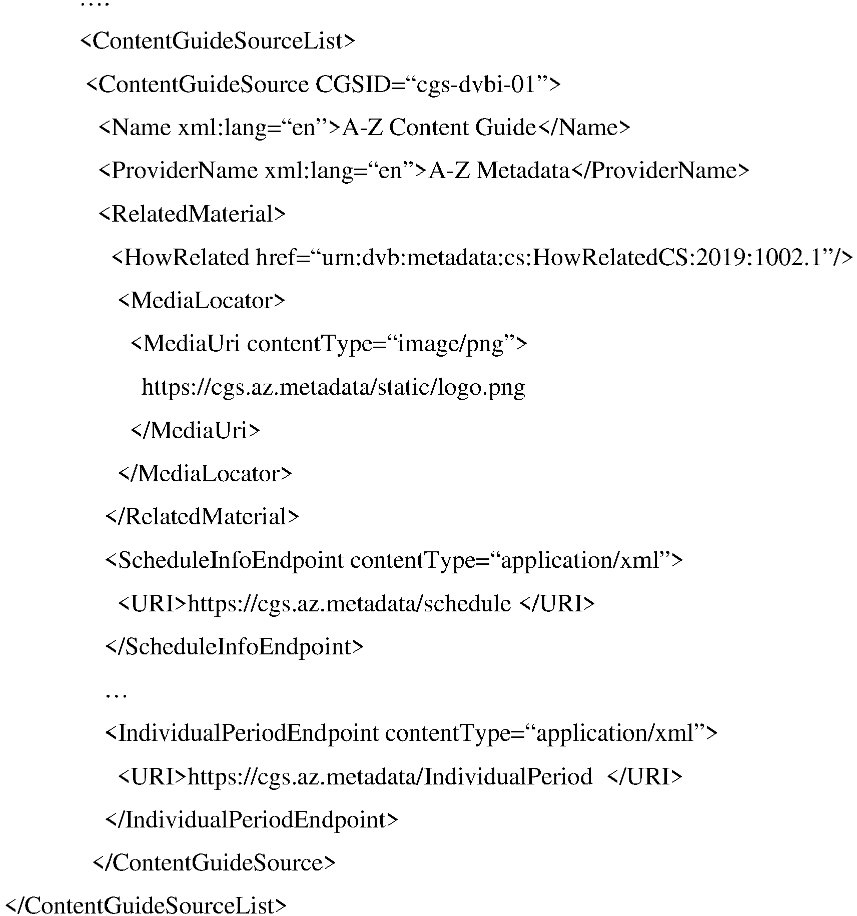

As an example of a DVB-I service list response according to embodiments, ContentGuideSource elements may be received. The DVB-I client is an endpoint to request content guide metadata between individual periods for each service, and may receive IndividualPeriodEndpoint. The client may generate the following string through IndividualPeriodEndpoint and request metadata information for each interval. [Embodiment 1] For example, it is assumed that the service with Service ID = 10 acquires information of Mar. 26, 2020, 21:00:00 to Mar. 27, 2020, 00:00:00, and Service ID = 11 acquires data of Mar. 26, 2020, 21:00:00 to Mar. 27, 2020, 03:00:00 (based on the unix time).
https://cgs.az.metadata/IndividualPeriod?start=1585224000&end= 1585234800&sid=10
https://cgs.az.metadata/IndividualPeriod?start=1585224000&end= 1585245600&sid=11

Information for each service may be generated, and data about each interval may be requested through the information.

[Embodiment 2] For example, it is assumed that the service with Service ID = 10 acquires information of the current time to Mar. 27, 2020, 00:00:00, and Service ID = 11 acquires data of the current time to Mar. 27, 2020, 03:00:00 (based on the unix time).
https://cgs.az.metadata/IndividualPeriod?sid=10&now&end=1585234800
https://cgs.az.metadata/IndividualPeriod?sid=11&now&end= 1585245600

### DVB-I Client Technical Improvements To Support Multiple Service Lists

In this DVB-I conceptual model, the respective interfaces represent a series of operations performed for the DVB-I client to perform service discovery and receive a media stream corresponding to each service. The description of each interface is given below. The reception device according to the embodiments may provide the above-described effect of the present disclosure by performing the DVB-I service list discovery and the registry entity access, and the transmission device according to the embodiments may allow the reception device to perform these operations by providing signaling of multiple service lists.

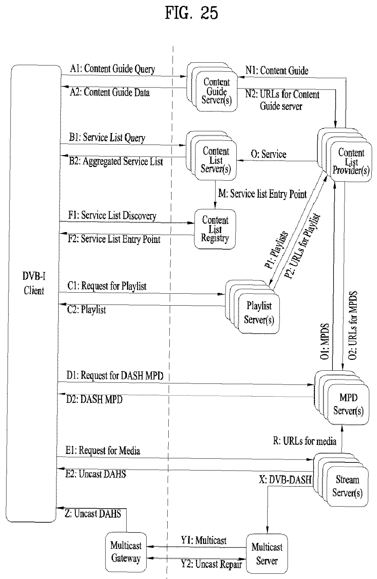

FIG. 25 shows a DVB-I model according to embodiments.

DVB-I Client: A DVB-I client, which corresponds to a media data processing device according to embodiments.

Service List Registry: May provide a list of service list servers to the client. The list may be provided based on query parameters.

Service List Server(s): A server that delivers service lists to the client. A separate service list server may aggregate service list fragments from multiple content and service providers.

Content Guide Server(s): may respond to requests from the clients for content guide data. Content guide servers for individual DVB-I services may be referenced in the service list entry for the service.

Content/Service Provider(s): may provide DVB-I services.

Playlist Server(s): may provide a playlist for services that reference a playlist of DVB-DASH content items rather than directly referencing a single DASH MPD.

MPD Server(s): may provide DASH MPDs.

Stream Server(s): may provide DASH media segments to the DVB-I client.

Multicast Server: A server for adaptive bitrate multicast.

Multicast Gateway: A gateway for adaptive bitrate multicast.

A1: Content Guide Query: A content guide query. This means a request from the DVB-I client to the content guide server.

A2: Content guide data
B1: A service list query. It is a request from the DVB-I client to the service list server. The DVB-I client may request a full list of services. The service list may be a locally filtered or pre-filtered list.

B2: An aggregated service list.

C1: A request for a playlist. It may be an HTTP GET request.

C2: A playlist.

D 1: A request for DASH MPD. It may be an HTTP GET request.

D2: DASH MPD: A DASH MPD according to the ETSI TS 103 285 standard.

E1: A request for media. It may be an HTTP GET request.

E2: Unicast DASH: According to ETSI TS 103 285 [1].

F1: A request for determining the entry point(s) of the service list server(s). This request may support a query for performing a selection within a service list discovery.

F2: A list of service list entry points that match a request criterion.

N1: Content guide data.

N2: URLs of the content guide server. URLs for content guide data about each of the services of the service providers and the content contained in the service list entry for the service of interface O
M: Registration of service list entry points with service list servers.

O: Service records. It is data about DVB-I services provided by a single content/service provider.

P1: A playlist.

P2: URLs for playlists. URLs are for playlists included in the service list entry for the service for interface O.

Q1: DASH MPDs according to the ETSI TS 103 285 standard document.

Q2: URLs for DASH MPDs included in the playlist for the service of interface P1 or the service list entry for the service of interface O.

R: URLs for media. This is URLs for media included in DASH MPDs.

X: may be a Pin' or Oin interface in the DVB A176 standard. It is information related to a flow of DASH media data to a multicast server.

Y1: Multicast. It may be interface M in the A176 standard. It may be information related to a flow of DASH media data on multicast.

Y2: Unicast repair. It may be information related to a flow of DASH media data on unicast for repairing data lost from interface Y1. It may be interface U in the DVB A176 standard document.

Z: Unicast DASH. It is interface related information from the DVB-I client to the multicast gateway according to ETSI TS 103 285 document. It may be interface L in DVB A176.

The DVB-I client, which is a media data processing device according to embodiments, may correspond to a DVB-I player, a TV device, a 2nd device, or the like.

In the DVB-I standard, interfaces F1 and F2 perform service discovery and receive service list entry points in response thereto. In addition, according to processes B1 and B2, a curated list may be received by reflecting the user's language, country, region, preference, and the like.

Thereby, service aggregation may be implemented. The DVB-I client may propose selection of service list servers and aggregate service lists from multiple service list servers.

DVB-I client may provide selection of service list servers and may aggregate service lists from multiple service list servers. In addition, the DVB-I client may make a first access after being installed, and perform processes F1 and F2 to show a list of lists of service list servers as follows:
1. The manufacturer of the device executing the DVB-I client may provide such devices.
2. National or regional regulators that provide information for the benefit of clients operating in the relevant countries and regions
3. Operators or platforms for clients
4. Central service list registry (CSR) that operates for the benefit of all devices running a DVB-I client that provides information about service lists.
5. A third-party service list aggregator.

There are methods to operate the service list registry as disclosed above. As in the fourth case, according to the function of DVB-I CSR, the DVB-I service list provider or service providers may register a service in the CSR and may display a list of registered lists according to the acquired information when DVB-I performs bootstrapping through F1. The user may select a service list based on the lists of the registered lists and directly handle the service list through filtering criteria such as user preference and country/language/region.

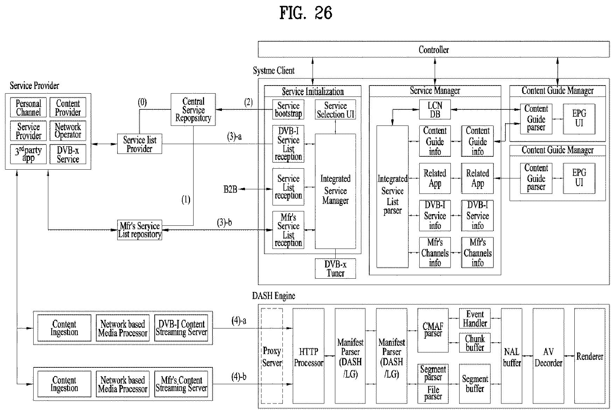

FIG. 26 shows a DVB-I service architecture for supporting a manufacturer service list according to embodiments.

When the manufacturer implements the DVB-I client, the service list provider may serve to register Mfr service lists, collect the services, manage the entire registry, and curate a service list. A diagram of a service discovery architecture supporting these operations is shown in FIG. 23. Each component of FIG. 23 may correspond to hardware, software, a processor, and/or a combination thereof.

### Extension of manufacturer service list repository supporting service discovery entity

The manufacturer service list supporting DVB-I service architecture shown in FIG. 23 includes a DVB-I client, a service provider, a streaming server, a CSR, and a service list provider repository. The role and receiver operation of each module are disclosed below.

DVB-I client: consists of a system client and a DASH engine, wherein the system client aggregates and curates several service lists through the service bootstrapping, service list discovery, and service manager. In addition, it manages a channel DB assigned in each service list, and performs content guide and app launching. The DASH engine receives HTTP and DASH delivery and performs decoding and rendering.

Service provider: Entities capable of providing content, including OTT companies such as Disney, Fox, Netflix, Hulu, and Amazon Prime, MNO or IPTV operators, and personal channel operators, provide content to list providers.

Service list provider repository: List providers curate lists and register the same in the DVB CSR.

CSR: The first bootstrap location of the DVB-I client, where the list of lists is managed.

Each interface has a function as described below.
[Interface 0]: List providers curate lists and register the same in the DVB CSR.
[Interface 1]: Mfr also operates a repository to manage a list, and registers the list in the DVB CSR.
[Interface 2]: After a DVB-I service is launched and a DVB-I service discovery query is sent, the interface shows list entries filtered according to user language, country, region, and postcode through a series of bootstrap processes. It receives service entities adapted to the user selection or environment and ServiceListURI for accessing the service entity repository.
[Interface 3-a]: Receives DVB-I service lists through ServiceListURI for accessing the service list repository.
[Interface 3-b]: Receives a service list of Mfr through ServiceListURI for accessing the service list repository.
[Interface 4-a]: Receives content by requesting a receivable instance of each service in the DVB-I service list
[Interface 4-b]: Receives content by requesting a receivable instance of each service in the DVB-I service list
   Embodiment 1) https://csr.dvbservices.com/query?TargetCountry=ITA&regulatorListFlag=true

When a DVB-I service discovery query is sent to the CSR, the CSR provides DVB-I service discover data and ServiceListURI as follows. The DVB-I client accesses https://dvbi.TVfromTheWorld.com/engTVservices.xml to receive a service list.

**[Table 14]**

| |
|---|
| <ServiceListURI contentType="application/xml"> |
| <dvbisd:URI>https://dvbi.italian-authority.it/trusted-services.xml</dvbisd:URI> |
| </ServiceListURI> |

Embodiment 2) https://dvbisr.private-service-list-registry.com/query?ServiceListName=LGchannels. When a DVB-I service discovery query is sent to the CSR, the CSR provides DVB-I service discover data and ServiceListURI as follows. The DVB-I client makes an access through https://www.LgChannels/dvbmfr/UK/servicelist.xml to receive a service list.

**[Table 15]**

| |
|---|
| <ServiceListURI contentType="application/xml"> |
| <dvbisd:URI>https://www.LgChannels/dvbmfr/UK/servicelist.xml</dvbisd: URI> |
| </ServiceListURI> |

In this case, the DVB-I service discovery information may be composed of information disclosed below, and each service list entity may be defined.

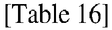

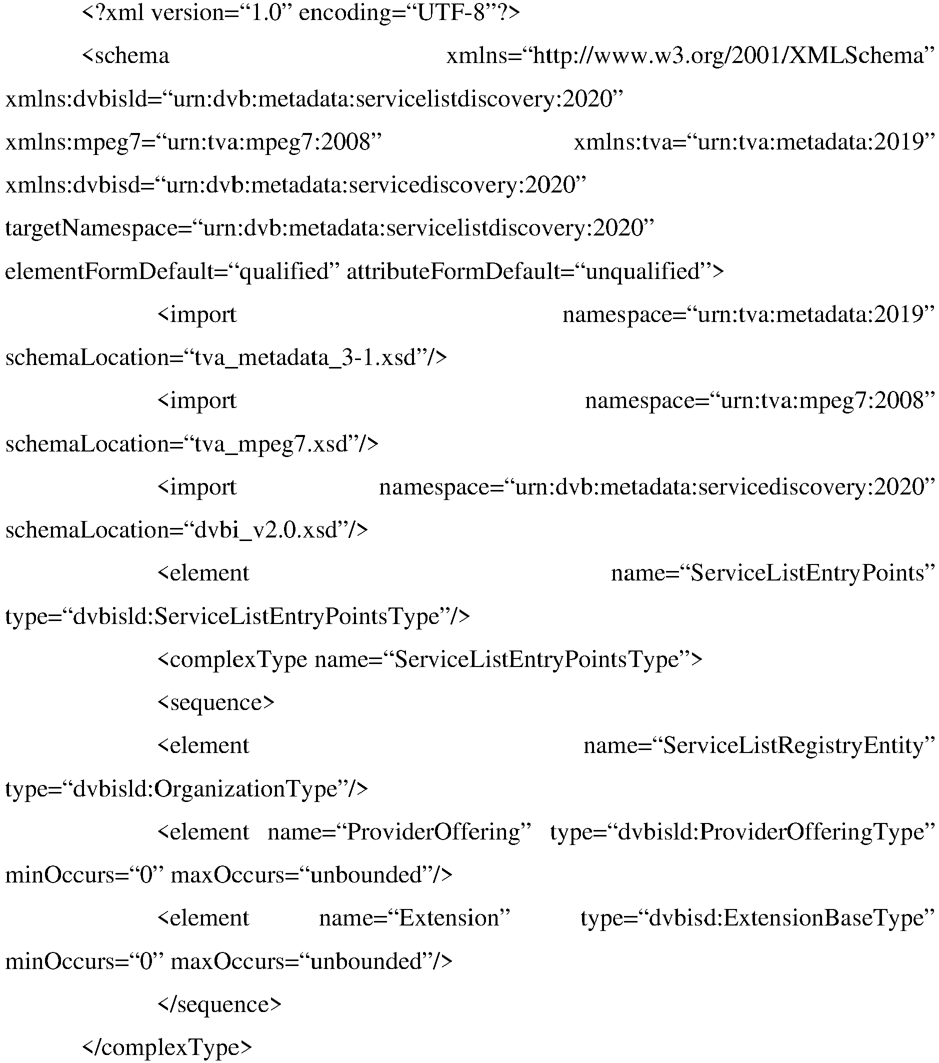

The DVB-I service list discovery scheme may define provider offering information that provides service list registry and a service list as described above. As shown in FIG. 18, in providing a service as a separate mfr-only service provider entity, the offering information of mfr in service discovery and information for querying whether the service list provided by mfr is receivable should be extended. It is necessary to extend the capabilities information for checking whether the Mfr service list can be supported. The following syntax may be extended using the extension in the current DVB-I service list discovery scheme. The specific syntax and semantics of mfrServiceListRegistryEntity are given below.
OSName: Supportable OS version and name
ServiceCode: Supportable service code within the device
TargetLocation: A target location where the device is made, e.g., UK, Nordic
Sourcelocation: A location of a streaming server that provides each service
PublishedDate: Service list publish data
ReleasedDate: Service list release data
Manufacturer: A service list implementation company
ManufacturerURL: URL of the service list implementation company
ServiceDescription: A brief description of the service list. Example: List indicating text
ServiceReport: A service list issue or consumption report
FirmwareUpgrade
Version: Firmware version number that the platform should support
UpdateLocationURL: URL accessible for firmware update
ServiceAvailability
Version: The current version in which the service list is provided.
ServiceAvailabilitySearchURL: URL for moving to a web page where service search is available such that additional services provided by the service list provider may be added
ServiceAvailabilityDBUpdateURL: Link URL for service data base update. Schema to support XML update based on IETF RFC 5261 is downloaded, and fetching may be performed through the corresponding information.

The syntax of embodiments based on such semantics is configured as follows.

**[Table 17]**

| |
|---|
| <?xml version="1.0" encoding="UTF-8"?> |
| < !DOCTYPE xml> |
| <!-- Example of ServiceListEntryPoint published by a DVB-mfr Servicelist Server - -> |
| <ServiceListEntryPoints xmlns="um: dvb :metadata: servicelistdiscovery :2020" |
| xmlns:xsi="http://www.w3.org/2001/XMLSchema-instance" |
| xsi: schemaLocation="urn:dvb:metadata:dvbmfr- |
| extensions:2020 ../dvbmfr_extensions_v1.0.xsd" xsi:dvbmfr="urn:dvb:metadata:dvbmfr-extensions:2020" |
| xmlns: dvbisd="um: dvb :metadata: servicediscovery :2020" |
| xmlns:tva="urn:tva:metadata:2019"> |
| //DVB-I discovery scheme compatible |
| <ServiceListRegistryEntity> |
| <Name>DVB-I Manufacturer Server Registry</Name> |
| </ServiceListRegistryEntity > |
| < ProviderOffering > |
| <Provider> |
| <Name>DVB-I Manufacturer Server #1 </Name> |
| </Provider> |
| < ServiceListOffering > |
| ServiceListName>LG channels </ServiceListName> |
| ServiceListURI contentType="application/xml"> |
| <dvbisd:URI>https://www.LgChannels/dvbmfr/UK/servicelist.xml</dvbisd:URI> |
| </ServiceListURI> |
| <Language> Eng </Language> |
| <TargetCountry> UK </TargetCountry> |
| </ServiceListOffering> |
| </ProviderOffering> |
| <!-- Attributes to check whether the list can be received --> |
| <Extension xmlns:dvbmfr="urn:dvb:metadata:dvbmfr-extensions:2020" |
| xsi:type="dvbmfrx:mfrServiceListEntryPointsType" extensionName="DVB-I mfr"> |
| <dvbmfr:mfrServiceListRegistryEntity specVersion="1"> |
| //addtional information for mfrs |
| <dvbmfr:OSName> webOS 4.5 </dvbmfr:OSName> |
| <dvbmfr:ServiceCode> 55UM7811C3NA. AKRYLH |
| </dvbmfr:ServiceCode> |
| <dvbmfr:TargetLocation> UK enable </dvbmfr:TargetLocation> |
| <dvbmfr:Sourcelocation> UK WeyBridge </dvbmfr:Sourcelocation> |
| <dvbmfr:PublishedDate> 2020.2 </dvbmfr:PublishedDate> |
| <dvbmfr:ReleasedDate> 2019.11 </dvbmfr:ReleasedDate> |
| <dvbmfr:Manufacturer>LG Electronics</dvbmfr:Manufacturer> |
| <dvbmfr:ManufacturerURL> https://www.lge.com |
| </dvbmfr:ManufacturerURL> |
| <dvbmfr:ServiceDescription> LG channels Dec 2019 version |
| </dvbmfr:ServiceDescription> |
| <dvbmfr:FirmwareUpgrade> |
| <dvbmfr:Version> 1.1 </dvbmfr: Version> |
| <dvbmfr:UpdateLocationURL |
| contentType="application/xml"> |
| <dvbisd:URI> |
| https://www.LgChannels/FirmwareUpgrade/upgrade.xml </dvbisd:URI> |
| </dvbmfr:UpdateLocationURL> |
| </dvbmfr:FirmwareUpgrade> |
| <dvbmfr:ServiceAvailability> |
| <dvbmfr:Version> 1 </dvbmfr: Version> |
| <dvbmfr:ServiceAvailabilitySearchURL contentType="application/xml"> |
| <dvbisd:URI> |
| https://www.LgChannels/dvbmfr/ServiceSearchURL.html </dvbisd:URI> |
| </dvbmfr:ServiceAvailabilityMapIdleURL> |
| <dvbmfr:ServiceAvailabilityDBUpdateURL |
| contentType="application/xml"> |
| <dvbisd:URI> |
| https://www.LgChannels/dvbmfr/ServiceAvailabilityMapUdpade.xml </dvbisd:URI> |
| </dvbmfr:ServiceAvailabilityDBUpdateURL> |
| </dvbmfr:ServiceAvailability> |
| <dvbmfr:ServiceReport> |
| https://my.lgChannels.com/ServiceReport/list/main </dvbmfr:ServiceReport> |
| </dvbmfr:mfrServiceListRegistryEntity> |
| </Extension> |
| </ServiceListEntryPoints> |

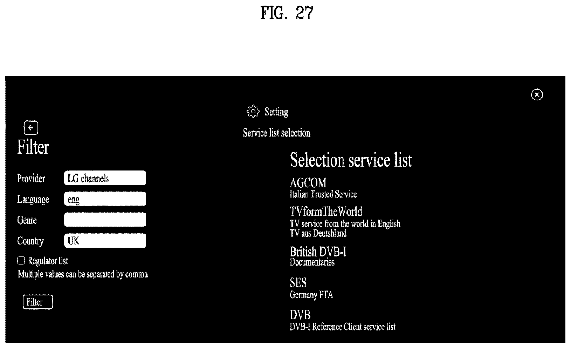

FIG. 27 illustrates a service list selection UI/UX according to embodiments. According to the semantics and syntax according to the embodiments, the media data processing device according to the embodiments may display service list related information as shown in FIG. 27.

Regarding the service list, a service list may be selected based on a provider, language, genre, country, and the like.

A service discovery entity supporting a manufacturer service list repository may be added, and a specific manufacturer service list may be filtered through a provider. As in the embodiment, the UK supported LG channels service may be consumed.

### Channel conflict issue when multiple service lists are received

DVB-I receives service list-based services, and each service list is operated and managed by a specific repository. The repository providing the existing DVB broadcasting list may define the DVB-I service list using the LCN allocation method based on the country or specific region due to the characteristics of the current European broadcasting service. On the other hand, specific DVB-I service list providers collect independent services regardless of region and define the LCN list, and accordingly LCN allocation may be set as desired by the service list provider. Therefore, in this background, there is a potential issue of channel conflict when the DVB-I client receives and aggregates multiple service lists.

### Use case 1 occurring when aggregating multiple service lists

**[Table 18]**

| Service list | Service ID | LCN | Legacy | Content |
|---|---|---|---|---|
| List Provider name A | Sid = s01 | 13 | 13 | News |
| List Provider name B | Sid = s01 | 13 | 13 | News |
| List Provider name C | Sid = s02 | 14 | 14 | Drama |
| List Provider name D | Sid = s05 | 15 | 15 | TV show |

Use case 1 distinguishes a service list, each Service ID, an LCN to be assigned to the service list, an LCN used on the legacy TV, and actual content, and means that the services and channels assigned to each service list are allocated. In Use case 1, when different lists List A and List B are received, the Sid/LCN is allocated identically and the contents are the same. Accordingly, when the four service lists are aggregated, the service may be provided without an issue. Use case 2 occurring when aggregating multiple service lists

**[Table 19]**

| Service list | Service ID | LCN | Legacy | Content |
|---|---|---|---|---|
| List Provider name A | Sid = s01 | 10 | 10 | News |
| List Provider name B | Sid = s03 | 10 | | Drama channel |

Case 2 is the case of multiple service providers + different service IDs + the same LCN. This is a case where different services are allocated to one LCN and thus a collision occurs therebetween. Use case 3 occurring when aggregating multiple service lists

**[Table 20]**

| Service list | Service ID | LCN | Legacy | Content |
|---|---|---|---|---|
| DVB-T | Sid = s01 | 10 | 10 | Movie |
| List Provider name A | Sid = s01 | 10 | 10 | Movie |
| List Provider name B | Sid = s13 | 10 | - | News |

Case 3 is a case of DVB-T + multiple service providers + same service ID + different LCNs. This case may occur when a hybrid environment of DVB-T and List A and multiple service providers have the same service ID assigned, and service list C is assigned the same LCN. Use case 4 occurring when aggregating multiple service lists

**[Table 21]**

| Service list | Service ID | LCN | Legacy | Content |
|---|---|---|---|---|
| List Provider name A | Sid = s01 | 9 | 9 | BBC News |
| List Provider name B | Sid = s20 | 9 | 9 | KBS News |

Case 4 represents a case of multiple service providers + different service IDs + same LCN, and may occur when the local country/region service list and the immigrant's country list are aggregated. In the cases according to the embodiments, there is a potential LCN conflict issue when service lists are merged. In order to address this issue, the DVB-I standard is extended as follows such that the media data processing device according to the embodiments may perform reasonable allocation without LCN conflict.

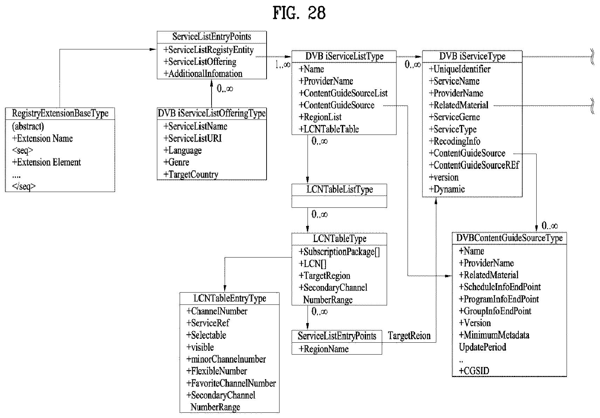

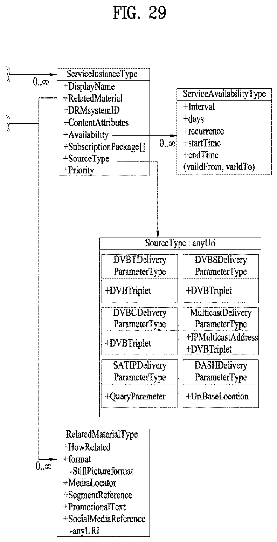

FIG. 28 and 29 show an LCN table entry type extension according to embodiments.

A service list integration operation is performed by an integrated service manager that receives and integrates DVB-I service lists according to embodiments. An LCN table received through a country/region or a meaningful package is defined through a target region or a subscriptionPackage in each received service list. In FIGS. 28 and 29, when a conflict occurs due to extension of the LCN table, allocation of a reasonable integrated channel may be enabled through corresponding information. Details of XML xsd are disclosed below.

The transmission/reception method/device according to the embodiments may address the issue of channel conflict occurring in receiving multiple service lists, based on the element(s) included in an LCN table described below. The transmission device according to the embodiments may generate and transmit information including element(s) included in the LCN table, and/or may allocate and manage an integrated channel through the integrated service manager (which may be referred to as a manager, a controller, or the like) that receives and integrates DVB-I service lists included in (or connected to) the reception device according to the embodiments. In addition, the processor according to the embodiments may control the service list integration operation based on a memory that stores an instruction for the integrated channel allocation operation according to the embodiments, a controller, or the like. The LCN table may be referred to as LCN information or the like, and the elements included in the LCN table may be referred to as first information, second information, and the like.

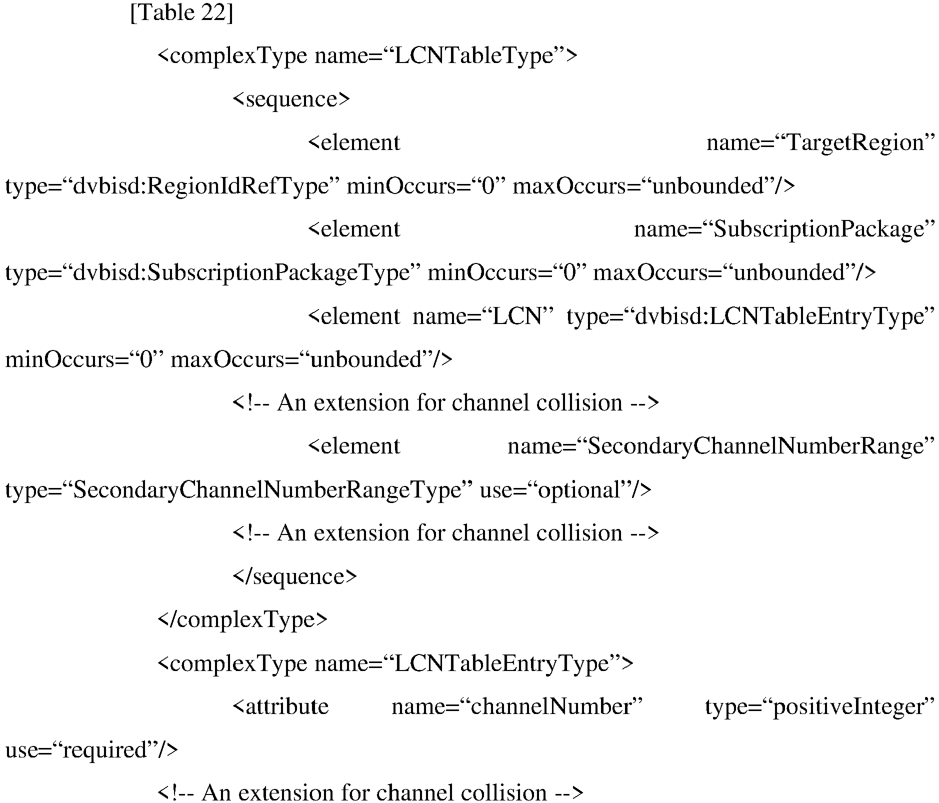

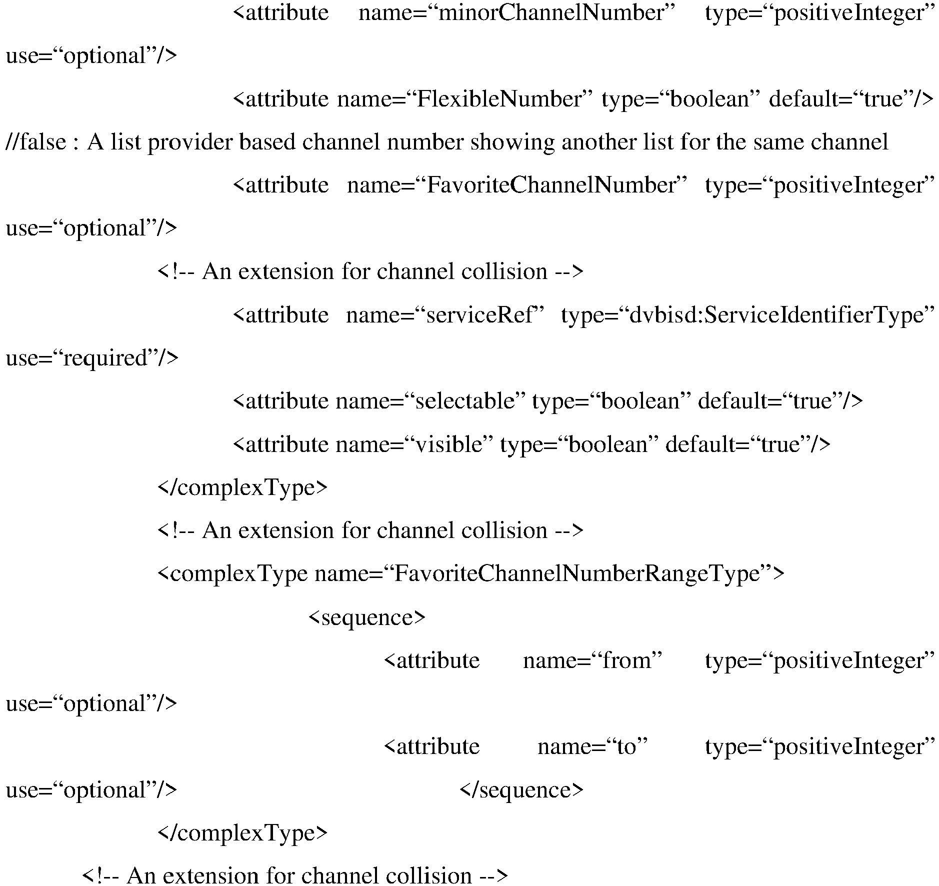

minorChannelNumber: Allocating sub-channels of the LCN channel. Example) 7-1, 100-1 FlexibleNumber: In the set state, the existing channel number is shown in the channel banner and distinguished by the name of the service list provider. Example) Differentiation by different service provider names and text colors
FavoriteChannelNumber: A favorite channel number other than the channelNumber defined when a collision occurs
SecondaryChannelNumberRange: A range in which LCN allocation may be performed when a collision occurs.

The priority of the service list is set based on the region or country selected by the user for the first time, or a geographical region at the time when the DVB-I client is currently installed. In addition, when services are integrated, it is considered as a lower priority. The receiver may store the list as a prioritized list to manage lists received later.

The DVB-I client may provide a channel allocation guideline to the user using the corresponding information, and the channel number may be directly reassigned according to the user's intention.

When a user living in Switzerland receives service list 1, which is a Swiss service list, and the DVB-I client receives an additional list, service list 2, ServiceRef information connected to a unique identifier within each DVB-I service and a channel number to be displayed on the screen are received. When the allocated channel number = 0 of the two lists is defined as the same number and thus a channel conflict occurs, the DVB-I client has a problem in processing the same channel. In this regard, the channel duplication issue may be addressed by allocating number 1000 through the favorite channel information extended in the present disclosure.

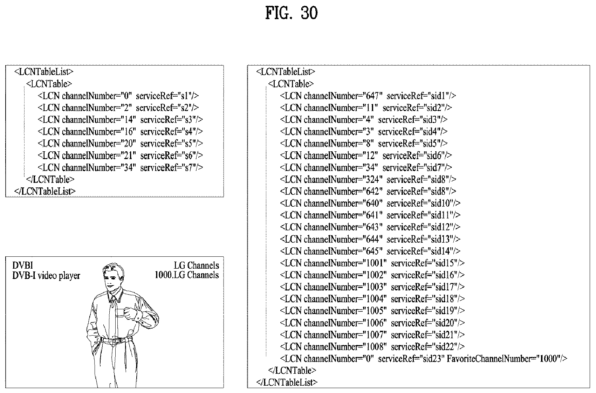

FIG. 30 shows an example of resolving service channel conflicts according to embodiments.

As described above, the DVB-I client may address the issue of channel conflict while newly allocating 1000 to an issue occurring on (channel 0, Sid23) in service list 2.

### Embodiment 2

As in Embodiment 2, when service list 1 and service list 2, and n lists, which are user's local lists, are received, a conflict may occur among channel numbers 100 to 108. When it is assumed that service list 1 has a higher priority based on the user's residential area, the conflicting channel number of Service list 2 needs to be reallocated. In this case, for the conflicting channels, the conflicting channel numbers may be reallocated through the information of SecondaryChannelNumberRange. As shown in the result, conflicting channel numbers 100 to 108 may be newly allocated starting from number 1000 according to the SecondaryChannelNumberRange.

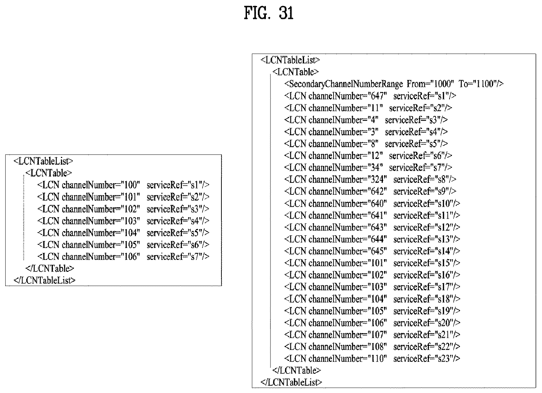

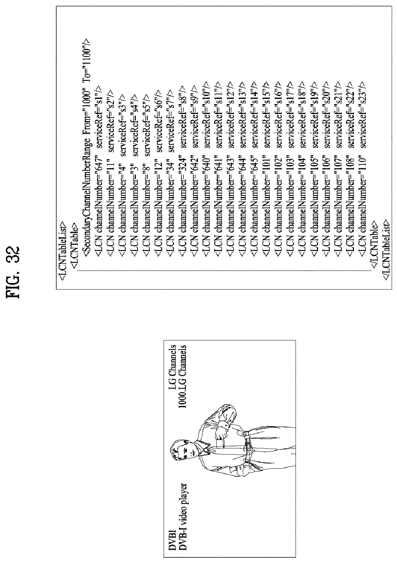

FIGS. 31 and 32 show an example of resolving a channel redundancy issue according to embodiments.

When there is the same overlapping channel as in the embodiment, a channel may be allocated to an unasigned number during a specific interval according to the definition of SecondaryChannelNumberRange. In this regard, when the channel number ordering is assigned to an unassigned channel within the SecondaryChannelNumberRange:
(1) the values of SecondaryChannelNumberRange may be mapped in ascending order of ChannelNumber that requires reallocation due to a channel conflict; or
(2) if it is difficult to define the values in ascending order or if ChannelNumber is not defined correctly, the leading number or string sequence may be sequentially allocated in alphabetical order based on the string value of ServiceRef in a single list according to order of reception in the DVB-I client.

Also, when channel information is defined for both FavoriteChannelNumber and SecondaryChannelNumberRange, which are information that may be reassigned when channels overlap, the channels are allocated by assigning a higher priority to FavoriteChannelNumber than to SecondaryChannelNumberRange.

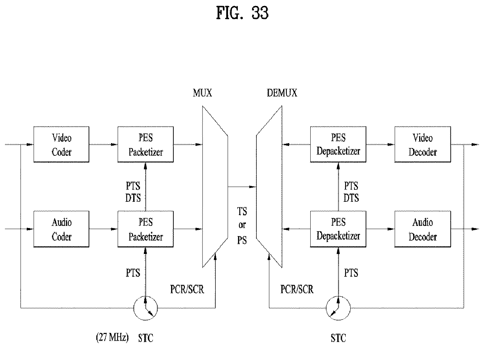

FIG. 33 shows an MPEG-2 system STC structure according to embodiments.
DVB-I Service Reference Time Synchronization and Leap Second
MPEG-2 system based live broadcast reference time synchronization

As shown in FIG. 28, in the MPEG-2 system, synchronization between transmission and reception may be established using a common clock value. Through encoding and packetizing of media data, the transmittable data and a program clock reference (PCR) as a reference clock value currently used in the live program are transmitted, and the receiving side performs time synchronization with the transmitting side based on the value of the PCR. In MPEG-2 system-based broadcast, the value is applied to implement the current time and AV decoding timing during live streaming, and time synchronization between transmission and reception without misalignment of the clock value may ensure smooth broadcasting. The method/device according to the embodiments may be coupled to the MPEG-2 system as shown in FIG. 28. The method/device according to the embodiments may correspond to hardware, software, and/or a processor.

FIG. 34 shows a DASH streaming structure according to embodiments.

The method/device according to the embodiments may be coupled to a DASH streaming architecture as shown in FIG. 29. The method/device according to the embodiments may correspond to hardware, software, and/or a processor. FIG. 23 is a diagram of an end-to-end architecture of MPEG DASH streaming. The service provider uploads the AV media data captured in real time to the origin server through encoding/packaging. Media data and manifest are converted into meaningful manifest guides from the original data of the origin server through MPD modification and advertisement insertion, and then ingested into the CDN. The DASH client may receive a low latency model and an existing DASH client mode separately according to a request and provide media streaming through the de-packetizing and decoding processes. MPEG DASH supports media sync between transmission and reception through @AvailabilityStartTime or @ProducerReferenceTime. However, according to the DVB-I player conceptual model, there is a parent-child relationship between the initial engine that initializes services and the DASH-client that processes media, and controlling the initial service engine by the child's clock may cause an issue.

### An issue of network timestamp synchronization between DVB-I clients

The method/device according to the embodiments may transmit/receive data based on a network as shown in FIG. 1.

As shown in FIG. 1, the service model of DVB-I is a wired and wireless model, which is a protocol based on the IP and the existing DVB-T/S/C/IPTV.

An integrated Internet channel service including both LAN/5G transmission is to be implemented. In addition, in order to provide a UI/UX similar to that of existing DVB broadcasting, DVB-I is being standardized, aiming at synchronized presentation of live broadcasting through low latency delivery technology synchronized between devices and fast channel switching. In addition, DVB-I takes mobile devices, web apps, media source extension (MSE), STB, and TV set (native) as target devices.

A device with a valid IP connection has its own clock value called NTP timestamp to set a reference time. The current time is synchronized with a specific time server on the Internet according to the OS platform of each device.

When time synchronization is established with the specific time server through the device's own API for each OS of each device, the operation differs between reference time servers, and thus time is not misaligned. Further, as shown in FIG. 30, the processing time differs between the server-side/receiver-side, and thus an issue arises in obtaining a common time. Because the clocks of the master/slave oscillators that bring the current time may be slightly different from each other, there may be an error between devices. As a result, errors may be accumulated when each device obtains time, causing misalignment in units of a few seconds or minutes.

Also, the time for NTP synchronization used in IP-connected devices may generally be shortened, but the synchronization may be allowed only after about 10 minutes, and the ping error has an accuracy in units of ms. However, considering the delivery time and reception time of a frame based on the current video compression standard, an error in units of ms may also become an issue in the media service. For example, scenes of goals scored by other persons in a soccer match may not be displayed on the device owned by a person, or a service in progress may suddenly become inactive. Therefore, in accordance with the philosophy of DVB-I, when the same UI/UX as that of the existing DVB live broadcasting is provided, synchronization between devices should be implemented.

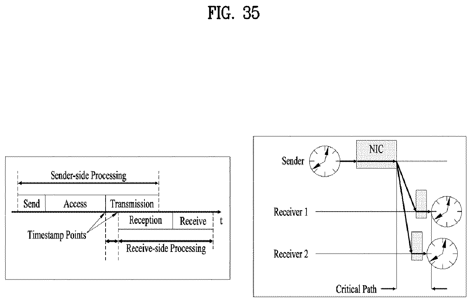

FIG. 35 illustrates reference clock synchronization according to embodiments.

FIG. 35 shows an example of a Reference Clock Sync operation of a reception device according to embodiments.

In order to provide the DVB-I live service smoothly, time synchronization between devices may be required. In the present disclosure, it is proposed that the time of a device receiving the DVB-I service on the network be unified with the time of one reference node, and that reception devices establish synchronization by correcting the devices' own times based on the transmitter time. As shown in FIG. 30, the receiver may correct the current time with the timestamp point information and apply the corrected time as the DVB-I service common time, and the device applying the common time may implemented a timeline on which synchronization may be established between the devices through the actual current time and continuous correction.

### Issues of absence of reference clock (time) of the DVB-I service timeline and non-application of leap second

According to the DVB-I conceptual model, the DVB-I service may scan services and channels of each DVB channel and IP channel, receive the DASH MPD manifest of the IP channel, and provide a service through live streaming. Each DVB-I client may be configured to determine whether the service is active/inactive according to the service availability of each service instance, and to execute additional applications for the current content through the linked application manager. Time synchronization between transmission and reception at the service level is intended to determine the active/inactive state according to the intention of the service provider and to operate the application engine by establishing synchronization based on the current broadcast content consumption time even when a linked application is delivered.

The current issue is that the DVB-I reference client brings the current time through the method of obtaining the internal time of the client without a reference time during live streaming. The timing acquisition method brings the network time of the DVB-I client, and causes misalignment with the time intended by the service provider.

That is, in order to provide an event related to <availability> in each DVB-I service scheme according to the intention of the producer, time synchronization should be established according to the reference time between transmission and reception, as shown in FIGS. 27 and 28. For example, when the valid time of the service instance actually provided in the <availability> is "2020-02-19T10:42:02.684Z", the DVB-I service supporting device should determine whether to proceed with the service based on this time. However, in the current DVB-I service scheme, the time to be referenced for the receiver to determine <availability> is unclear. When the time is retrieved from a specific time server designated through the network API in the receiver, the time may not compensate for the wrong time according to FIG. 30, and the uncompensated reference time in the receiver is not aligned with the DASH engine. As a result, the start and end times of a service do not match between the devices. Accordingly, service availability aligned with the media timeline of DASH should be provided by applying a common time at the service level.

The network time has been updated on December 31, 2016 by adding 1 second to match the error between the universal time coordinated (UTC) and the solar time. Based on the UTC, December 31, 2016, 23:59:59 is not followed by January 1, 2017, 00:00:00. Instead, December 31, 2016, 23:59:60 has been added. In live streaming, when the non-applied state of the time continues, time misalignment may occur by a few seconds, and an issue may arise in the service. The current DVB-I service scheme does not consider the leap second, and there may be difficulties in applying service availability. Therefore, the current wall clock may be corrected through compensation for the time and service availability may be signaled at the correct time.

The transmission/reception method/device (or DVB-I client) according to the embodiments may signal the DVB-I service based on DVB-I service scheme information.

### Reference clock (time) extension of the DVB-I service timeline

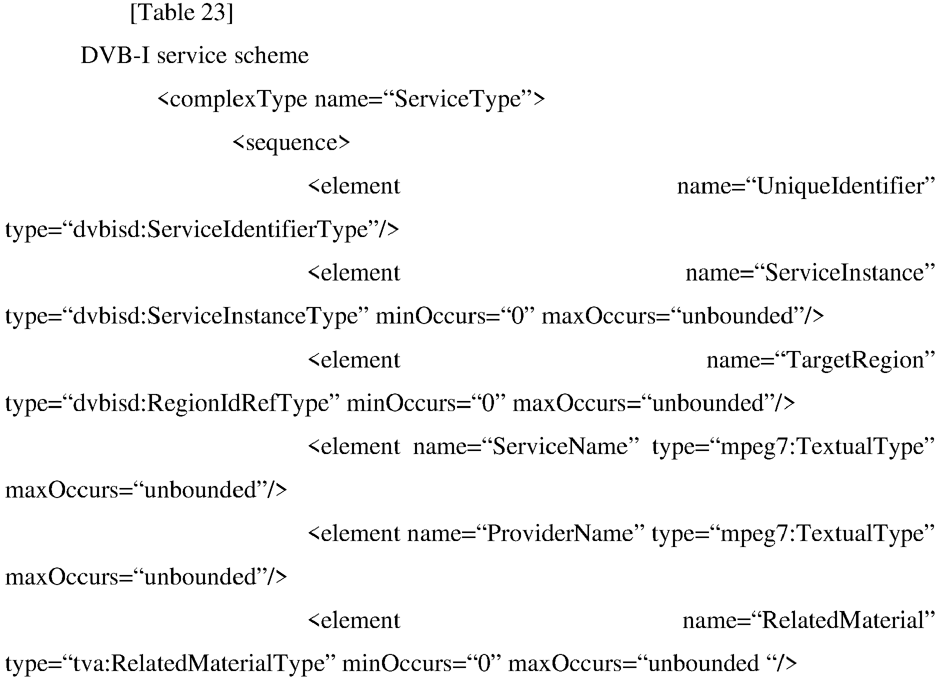

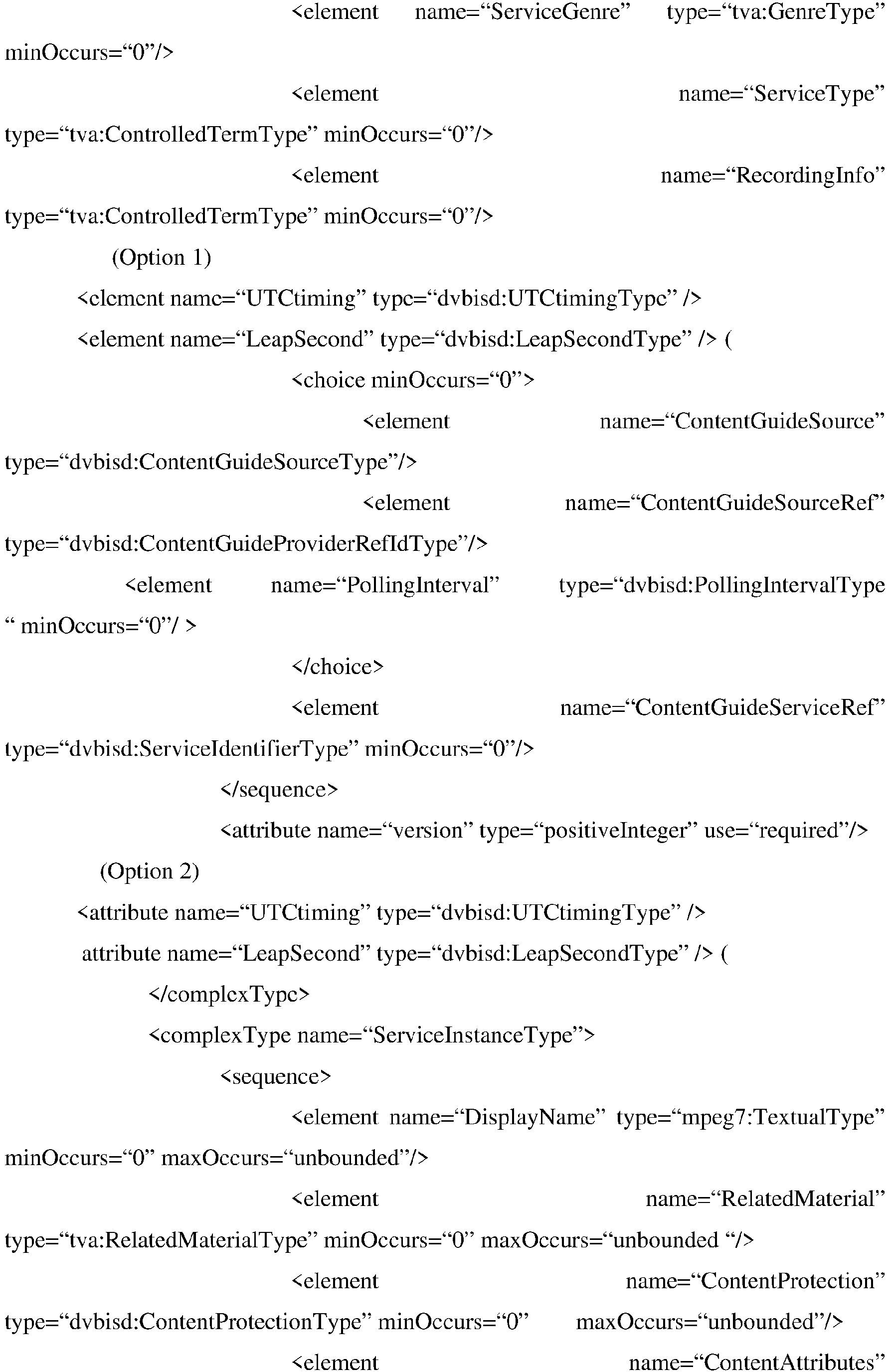

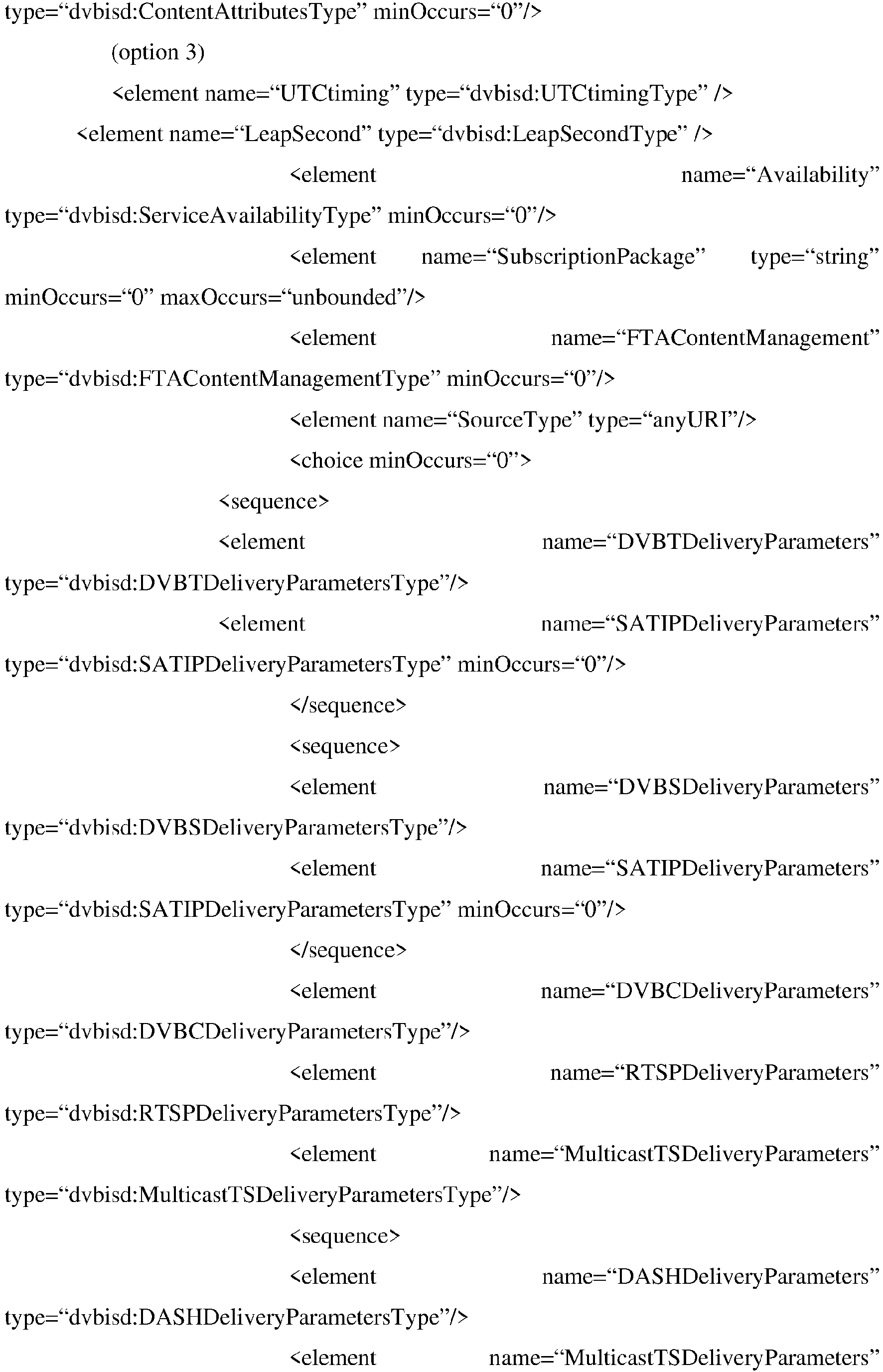

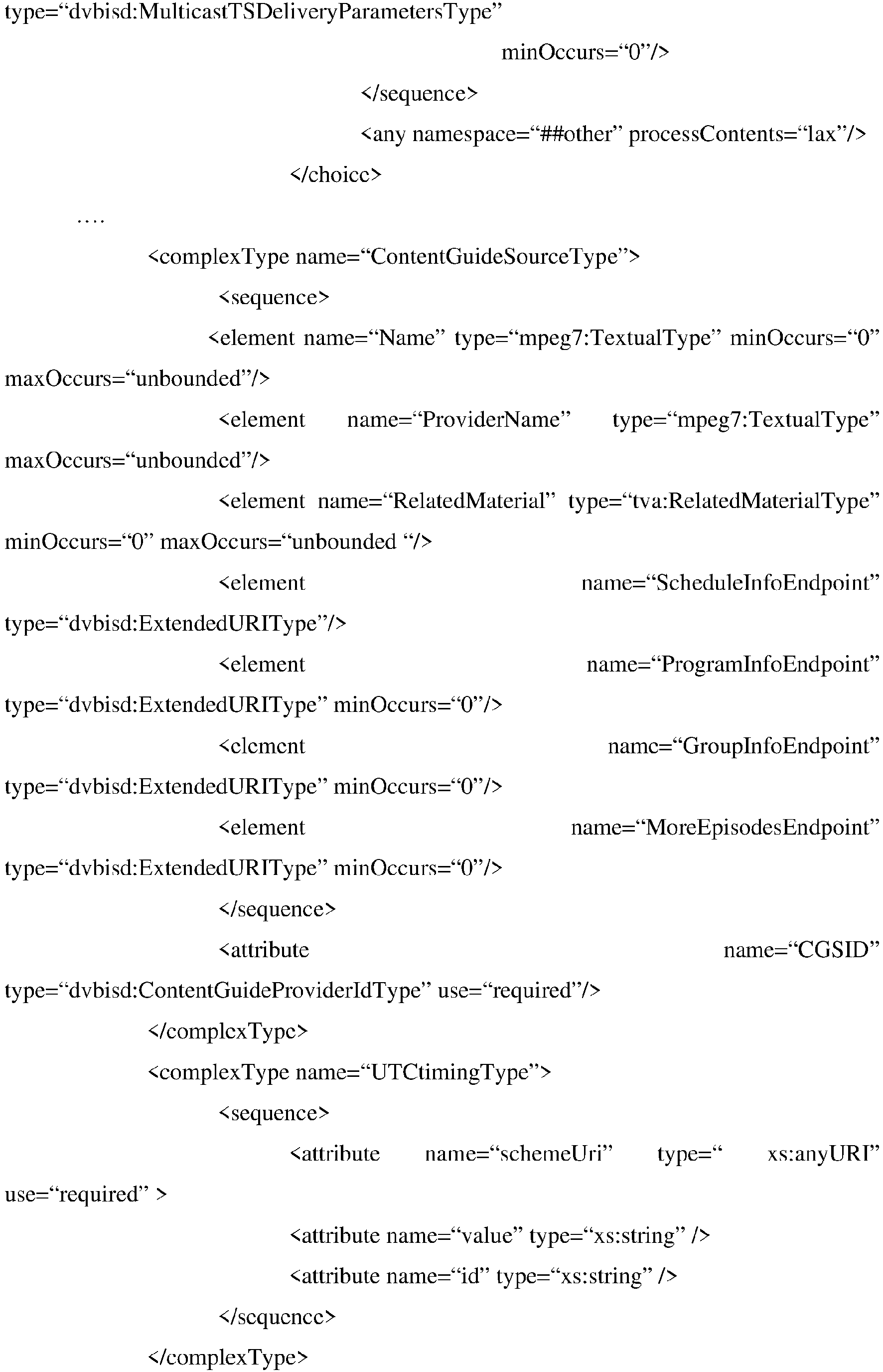

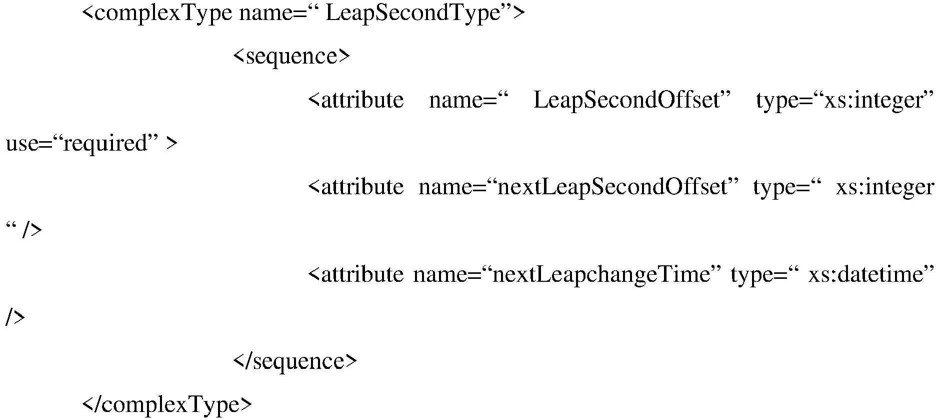

According to the synchronization requirements, in the DVB-I service scheme, the "UTCtimingType" may be extended in the form of option 1, 2, or 3. A use case that may be extended to dvbisd:anyURI may be defined as the following URIs: (1) urn:mpeg:dash:utc:ntp:2014 or urn:dvbi:utc:ntp:2014;
(2) urn:mpeg:dash:utc:http-head:2014 or urn:dvbi:utc:http-head:2014;
(3) urn:mpeg:dash:utc:http-xsdate:2014 or urn:dvbi:utc:http-xsdate:2014;
(4) urn:mpeg:dash:utc:http-iso:2014 or urn:dvbi:utc:http-iso:2014;
(5) urn:mpeg:dash:utc:http-ntp:2014 or urn:dvbi:utc:http-ntp:2014.
@value information according to the URN according to the embodiments is specified as follows.
urn:mpeg:dash:utc:ntp:2014: Provides an access address list of the NTP protocol delivery based server that may obtain a proper wall clock time based on IETF RFC 7230.
urn:mpeg:dash:utc:http-head:2014: A list of HTTP URLs for obtaining an appropriate wall clock time based on IETF RFC 7230.
urn:mpeg:dash:utc:http-xsdate:2014: a list of HTTP URLs for receiving a proper wall clock time based on IETF RFC 7230. The xs:dateTime format defined in W3C may be received.
urn:mpeg:dash:utc:http-iso:2014: A list of HTTP URLs for obtaining a proper wall clock time based on IETF RFC 7230. ISO time code defined in ISO/IEC 8601 may be received.
urn:mpeg:dash:utc:http-ntp:2014: A list of HTTP URLs for receiving a proper wall clock time based on IETF RFC 7230. An NTP timestamp format defined in IETF RFC 5905 is provided. 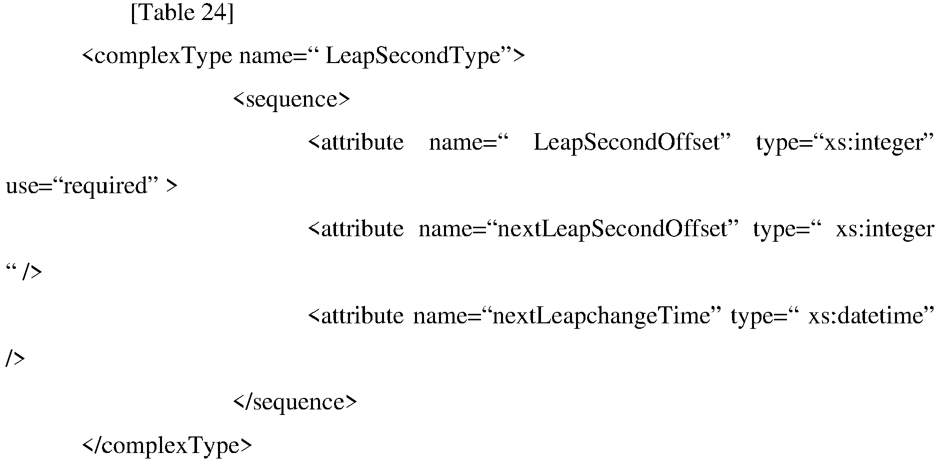
@LeapSecondOffset: indicates the leap second offset that should be applied now when the DVB-I service list is published. It shall be set to 0 if the list is published with a pre-applied scheme. @nextLeapSecondOffset: A leap second offset value to be applied to the returning leap second date time.
@nextLeapchangeTime: Defines the returning leap second date time.

### Embodiment:

<UTCTiming schemeIdUri="urn:mpeg:dash:utc:http-xsdate:2014" value="https://ABC.com/datetime"/>
Response according to https://ABC.com/datetime: "2020-03-10T21:20:00Z"
<Leapsecond LeapSecondOffset="0" nextLeapSecondOffset = "1" nextLeapchangeTime = "2021-01-01T00:00:00Z"/>

On January 1, 2021, 1 second may be added as a leap second to reflect the leap second.

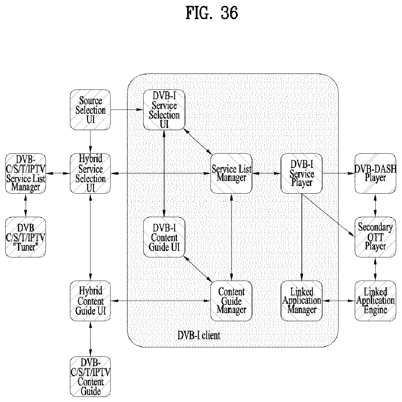

FIG. 36 illustrates a model of a DVB-I client according to embodiments.

A media data processing device according to embodiments may include a structure as shown in FIG. 36.

As the above-described embodiment is applied in the service list manager that processes the DVB-I service list, a common wall clock time may be obtained, and more accurate service availability may be provided through synchronization between DVB-I client devices.

The components of the media data processing device according to the embodiments of FIG. 36 are defined below. Each component may correspond to hardware, software, a processor, and/or a combination thereof.

### Source selection UI:

A device hosting a DVB-I client may generally include a sort of UI that allows the user to select one from one or more inputs, sources, or apps. The device may support one or more DVB-I clients (e.g. multiple apps).

A single DVB-I client may be represented as two or more inputs or sources on this UI (e.g., listing different brands and different services). Some inputs or sources may combine the DVB-I channel with DVB-C/S/T channels and/or IPTV channel. This may be the same UI that allows the user to select an input or source that is completely unrelated to DVB-I, like HDMI, DLNA, or a global content provider.

### DVB-I service selection UI:

The DVB-I client may include a UI through which a user may view and select/change a service list. Some DVB-I clients may not include this UI and may rely on a hybrid service selection UI.

### Hybrid service selection UI:

DVB-I services (including potential DVB-C/S/T services accessed via SAT>IP instead of a local tuner) may be included in a single common service selection UI having a DVB-C/S/T/IPTV channel.

### Service list manager:

It serves to search and query the service list server and process a returned service list (interfaces C1 and C2). It also serves to instruct the service player to play a DVB-I service selected.

DVB-C/S/T/IPTV service list manager: functions to invoke a service list from a DVB-C/S/T or IPTV device and provide a service selected in the list. Some examples of what may be included include RF channel scan, tuning through "homing mux," DVB-SI SDT acquisition, or acquisition of (exlusive) list of channels used by a specific IPTV technology. This may include DVB-C/S/T services available via SAT>IP.

### DVB-I content guide UI:

The DVB-I client may include a UI that allows a user to access information about contents of a service included in the service selection UI. Some DVB-I clients may not include this UI and may rely on the hybrid content guide UI.

Hybrid content guide UI controller: Information about content delivered in a DVB-I service may be included along with information about the content delivered on the DVB-C/S/T/IPTV channels (including potential DVB-C/S/T services accessed via SAT>IP instead of a local tuner) in a single common content guide UI.

### Content guide manager:

It serves to access the content guide server and process the returned content guide data (interfaces A1 and A2). There is no assumption that this caches the content guide data on a final device in the same manner that the content guide data is cached on the broadcast device. This function may be fully integrated into the DVB-I content guide UI (or hybrid content guide UI) without any separate components.

DVB-C/S/T/IPTV content guide manager: has A function of the DVB-C/S/T or IPTV device that obtains and caches content guide data for the DVB-C/S/T or IPTV channel.

Service player: Responsible for the entire life cycle of service reproduction provided in the broadband network. It appropriately controls the DVB-DASH player, secondary OTT player and associated application manager. In the case of a service in which media content is described as a playlist, it is responsible for processing the playlist.

DVB-DASH player: Serves to play the DVB-I service whose content is delivered by DVB DASH (interfaces D1, D2, E1, and E2).

### Secondary OTT player:

The DVB-I service list may include a reference to content provided by means other than DVB-DASH (and) available as OTT. The DVB-I player may interface with a player for non-DVB-DASH OTT content.

DVB-C/S/T/IPTV "Tuner": Responsible for playback when a DVB-C/S/T/IPTV service is selected. This may include DVB-C/S/T services accessed via SAT>IP instead of a local tuner.

### Linked application manager:

When a DVB-I service contains a linked application, this component is responsible for identifying whether the version of the application can be presented, and if so, performing the presentation by linking the application to an appropriate engine. Some DVB-I services may require the associated application to be started before the video and audio of the services are displayed.

Linked application engine: Serves to execute the application connected to the provided service. Examples include the HbbTV engine on TV sets or HTML5 web views on phones, tablets or PCs.

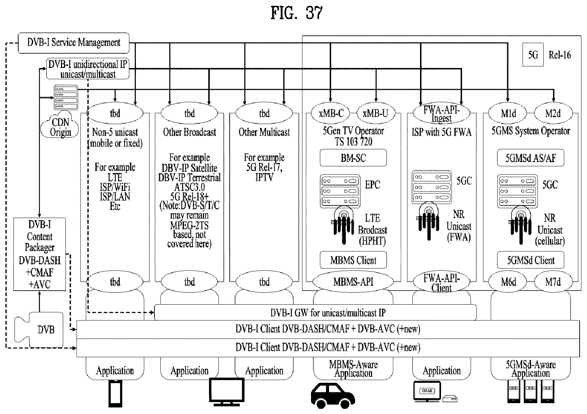

FIG. 37 shows a 5G-based DVB-I system according to embodiments.

### Communication network-based DVB-I (DVB-I over 5G)

The media data processing method according to the embodiments may include an integrated DVB-I solution enabling accessibility of multiple distributions even through the existing non-5G network as well as HPHT/Broadcast and LPLT/unicast.

### DVB-I over 5G Media Streaming Service Requirements

The DVB-I over 5G structure according to the embodiments should provide a smooth and continuous service in a delivery route supported by multiple distributions, and may provide a service through an efficient and flexible connection according to an optimal network environment. Specific requirements are described below.

5GBC, 5GMS, and non-5G networks (universal Internet supporting OTT such as LTE and Wi-Fi) should be included in the DVB-I service scheme in the form of a service instance.

For 5GBC, 5GMS, and OTT, which are extended service instances, parameters of each network should be included for identification of the network. For example, proper alignment between service instances should be provided, such that switching between service instances delivered over different networks, such as frequency, 5GBC transmission/service identifier, 5GMS transmission/service identifier, and DVB triplet, may be recognized as reasonably smooth.

When degradation in signal quality or network handover occurs during playout, the instance may be switched to another service instance. Also, such a switch should be reasonable, and a specific reference point should be provided regarding the degradation in signal quality.

Service priority may be allocated to service instances according to the intention of the service provider.

A related support use case is described below.

A user purchases a smartphone supporting the 5G network and installs a DVB-I app or executes a native app (including a fixed TV) of a specific manufacturer's middleware.

A terminal may support 5GBC, 5GMS, and OTT. When the bitrate is higher than or equal to the minimum supported bitrate, a service instance may be selected according to the network, or the terminal may automatically perform determination and perform reasonable switching.

When the DVB-I app is executed, the DVB-I client may provide and select an accessible service instance through UI/UX.

For example, a popular program with high traffic may connect to 5GBC.

During 5GBC service, when the terminal is moving outside or enters a shaded area, it may be connected to 5GMS.

5GBC may be selected first in the case of fixed TV, and OTT may be selected first in the case of portable devices. 5GMS may be selected as the next best. According to the reception environment and characteristics of the terminal, the priorities of the service instances may be switched rationally and flexibly.

When the bitrate decreases below a certain bitrate, and thus the service quality is degraded in the current service instance, the current service instance may be switched to another service instance according to a specific condition.

In the case of UHD support content, the service instance may be switched to a service instance with the best condition according to the bitrate of the effective network.

The access priority of 5G aware App may be designated according to the terminal manufacturer and service provider and specific business logic.

According to the above use case and requirements, the following issues arise in terms of implementation in the current DVB-I standard.

### [Potential issue]

There is no issue regarding service continuity and synchronization because media data is received only through Restful API in the designated location specified by the service app regardless of the existing network connection type.

In the case of DVB-I for 5G, the bootstrapping method and location of operators may depend on the type of the network.

The propagation delay delivered varies according to the network characteristics. Accordingly, in the case of a linear service, the reference time and media characteristics may also be provided in a different environment for each network.

Discovery URL and media location URL are all differ among operators, and there is an issue that it is difficult to completely switch between these media.

There are no clear criteria for determining that switching is needed or signal quality is degraded within the network.

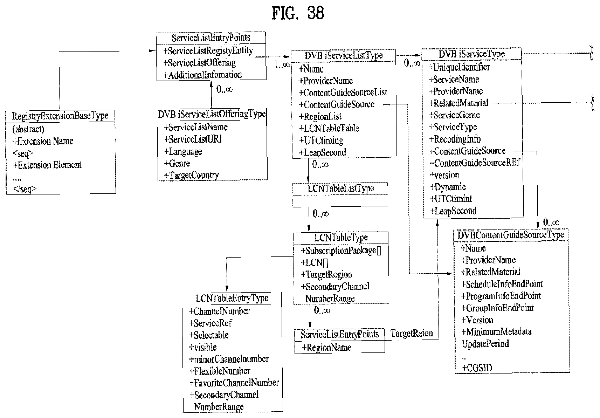

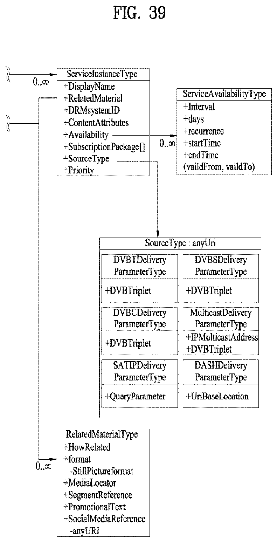

FIGS. 38 and 39 show a DVB-I service scheme extension according to embodiments.

### Embodiments and solutions for supporting DVB-I service instance switching

### [Time alignment]

In order to address the above issues, a common reference time may be obtained and the misaligned reference time may be aligned between service instances. Although there is a method of acquiring the reference time at the level of each service instance, there is also a method for time alignment between the service instances by acquiring the reference time at the service level of the upper layer defining the service instances. As shown in FIG. 33, by adding a method of acquiring UTC in DVBiServiceType or DVBiServiceListType, the DVB-I client may compensate for the reference clock value to align the time.

A specific syntax location and type value may be defined as follows. For specific semantics, refer to the above-mentioned common details.

The method/device (DVB client, terminal, etc.) according to the embodiments may transmit/receive media data based on the DVB-I service scheme extension of FIG. 33.

### [DASHDeliveryParameters]

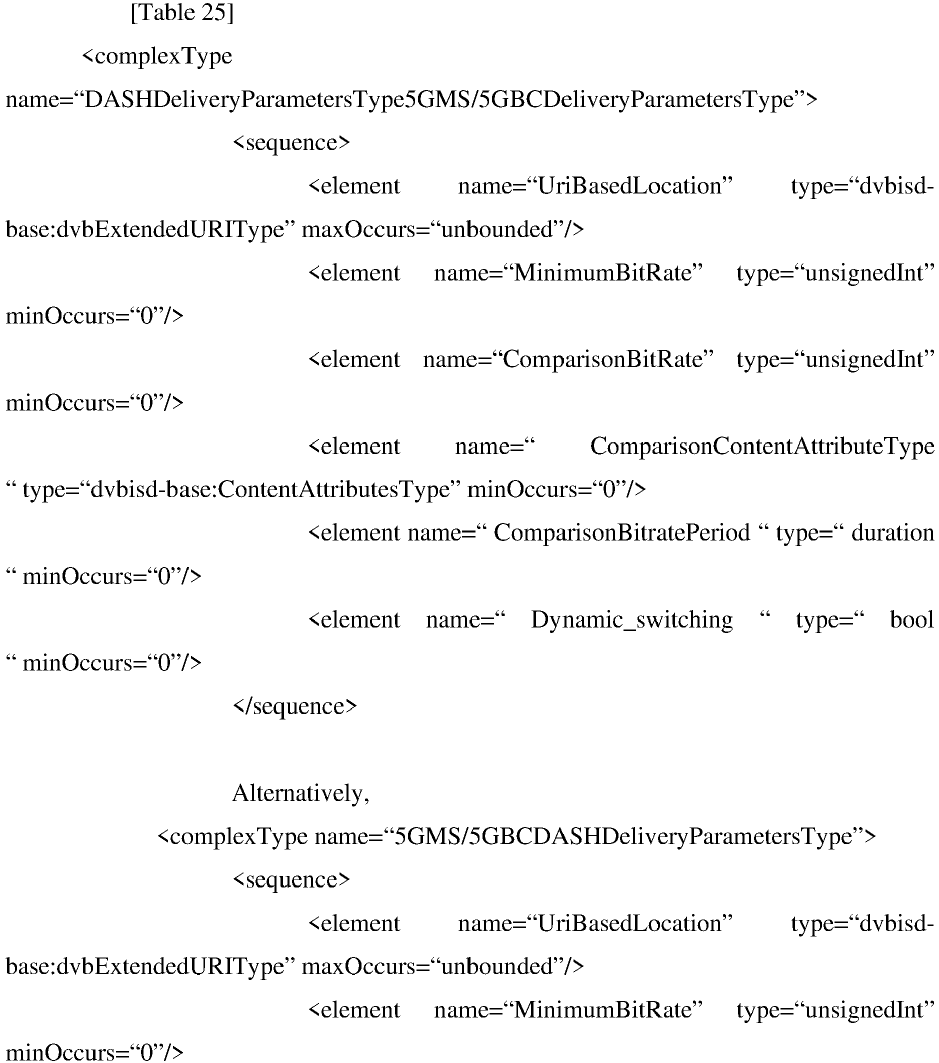

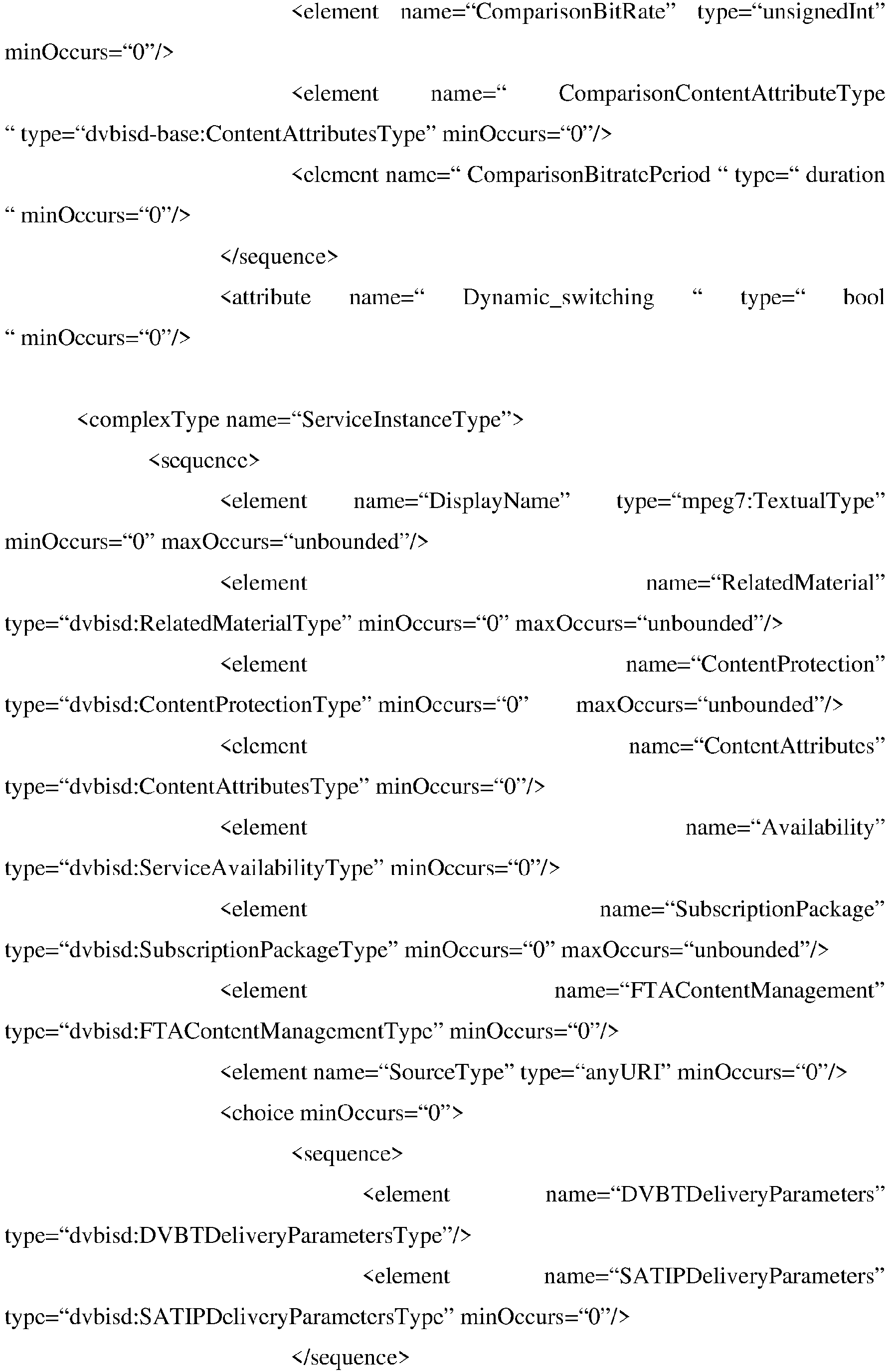

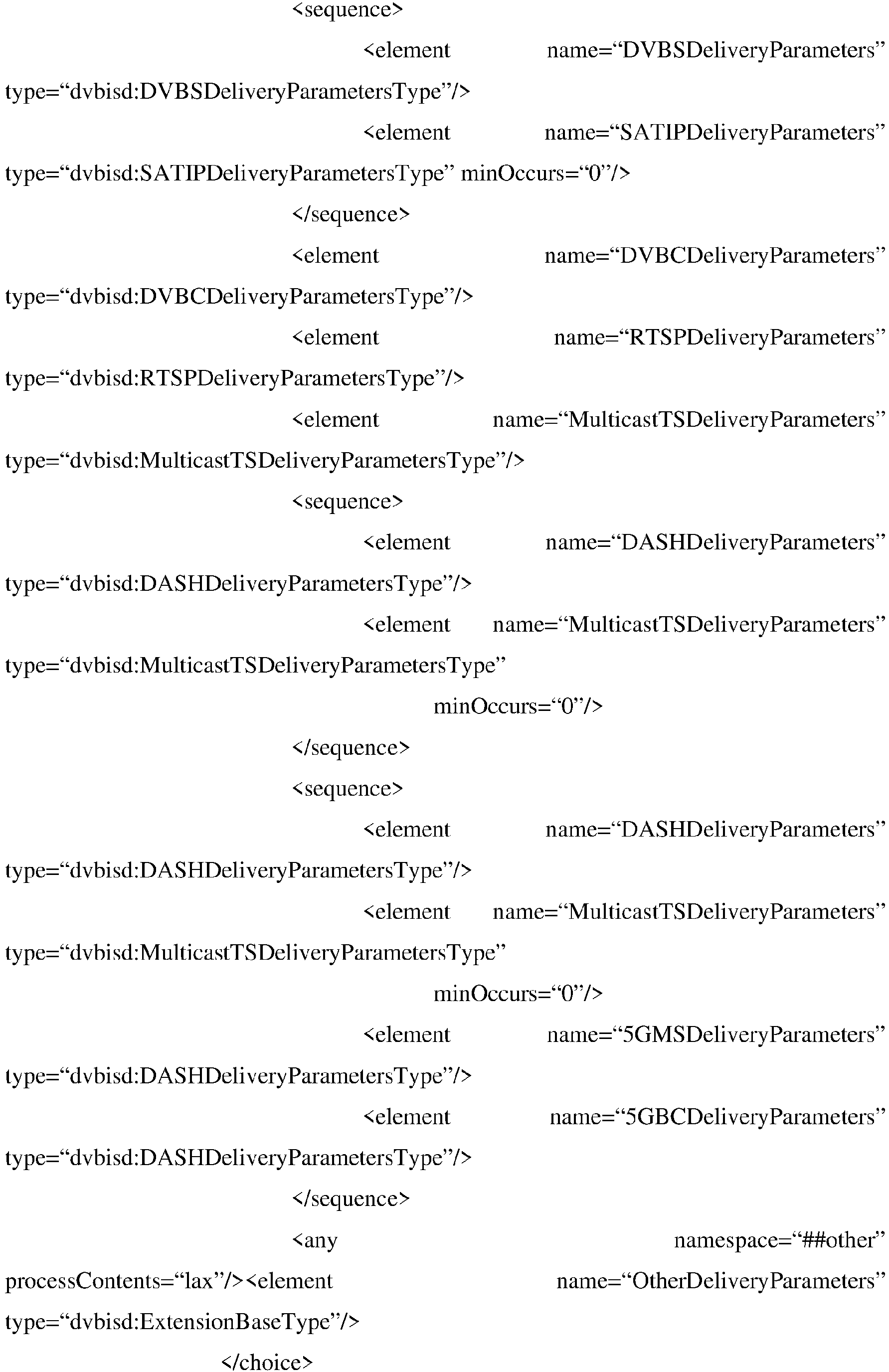

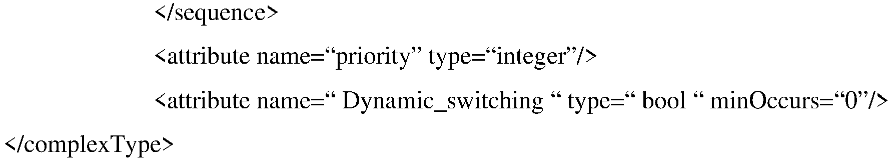

@ComparisonBitrate: A bitrate for handling a specific IP forwarding service instance that provides a better user experience than service instances available for this service. @ComparisonContentAttributeType: indicates the video and audio characteristics available for the DVB-I client to provide AV characteristic comparison and better user experience than service instances available for this service
@ComparisonBitratePeriod: A condition for checking whether the comparison between service instances is valid in order to provide better UX to users.
@ComparisonBitRate, @ComparisonContentAttributeType, @ComparisonBitratePeriod: The three elements/attributes may be used as reference values for each device and may be used according to each device's own conditions. However, backward compatibility should be supported for the condition for service instance switching of the DVB-I phase 1 receiver, and no user inconvenience should be caused.
@Dynamic_switching: A flag for enabling switching between service instances to provide a better UX to users.

The method/device according to the embodiments supports all networks such as T/S/C + Internet channel (DVB-I) + 5G, and efficient switching between networks may be performed. In addition, the DVB-I client may receive actual media data and DVB-I service scheme information over all networks according to the embodiments. Specifically, starting with a single service definition (unique ID), a single service may be defined as a local service and a service instance according to a delivery method. Referring to FIG. 33, in serviceType, multiple serviceinstanceType may be defined, and this service may be the same as one.

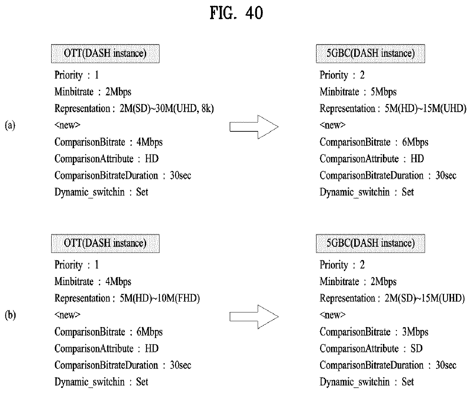

FIG. 40 shows an example of service instance switching according to embodiments.

Referring to FIG. 40-(a), connection may be switched from OTT to 5GBC based on certain conditions according to the use case describing that "f) 5GBC may be given the highest priority in the case of fixed TV, and OTT may be given the highest priority, and 5GMS may be selected as the next best; According to the reception environment and characteristics of the terminal, the priorities of the service instances may be switched rationally and flexibly," or that "d) For example, a popular program with high traffic may connect to 5GBC." If the average reception bitrate of OTT maintains low video quality for a specific duration, service instance switching should be considered. In this case, the switching use case of the service instance may be implemented by comparing the reception environments of the terminal. When the reception environments are compared, there should be a comparison value for deterioration in quality. Service instances are compared in terms of the bitrate and video attribute through @ComparisonBitRate and @ComparisonContentAttributeType according to the embodiments to determine whether the condition for service instance switching is satisfied. For example, when the currently reception bitrate exceeds @ComparisonBitratePeriod for a specific period of time in the range of MinimumBitrate to ComparisonBitRate, it may be determined that the condition for switching is satisfied.

In this regard, when dynamic switching of a corresponding instance is allowed in the DVB-I client connected according to the existing priority according to the DVB-I phase 1 standard, an issue related to the existing terminal may arise. For example, the video with the lowest bitrate may also be defined in MPD for seamless DASH representation, and therefore there is no scenario in which service instances are switched even if the reception bitrate is lowered. Therefore, before checking the conditions of @ComparisonBitRate, @ComparisonContentAttributeType, and @ComparisonBitratePeriod with priority as the highest priority, it should be first checked whether dynamic switching between service instances is allowed in order to support the backward compatibility of the DVB-I phase 1 receiver. Accordingly, @Dynamic_switching Bool type needs to be extended.

In Case 2 of FIG. 40-(b), in the use case describing that "h) In the case of UHD support content, the service instance may be switched to a service instance with the best condition according to the bitrate of the effective network," and the use case describing that "i) The access priority of 5G aware App may be designated according to the terminal manufacturer and service provider and specific business logic," the following conditions may be created.

In a use case that requires UHD playback support according to a user's selection of UHD content playout or specific business logic, the operation may be switched from 5GBC, which basically supports HD, to OTT. When the extended @ComparisonContentAttributeType is defined as follows, the UHD service may be provided by switching to a service instance of OTT capable of supporting UHD.

### [5GBC instances]

**[Table 26]**

| | | |
|---|---|---|
| | @ ComparisonContentAttributeType | |
| | | <dvbisd-base: Video Attributes > |
| | | <tva:Coding |
| href="urn:mpeg:mpeg7:cs: VideoCodingFormatCS:2001:2.2.2" > | | |
| | | <tva:Name> AVC Video Main Profile @ Main Level</tva:Name> FHD |
| enable | | |
| | | </tva:Coding> |
| | | /dvbisd-base:VideoAttributes > |
| | [OTT instance] | |
| | @ ComparisonContentAttributeType | |
| | | <dvbisd-base: Video Attributes > |
| | | <tva:Coding |
| href="urn:mpeg:mpeg7:cs: VideoCodingFormatCS:2001:2.2.2" > | | |
| | | <tva:Name>HEVC Video Main10 Profile @ Main Level</tva:Name> : |
| UHD enable | | |
| | | </tva:Coding> |
| | </dvbisd-base:VideoAttributes > | |

According to embodiments, when receiving low-quality media data for a specific duration in OTT, switching to a high-quality 5G network may be performed. For example, 5GBC is free-to-air and may be received without using data. According to the user's intention, reception may be enabled. In addition, when the range is out of 5GBC coverage, fallback to a network on which data is used may be automatically performed. This may not be what is intended by the user.

Network switching may not be limited to high/low quality, and may support various options. In other words, it is possible to process not only network switching according to the user's intention, but also network switching according to the environment change independent of the user's intention may be handled.

Furthermore, in switching between possible networks, such as 5GMS/5GBC/LTE/Wi-Fi/local home media router, the fallback may be performed using a method according to embodiments.

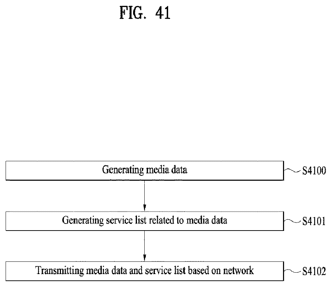

FIG. 41 illustrates a method of transmitting media data according to embodiments.

S3500: The method of transmitting media data according to the embodiments may include generating media data.

The generation of the media data the according to embodiments may be processed based on the structures in FIGS. 1 to 3, 25, 33, 37, etc.

S3501: The method of transmitting media data according to the embodiments may further include generating a service list related to the media data.

The service list information according to the embodiments may include information shown in FIGS. 4 to 7, 9 to 18, 21 to 25, 28, 29, 38, 39, etc.

S3502: The method of transmitting media data may further include transmitting the media data and the service list based on a network.

The transmission operation according to the embodiments may be processed based on the structures in FIGS. 1 to 3, 25, 33, 37, etc.

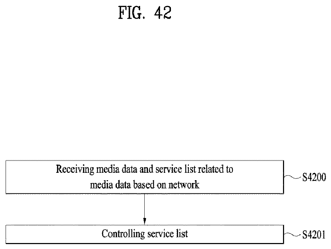

FIG. 42 illustrates a method of receiving media data according to embodiments.

S3600: The method of receiving media data according to the embodiments may include receiving media data and a service list related to the media data based on a network.

The reception operation according to the embodiments may be processed based on the structures in FIGS. 1 to 3, 25, 33, 37, etc.

S3601: The method of receiving media data according to the embodiments may further include controlling a service list.

The service list information according to the embodiments may include information shown in FIGS. 4 to 7, 9 to 18, 24, 25, 28, 29, 38, 39, etc.

The service list information according to the embodiments may support service list related operations in FIGS. 8, 12, 17, 19 to 20, 25, 27, 30 to 32, 40, etc.

A media data processing device according to embodiments may include a receiver configured to receive media data and a service list related to the media data based on a network, and a processor configured to control the service list.

The network according to the embodiments may include a communication network and an Internet network, and the media data may include an Internet-based service. A variety of networks may be supported. To this end, a service list according to embodiments may be generated and transmitted/received.

The service list according to the embodiments may include a service instance. The service instance may include delivery parameter information. The delivery parameter information may include comparison bitrate information related to the media data, comparison content attribute type information related to the media data; comparison bitrate period information related to the service instances, and switching information related to the service instances.

The comparison bitrate period information may indicate a valid time for comparison between the service instances included in the service list. The valid time may be determined based on minimum bitrate information and the comparison bitrate period information included in the delivery parameter information.

The switching information may be a flag related to whether dynamic switching between the service instances included in the service list is valid.

While receiving a service instance related to media data for a first network, the processor according to the embodiments may switch the service instance to a service instance for a second network based on a bitrate of the media data, the comparison bitrate information, the comparison content attribute type information, the comparison bitrate period information, and the switching information. Here, first and second are terms for distinction and are not construed as limiting.

In DVB-I over 5G, the service may be ensured to be smooth and continuous between delivery routes supported by multiple distributions, and be provided through efficient and flexible access according to the optimal network environment.

In the case of DVB-I for 5G, the bootstrapping process may differ among the types of networks, and the bootstrapping method and location may differ among the infrastructures of the operators. According to the present disclosure, this issue may be addressed.

The propagation delay delivered varies according to the network characteristics. Accordingly, in the case of a linear service, an environment where the reference time and media characteristics vary among networks may be provided.

Even when the discovery URL and media location URL differ among operators, switching may be performed completely in the middle of the media. A clear reference point for determining the need of switching within the network and a clear criterion for determining the degradation of signal quality may be provided.

The embodiments have been described in terms of a method and/or a device. The description of the method and the description of the device may complement each other.

Although embodiments have been described with reference to each of the accompanying drawings for simplicity, it is possible to design new embodiments by merging the embodiments illustrated in the accompanying drawings. If a recording medium readable by a computer, in which programs for executing the embodiments mentioned in the foregoing description are recorded, is designed by those skilled in the art, it may also fall within the scope of the appended claims and their equivalents. The devices and methods may not be limited by the configurations and methods of the embodiments described above. The embodiments described above may be configured by being selectively combined with one another entirely or in part to enable various modifications. Although preferred embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. In addition, the memory according to the embodiments may be used as a concept covering not only volatile memories (e.g., RAM) but also nonvolatile memories, flash memories, and PROMs. In addition, it may also be implemented in the form of a carrier wave, such as transmission over the Internet. In addition, the processor-readable recording medium may be distributed to computer systems connected over a network such that the processor-readable code may be stored and executed in a distributed fashion.

In this document, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A, B, C" may also mean "at least one of A, B, and/or C." Further, in the document, the term "or" should be interpreted as "and/or." For instance, the expression "A or B" may mean 1) only A, 2) only B, and/or 3) both A and B. In other words, the term "or" in this document should be interpreted as "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signal unless context clearly dictates otherwise.

The terminology used to describe the embodiments is used for the purpose of describing particular embodiments only and is not intended to be limiting of the embodiments. As used in the description of the embodiments and in the claims, the singular forms "a", "an", and "the" include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if' and "when" are not limited to an optional case and are intended to be interpreted, when a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or combinations thereof. The firmware, software, and/or combinations thereof may be stored in the processor or the memory.

The operations according to the above-described embodiments may be performed by the transmission device and/or the reception device according to the embodiments. The transmission/reception device may include a transmitter/receiver configured to transmit and receive media data, a memory configured to store instructions (program code, algorithms, flowcharts and/or data) for the processes according to the embodiments, and a processor configured to control the operations of the transmission/reception device.

The processor may be referred to as a controller or the like, and may correspond to, for example, hardware, software, and/or a combination thereof. The operations according to the above-described embodiments may be performed by the processor. In addition, the processor may be implemented as an encoder/decoder for the operations of the above-described embodiments.

### [Mode for Disclosure]

Various embodiments have been described in the best mode for carrying out the invention.

### [Industrial Applicability]

It will be apparent to those skilled in the art that various changes or modifications can be made to the embodiments within the scope of the embodiments. Thus, it is intended that the embodiments cover the modifications and variations of this disclosure provided they come within the scope of the appended claims and their equivalents.

## Claims

1. A media data processing device comprising:
a receiver configured to receive media data and a service list related to the media data based on a network; and
a processor configured to control the service list.

2. The media data processing device of claim 1, wherein the network comprises a communication network and an Internet network,
wherein the media data contains an Internet-based service.

3. The media data processing device of claim 2, wherein the service list includes service instances, each of the service instances including delivery parameter information,
wherein the delivery parameter information comprises:
comparison bitrate information related to the media data;
comparison content attribute type information related to the media data;
comparison bitrate period information related to the service instances; and
switching information related to the service instances.

4. The media data processing device of claim 3, wherein the comparison bitrate period information indicates a valid time for comparison between the service instances included in the service list,
wherein the valid time is determined based on minimum bitrate information and the comparison bitrate period information included in the delivery parameter information.

5. The media data processing device of claim 3, wherein the switching information is a flag related to whether dynamic switching between the service instances included in the service list is valid.

6. The media data processing device of claim 3, wherein, while receiving a service instance related to media data for a first network, the processor switches the service instance to a service instance for a second network based on a bitrate of the media data, the comparison bitrate information, the comparison content attribute type information, the comparison bitrate period information, and the switching information.

7. A method of processing media data, the method comprising:
receiving media data and a service list related to the media data based on a network; and
controlling the service list.

8. The method of claim 7, wherein the network comprises a communication network and an Internet network,
wherein the media data contains an Internet-based service.

9. The method of claim 8, wherein the service list includes service instances, each of the service instances including delivery parameter information,
wherein the delivery parameter information comprises:
comparison bitrate information related to the media data;
comparison content attribute type information related to the media data;
comparison bitrate period information related to the service instances; and
switching information related to the service instances.

10. The method of claim 9, wherein the comparison bitrate period information indicates a valid time for comparison between the service instances included in the service list,
wherein the valid time is determined based on minimum bitrate information and the comparison bitrate period information included in the delivery parameter information.

11. The method of claim 9, wherein the switching information is a flag related to whether dynamic switching between the service instances included in the service list is valid.

12. The method of claim 9, wherein the controlling of the service list comprises:
while receiving a service instance related to media data for a first network, switching the service instance to a service instance for a second network based on a bitrate of the media data, the comparison bitrate information, the comparison content attribute type information, the comparison bitrate period information, and the switching information.
